(19) Europäisches Patentamt
European Patent Office
Office européen des brevets

(11) **EP 2 816 082 B1**

(12) **EUROPÄISCHE PATENTSCHRIFT**

(45) Veröffentlichungstag und Bekanntmachung des Hinweises auf die Patenterteilung:
**19.09.2018 Patentblatt 2018/38**

(51) Int Cl.:
***C08K 9/02*** (2006.01)

(21) Anmeldenummer: **13172868.5**

(22) Anmeldetag: **19.06.2013**

(54) **Durch thermoplastische Verarbeitung von Polymer-Bornitrid-Compounds hergestellte Bauteile, Polymer-Bornitrid-Compounds zur Herstellung solcher Bauteile sowie deren Verwendung**

Components produced by means of the thermoplastic processing of polymer boron nitride compounds, polymer boron nitride compounds for producing such components and use of same

Eléments fabriqués par traitement thermoplastique de composés polymère - nitrure de bore, composés polymère - nitrure de bore pour la fabrication de tels éléments et leur utilisation

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**24.12.2014 Patentblatt 2014/52**

(73) Patentinhaber: **3M Innovative Properties Company**
**St. Paul, MN 55133-3427 (US)**

(72) Erfinder:
• **Uibel, Krishna, Dr.**
**87437 Waltenhofen (DE)**
• **Kayser, Armin**
**87474 Buchenberg (DE)**
• **Zimmermann, Johanna**
**23552 Lübeck (DE)**

(74) Vertreter: **Ter Meer Steinmeister & Partner Patentanwälte mbB**
**Nymphenburger Straße 4**
**80335 München (DE)**

(56) Entgegenhaltungen:
DE-A1-102010 050 900    DE-A1-102011 114 413
US-A1- 2006 127 422

**Beschreibung**

Die vorliegende Erfindung betrifft ein durch thermoplastische Verarbeitung eines Polymer-Compounds unter Verwendung von stabilen Bornitrid-Agglomeraten hergestelltes Bauteil mit hoher Through-plane-Wärmeleitfähigkeit, ein Polymer-Bornitrid-Compound zur Herstellung solcher Bauteile sowie die Verwendung solcher Bauteile zur Wärmeabfuhr.

Thermoplastisch verarbeitbare Kunststoffe werden in vielfältigen Anwendungen eingesetzt. Dabei werden oft die Eigenschaften des Basispolymers durch Compoundierung mit zusätzlichen Komponenten modifiziert und dadurch an die jeweilige Anwendung angepasst.

Als zusätzliche Komponenten für die Compoundierung mit der Polymermatrix können beispielsweise organische, mineralische, keramische, glasige und metallische Füllstoffe eingesetzt werden. Die zusätzlichen Komponenten können beispielsweise eingesetzt werden zur Modifizierung der mechanischen oder elektrischen Eigenschaften, des Wärmeausdehnungskoeffizienten oder der Dichte oder zur Erhöhung der Wärmeleitfähigkeit.

Bei der Compoundierung entsteht ein Mischwerkstoff aus Polymeren und den zusätzlichen Komponenten, der typischerweise als Granulat anfällt und in Formgebungsprozessen weiterverarbeitet wird. Die Formgebung zu Bauteilen erfolgt bevorzugt im Spritzguss.

Zur Herstellung von wärmeleitfähigen Mischwerkstoffen auf Polymerbasis werden wärmeleitfähige Füllstoffe in die meist nur wenig wärmeleitfähige thermoplastische Matrix eingebracht. Hexagonales Bornitrid ist ein hoch wärmeleitfähiger Füllstoff mit plättchenförmiger Partikelmorphologie, der zur Herstellung von wärmeleitfähigen Polymer-Bornitrid-Mischwerkstoffen (Polymer-Bornitrid-Compounds) eingesetzt werden kann.

Bei der Compoundierung von thermoplastisch verarbeitbaren Polymeren mit Füllstoffen werden in der Regel Extruder verwendet. Es kommen beispielsweise Doppelschneckenextruder zum Einsatz, wobei die Schnecken neben der Materialförderung weitere Aufgaben übernehmen. Es können abhängig von der jeweiligen Anwendung in verschiedenen Zonen im Extruder Förderelemente, Mischelemente, Scherelemente, wie beispielsweise Knetblöcke, und Rückstauelemente in unterschiedlichen Ausführungsformen eingesetzt werden. Mischelemente und Scherelemente sorgen für eine gute Durchmischung und Homogenisierung von Polymerschmelze und Füllstoff.

Füllstoffe können mit dem Polymer über den Haupttrichter oder auch über Seitendosierungen zugeführt werden. Die Zugabe des Füllstoffs über Seitendosierer ist dann besonders wichtig, wenn der Füllstoff scherempfindlich ist. Das Polymergranulat wird über die Hauptdosierung in die Einzugszone des Extruders dosiert und im weiteren Verlauf unter hohem Druck und starker Scherung aufgeschmolzen. Der scherempfindliche Füllstoff wird über eine Seitendosierung dem bereits aufgeschmolzenen Polymer zugeführt.

Weniger scherempfindliche Füllstoffe können über weitere Seitendosierungen bereits zu einem früheren Zeitpunkt in weiteren Seitendosierungen oder in der Hauptdosierung zusammen mit dem Polymer zugeführt werden. Wenig scherempfindliche Füllstoffe, oder Füllstoffe, die sehr gut homogenisiert werden müssen, wie beispielsweise Pigmente, verbleiben länger im Extruder und durchlaufen von der Position ihrer Zudosierung an alle noch folgenden Homogenisier- und Scherbereiche im Extruder.

Bei scherempfindlichen Füllstoffen kann abhängig von den gewählten Compoundierparametern, wie beispielsweise der Schneckendrehzahl und der Temperatur, eine Degradation bzw. eine teilweise Degradation des Füllstoffs stattfinden.

Das Compound tritt am Ende des Extruders als Polymerschmelze durch Düsen in Form von Strängen aus dem Extruder aus. Nach dem Abkühlen und Erstarren des Strangs wird über einen Granulator ein Compoundgranulat erzeugt, was für die weitere Verarbeitung in Formgebungsprozessen vorgesehen ist.

Ein möglicher Formgebungsprozess für ungefülltes Polymergranulat und auch für Compoundgranulat aus Polymeren und Füllstoffen ist der Spritzguss. Das Polymergranulat oder das Compoundgranulat wird in der Spritzgussmaschine erneut aufgeschmolzen und unter hohem Druck in eine Form gefüllt. Dort erstarrt die Polymer- bzw. Compoundschmelze und das spritzgegossene Bauteil kann ausgeworfen werden.

Beim Spritzguss besteht eine große Designfreiheit in der Formgebung, wobei komplexe Bauteile spritzgegossen werden können, die zahlreiche Funktionen übernehmen können. Die Polymere werden durch den Einsatz von Füllstoffen den jeweiligen Aufgaben und Funktionen, die sie erfüllen sollen, angepasst.

Es hat sich gezeigt, dass bei der Herstellung von wärmeleitfähigen Polymer-Bornitrid-Compounds und deren Verarbeitung zu Bauteilen viele Einflussfaktoren eine einen entscheidende Auswirkung auf das Ergebnis der Wärmeleitfähigkeit haben. Zu diesen Einflussfaktoren gehören die Compoundierung, die Formgebung, die Probengeometrie, die Probennahme und die angewendete Messmethode.

Bei der Compoundierung können beispielsweise Ko-Kneter-Anlagen (Buss Kneter), Einschneckenextruder und Doppelschneckenextruder eingesetzt werden. Dabei kann über die Anlagenauslegung und/oder über die Prozessparameter eine schroffe oder schonende Compoundierung eingestellt werden. Zur Einstellung einer schrofferen Compoundierung können sowohl Dispergier- und Scherelemente wie beispielsweise Knetblöcke eingesetzt werden, zur Einstellung einer schonenderen Compoundierung kann beispielsweise auf Knetblöcke ganz verzichtet werden. Eine höhere Schneckendrehzahl führt zu einer vergleichsweise stärkeren Scherung des Compounds und des Füllstoffs im Compound, während eine niedrigere Schneckendrehzahl zu einer vergleichsweise schwächeren Scherung des Compounds und des Füllstoffs im Compound führt.

Bei der Compoundierung von Polymeren mit Bornitrid-Pulvern, beispielsweise mit sprühgetrocknetem Bornitrid-Pulver, zu Polymer-Bornitrid-Compounds hat sich gezeigt, dass bei Zusatz von 30 Vol.-% Bornitrid zu Polyamid (PA 6) eine schroffe Compoundierung mit starker Durchmischung und Scherung und guter Dispergierung des Füllstoffs zu vergleichsweise guten mechanischen Eigenschaften des Compounds führt, während die Wärmeleitfähigkeit vergleichsweise geringer ist. Umgekehrt führt eine schonende Compoundierung mit geringerer Scherung und schlechterer Dispergierung zu Compounds mit vergleichsweise besserer Wärmeleitfähigkeit und schlechteren mechanischen Eigenschaften.

Auch die anschließende Formgebung hat einen Einfluss auf das Ergebnis der Wärmeleitfähigkeit. Werden aus dem mit schroffer Compoundierung hergestellten Polymer-Bornitrid-Compound Proben über Warmpressen hergestellt, so liegt die Through-plane-Wärmeleitfähigkeit um 40 % höher als bei aus demselben Polymer-Bornitrid-Compound über Spritzguß hergestellten Zugprüfstäben. Die Werte für die Through-plane-Wärmeleitfähigkeit der warmgepressten Proben liegen um bis zu 100 % höher als bei Messungen an 2 mm dünnen spritzgegossenen Platten. Werden aus dem mit schonender Compoundierung hergestellten Polymer-Bornitrid-Compound dünne Platten einer Stärke von 2 mm über Spritzguß hergestellt, so liegt die Through-plane-Wärmeleitfähigkeit um bis zu 15 % höher als bei den spritzgegossenen 2 mm-Platten aus dem Compound mit der schroffen Compoundierung.

Weiterhin hat auch die Probengeometrie einen Einfluss auf das Ergebnis der Wärmeleitfähigkeit. Die am spritzgegossenen Zugstab einer Dicke von 4 mm gemessene Through-plane-Wärmeleitfähigkeit liegt um bis zu 50 % höher als die an der spritzgegossenen 2 mm dicken Platte gemessene Through-plane-Wärmeleitfähigkeit.

Beim Spritzgießen hat weiterhin die Art der Probennahme einen Einfluss auf das Ergebnis der Wärmeleitfähigkeit. So hat sich beispielsweise gezeigt, das bei schroffer Compoundierung und Spritzguß von 2 mm dünnen Platten die Wärmeleitfähigkeit angussnah, in Probenmitte und angussfern stark unterschiedlich sein kann. So kann die Wärmeleitfähigkeit bei hochgefüllten Compounds je nach Position der Probennahme um bis zu 20 % voneinander abweichen. Bei schroffer Compoundierung und Spritzguß von Zugprüfstäben kann die Wärmeleitfähigkeit einer angussnahen, direkt nach der ersten Probenschulter genommenen Probe um bis zu 10 % von einer angussfern, vor der zweiten Probenschulter genommenen Probe abweichen.

Schließlich hat auch die Messmethode einen Einfluss auf das Ergebnis der Through-plane-Wärmeleitfähigkeit. Wird die Through-plane-Wärmeleitfähigkeit mit der Hotdiskmethode an 4 mm dicken spritzgegossenen Platten gemessen, so ist das Messergebnis bei isotropen Füllstoffen um ca. 15-20 % höher als bei Messung mit der Laser-Flash-Methode an 2 mm dünnen spritzgegossenen Platten, während bei plättchenförmigen Füllstoffen mit der Hotdiskmethode eine mehr als 50 % höhere Wärmeleitfähigkeit gemessen wird.

Aus diesen Gründen können Ergebnisse aus Wärmeleitfähigkeitsmessungen nur miteinander verglichen werden, wenn die Herstellung des Compounds, die Formgebung des Compoundgranulats, die Probennahme und die Wärmeleitfähigkeitsmessung unter identischen Bedingungen erfolgen.

Hexagonale Bornitrid-Pulverpartikel, die als Primärpartikel und nicht als Agglomerate von Primärpartikeln vorliegen, sind in ihrer Wärmeleitfähigkeit anisotrop. Gut kristallines Bornitrid-Pulver hat eine plättchenförmige Partikelmorphologie. Die Bornitrid-Plättchen weisen typischerweise ein Aspekt-Verhältnis, d.h. ein Verhältnis Plättchendurchmesser zu Plättchendicke, von > 10 auf. Die Wärmeleitfähigkeit durch das Plättchen ist im Verhältnis zur Wärmeleitfähigkeit in Plättchenebene gering.

Werden Compounds aus einem thermoplastischen Polymer und Bornitrid-Pulver in Form von plättchenförmigen Bornitrid-Primärpartikeln hergestellt, liegen Bornitrid-Primärpartikel vorwiegend fein dispergiert vor. Wird ein solcher Compound spritzgegossen, richten sich insbesondere bei dünnwandigen Bauteilen plättchenförmige Bornitrid-Primärpartikel zu einem Großteil planparallel zur Oberfläche des Spritzgusswerkzeugs und planparallel zur Bauteiloberfläche aus. Die Ausrichtung der plättchenförmigen Bornitrid-Primärpartikel erfolgt aufgrund eines Schergefälles im Spritzgussbauteil zwischen werkzeugwandnahen und werkzeugwandferneren Bereichen. Die Ausrichtung der plättchenförmigen Bornitrid-Primärpartikel im spritzgegossenen Bauteil führt zu einer Anisotropie der Eigenschaften, insbesondere der Wärmeleitfähigkeit. Dabei liegt die Wärmeleitfähigkeit bei dünnwandigen Bauteilen einer Wandstärke von $\leq$ 3 bzw. $\leq$ 2 mm in Fließrichtung des Polymer-Compounds (in-plane) in der Regel bei mehr als dem vierfachen und bis zum siebenfachen und mehr der Wärmeleitfähigkeit durch die Bauteilwand (through-plane), bei Füllgraden von $\geq$ 30 Vol.-%. Die Anisotropie in der Wärmeleitfähigkeit von thermoplastischen spritzgegossenen Bauteilen ist bei vielen Anwendungen von Nachteil. So ist beispielsweise die Abfuhr von Wärme durch eine Gehäusewand bei geringer Through-plane-Wärmeleitfähigkeit ebenfalls gering. In Anwendungen, in denen spritzgegossene Gehäuse eingesetzt werden, ist diese Eigenschaft von Nachteil, da zwar eine schnelle Verteilung der Wärme in der Gehäusewand gelingt, aber nicht die Abfuhr der Wärme durch die Gehäusewand. Eine möglichst hohe Through-plane-Wärmeleitfähigkeit ist für diese Anwendungen wünschenswert, insbesondere, wenn die Wärme flächig abgeführt werden soll.

Bei Füllgraden unter 50 Vol.-% Bornitrid-Pulver im Compound wird in der Regel ein Wert von 1 W/m*K für die Through-plane-Wärmeleitfähigkeit bei spritzgegossenen dünnwandigen Bauteilen mit Wandstärken von 2 mm und darunter nicht überschritten.

Bornitrid kann auch in Form von Agglomeraten von plättchenförmigen Primärpartikeln als wärmeleitender Füllstoff in Polymeren eingesetzt werden. Verschiedene Verfahren zur Herstellung von Bornitrid-Agglomeraten, beispielsweise mittels Sprühtrocknen, isostatischem Pressen oder Pressen und anschließendem Sintern sind beschreiben in der US 2006/0 127 422 A1, WO 03/013 845 A1, US 6,048,511, EP 0 939 066 A1, US 2002/0 006 373 A1, US 2004/0 208 812 A1, WO 2005/021 428 A1, US 5,854,155 und US 6,096,671.

Bei Verwendung derartiger Bornitrid-Agglomerate findet während der Compoundierung im Doppelschneckenextruder und/oder während des Spritzgusses eine starke Degradation der Bornitrid-Agglomerate statt, d.h. zu einem Aufbrechen des überwiegenden Teils der Agglomerate in die Bornitrid-Primärpartikel oder in Agglomeratfragmente, wodurch es abhängig von den Prozessbedingungen zu starken Schwankungen und insbesondere zu einer Absenkung in der z-Wärmeleitfähigkeit spritzgegossener Platten kommen kann. Auf diese Problematik wurde in "Boron Nitride in Thermoplastics: Effect of loading, particle morphology and processing conditions" (Chandrashekar Raman, Proceedings of the NATAS Annual Conference on Thermal Analysis and Applications (2008), 36th 60/1-60/10) hingewiesen.

In dieser Untersuchung wurden plättchenförmige und agglomerierte Bornitrid-Pulver mit einem thermoplastischen Polymer (Dow 17450 HDPE) compoundiert. Die Compoundierung wurde in einem Doppelschneckenextruder (Werner & Pfeiderer ZSK-30, L/D Verhältnis 28,5, 2 mm Düse) bei einer Temperatur von 190 °C mit einer Schneckendrehzahl von 100 U/min durchgeführt.

Bei Einsatz der sphärischen Bornitrid-Agglomerate PTX60 (Momentive Performance Materials, mittlere Agglomeratgröße $d_{50}$ = 60 $\mu$m) im HDPE-Compound wurde gezeigt, dass die Verwendung einer Standard-Schneckenkonfiguration mit zwei Mischzonen zu einer stärkeren Degradation der PTX-60 Agglomerate führt als die Verwendung einer modifizierten Schnecke mit nur einer Mischzone. Dies wird besonders bei Füllgraden von 39 Vol.-% (60 Gew.-%) deutlich. Die Through-plane-Wärmeleitfähigkeit gemessen an der Zugstab-Spritzgussprobe des Compounds mit schrofferer Verarbeitung zeigt einen um etwa 25 % niedrigeren Wert (von 1,5 statt 2,05 W/m*K) als die Probe, bei der während der Compoundierung die schonendere Schneckenkonfiguration eingesetzt wurde. Werden aus dem Compound aus der Herstellung mit der Standard-Schneckenkonfiguration für die Messung der Wärmeleitfähigkeit dünne, 1 mm dicke Platten spritzgegossen anstelle von 3,2 mm dicken Zugstäben, sinkt die Through-plane-Wärmeleitfähigkeit bei einem Füllgrad von 39 Vol.-% (60 Gew.-%) von 1,5 W/m*K auf 0,85 W/m*K. Die Wärmeleitfähigkeit ist bei dieser Verarbeitung ähnlich niedrig, wie bei der Verwendung der Primärpartikel PT120 im Compound bei gleichem Füllgrad. Diese Absenkung der Wärmeleitfähigkeit führen die Autoren auf die Degradation der BN-Agglomerate zurück.

In den beschriebenen Versuchen hat sich gezeigt, dass die eingesetzten Bornitrid-Agglomerate im Compoundierprozess oder im Spritzgussprozess so weit degradiert werden, dass sie zu einem großen Anteil in Form von Primärpartikeln im spritzgegossenen Compound vorliegen, und dass die Agglomeratform für hohe Through-plane-Wärmeleitfähigkeiten in vielen Anwendungsfällen, insbesondere beim Spritzguss dünner Platten bzw. Gehäusewände, nicht genutzt werden kann.

In der DE 10 2010 050 900 A1 wird ein Verfahren zur Herstellung texturierter Bornitrid-Agglomerate beschrieben, bei denen die Bornitrid-Plättchen im Agglomerat eine Vorzugsorientierung aufweisen.

Der Erfindung liegt daher die Aufgabe zugrunde, unter Überwindung der Nachteile des Standes der Technik, thermoplastisch verarbeitbare Polymer-Bornitrid-Compounds zur Verfügung zu stellen, mit denen prozesssicher hohe Through-plane-Wärmeleitfähigkeitswerte sowie hohe In-plane-Wärmeleitfähigkeitswerte in dünnwandigen Bauteilen erhalten werden können.

Die oben genannte Aufgabe wird gelöst durch das Bauteil gemäß Anspruch 1, das Polymer-Bornitrid-Compound gemäß Anspruch 17 und die Verwendung des Bauteils gemäß Anspruch 18. Bevorzugte bzw. besonders zweckmäßige Ausführungsformen des Bauteils sind in den Unteransprüchen 2 bis 16 und in den Punkten 2 bis 32 angegeben.

Gegenstand der Erfindung ist somit ein über thermoplastische Verarbeitung hergestelltes Bauteil gemäß Anspruch 1 mit einer Wandstärke von höchstens 3 mm an zumindest einem Teil des Bauteils, wobei das Bauteil einen thermoplastisch verarbeitbaren Polymerwerkstoff und einen wärmeleitenden Füllstoff umfasst, wobei der Füllstoff Bornitrid-Agglomerate umfasst, wobei die Bornitrid-Agglomerate plättchenförmige hexagonale Bornitrid-Primärpartikel umfassen, welche miteinander mittels einer anorganischen Bindephase, welche wenigstens ein Nitrid und/oder Oxinitrid umfasst, verbunden sind Gegenstand der Erfindung ist weiterhin ein Polymer-Bornitrid-Compound zur Herstellung eines solchen Bauteils, wobei das Polymer-Bornitrid-Compound einen thermoplastisch verarbeitbaren Polymerwerkstoff und einen wärmeleitenden Füllstoff umfasst, wobei der Füllstoff Bornitrid-Agglomerate umfasst.

Gegenstand der Erfindung ist weiterhin die Verwendung eines solchen Bauteils zur Wärmeabfuhr von zu kühlenden Komponenten oder Baugruppen, vorzugsweise von elektronischen Komponenten oder Baugruppen.

Durch die erfindungsgemäßen Polymer-Bornitrid-Compounds kann der Nachteil der niedrigen Through-plane-Wärmeleitfähigkeit von spritzgegossenen dünnwandigen Bauteilen aus Polymer-Bornitrid-Compounds überwunden werden.

Die Through-Plane-Wärmeleitfähigkeit ist die in der Through-Plane-Richtung, also senkrecht zur Plattenebene, gemessene Wärmeleitfähigkeit. Die In-Plane-Wärmeleitfähigkeit ist die in In-Plane-Richtung, also in der Plattenebene, gemessene Wärmeleitfähigkeit.

Es hat sich überraschenderweise gezeigt, dass durch die erfindungsgemäßen Polymer-Bornitrid-Compounds die Through-plane-Wärmeleitfähigkeit von spritzgegossenen dünnwandigen Bauteilen signifikant erhöht werden kann, bei gleichzeitig guter In-plane-Wärmeleitfähigkeit.

Bei gleichem Anteil an Bornitrid können in den erfindungsgemäßen Bauteilen mit den Bornitrid-Agglomeraten höhere Wärmeleitfähigkeitswerte als mit nicht agglomerierten Bornitrid-Pulvern erhalten werden. Mit den Bornitrid-Agglomeraten können höhere Füllgrade in Bornitrid-Polymer-Compounds und in daraus hergestellten Bauteilen als mit nicht agglomerierten Bornitrid-Pulvern erhalten werden.

Die erfindungsgemäßen Polymer-Bornitrid-Compounds können überraschenderweise auch mit vergleichsweise schroffer Compoundierung verarbeitet werden, ohne dass eine starke Degradation der verwendeten Bornitrid-Agglomerate auftritt. Auch beim Spritzgießen der dünnwandigen Bauteile kommt es nicht zu einer starken Degradation der Bornitrid-Agglomerate. Die erfindungsgemäßen Bauteile können prozesssicher mit reproduzierbaren Wärmeleiteigenschaften hergestellt werden.

Die zur Herstellung der erfindungsgemäßen Bauteile eingesetzten Bornitrid-Agglomerate weisen eine hohe Agglomeratstabilität auf. Während der Compoundierung im Doppelschneckenextruder werden die eingesetzten Bornitrid-Agglomerate überraschenderweise nicht bzw. nicht vollständig durch Scherung an Mischelementen und Scher-/Dispergierelementen degradiert. Auch bei hohen Füllstoffgehalten, die zu hohen Wärmeleitfähigkeiten im Bauteil führen und bei denen das Problem der Füllstoffdegradation besonders stark ist, kommt es nicht zu einer starken Degradation der eingesetzten Bornitrid-Agglomerate und diese werden nicht bzw. nur teilweise zu Primärpartikeln oder Agglomeratfragmenten degradiert.

Die erfindungsgemäßen Polymer-Bornitrid-Compounds sind darin vorteilhaft, dass sie bei Verarbeitung zu dünnen Platten einer Stärke von ≤ 3 mm vorzugsweise ein Anisotropieverhältnis von 1,5 bis 4 aufweisen. Dies ist überraschend, da bei Verwendung von weitgehend isotropen Bornitrid-Agglomeraten zu erwarten gewesen wäre, dass die Wärmeleitfähigkeit in Compounds und in daraus spritzgegossenen Platten und Bauteilen im Wesentlichen isotrop ist. Auch bei einer schroffen Compoundierung bleibt dieses Verhältniss für spritzgegossene dünne Platten erhalten, auch wenn ein Teil der Agglomerate degradiert.

Auch bei Verwendung von anisotropen plättchen- bzw. schuppenförmigen Bornitrid-Agglomeraten mit einem Aspektverhältnis > 10 ist das an den spritzgegossenen dünnen Platten vorzugsweise erhaltene Anisotropieverhältnis von 1,5 bis 4 für den Fachmann überraschend. Zu erwarten wäre gewesen, dass sich die plättchenförmigen Bornitrid-Agglomerate in den dünnen Platten ausrichten, was mit einer Verringerung der Through-plane-Wärmeleitfähigkeit zu Gunsten einer erhöhten In-plane-Wärmeleitfähigkeit und einem höheren Anisotropieverhältnis verbunden wäre.

Das Anisotropieverhältnis ist deutlich kleiner als bei Verwendung von gut kristallinem plättchenförmigem Bornitrid-Pulver.

Für die Wärmeabfuhr ist das Anisotropieverhältnis der Wärmeleitfähigkeit von 1,5 bis 4 günstig, insbesondere bei dünnen Platten oder Gehäusewänden.

Weiterhin war nicht zu erwarten, dass auch bei Einsatz von Füllstoffkombinationen von Bornitrid-Agglomeraten und Sekundärfüllstoffen für die erfindungsgemäßen Bauteile das bevorzugte Anisotropieverhältnis der Wärmeleitfähigkeit von 1,5 - 4 erhalten bleibt. Dies ist überraschend, da der Fachmann erwartet hätte, dass das Anisotropieverhältnis bei Einsatz der im Wesentlichen isotropen Sekundärfüllstoffe signifikant sinkt. Weiter überraschend ist, dass sowohl die Through-plane-Wärmeleitfähigkeit als auch die In-plane-Wärmeleitfähigkeit mit Füllstoffkombinationen von Bornitrid-Agglomeraten und Sekundärfüllstoffen in spritzgegossenen Platten höher ist, als die rechnerisch addierten Werte der Wärmeleitfähigkeiten der spritzgegossenen Platten aus den Compounds der Polymere mit den Einzelkomponenten, also des Compounds aus Polymer und Bornitrid-Agglomeraten sowie des Compounds aus Polymer und Sekundärfüllstoff.

Bei Einsatz von Füllstoffkombinationen von Bornitrid-Agglomeraten und Sekundärfüllstoffen hat sich überraschenderweise gezeigt, dass sich bei gleichem Anteil an Bornitrid-Agglomeraten bei Einsatz von zusätzlichen Sekundärfüllstoffen die Wärmeleitfähigkeit gegenüber der Verwendung von Bornitrid-Agglomeraten alleine nicht nur signifikant in Through-plane-Richtung erhöht, sondern dass gleichzeitig eine starke Erhöhung in In-plane-Richtung ebenfalls erfolgt.

Weiterhin ist überraschend, dass zur Herstellung der erfindungsgemäßen Bauteile Polymer-Bornitrid-Compounds mit nicht zu hohen Füllgraden an wärmeleitenden Füllstoffen eingesetzt werden können. Es ist daher möglich, zur weiteren Eigenschaftsanpassung der gefüllten Polymerwerkstoffe weitere Additive und Füllstoffe zuzusetzen, so dass bei den meisten gängigen thermoplastischen Polymeren Gesamtfüllgrade von ≤ 50 Vol.-% und für TPE-Polymere (thermoplastische Elastomere) von ≤ 70 Vol.-% möglich sind.

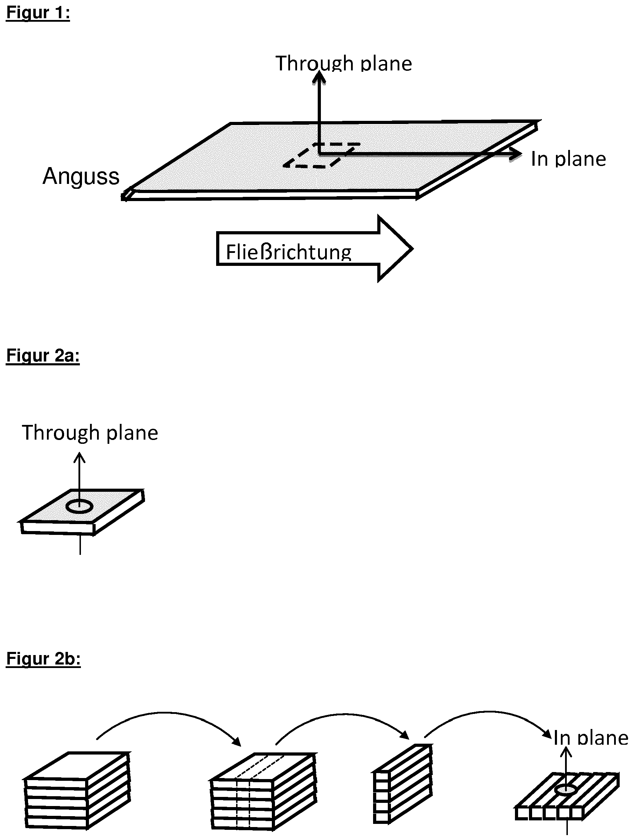

Figur 1 zeigt eine dünne spritzgegossene Platte mit den Abmessungen 80x80x2 mm$^3$ mit Anguss und den Richtungen In-plane und Through-plane, in denen die Wärmeleitfähigkeitswerte (In-plane-Wärmeleitfähigkeit und Through-plane - Wärmeleitfähigkeit) ermittelt werden.

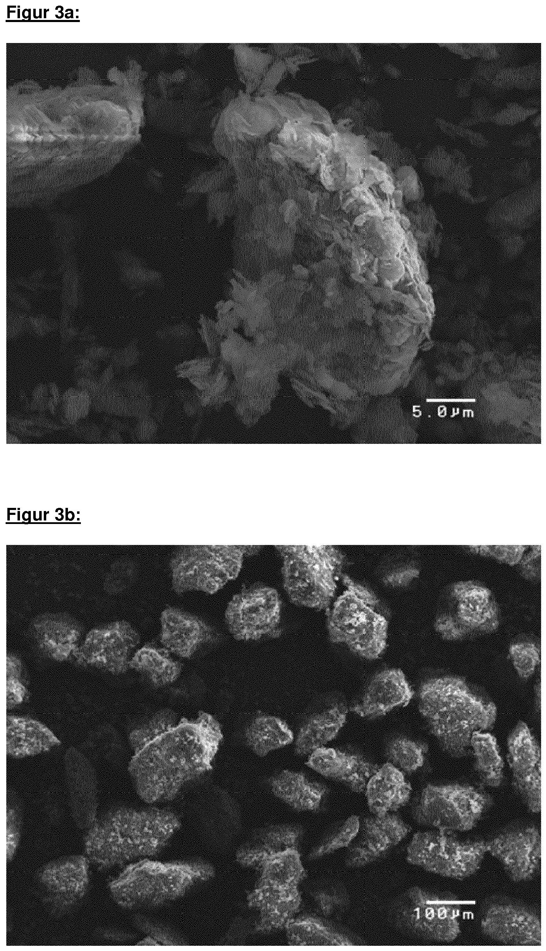

Figuren 2 a und b zeigen die zur Messung der Through-plane- und In-plane-Wärmeleitfähigkeit verwendeten Proben. Figur 2 a zeigt eine Probe mit den Abmessungen 10x10x2 mm$^3$, die aus der Mitte der spritzgegossenen Platte von Figur 3 präpariert wurde und die zur Messung der Through-plane-Wärmeleitfähigkeit verwendet wird. Figur 2b zeigt die Präparation einer Probe zur Messung der In-plane-Wärmeleitfähigkeit. Zunächst wird ein Plattenstapel von Proben der Abmessungen 10x10x2 mm$^3$ durch Verkleben mit Sekundenkleber hergestellt, wobei diese Proben aus spritzgegossenen Platten der Abmessungen 80x80x2 mm$^3$ präpariert wurden. Aus dem Plattenstapel wird eine Probe parallel zur Through-plane-Richtung und senkrecht zur Fließrichtung der spritzgegossenen Platten präpariert. An dieser Probe wird die In-Plane Wärmeleitfähigkeit ermittelt.

Figuren 3 a und b zeigen REM-Aufnahmen der für die erfindungsgemäßen Bauteile und Polymer-Bornitrid-Compounds eingesetzten Bornitrid-Agglomerate aus Beispiel 18. Figur 3 a zeigt eine REM-Aufnahme eines Bornitrid-Agglomerats mit einem Agglomeratdurchmesser von 25 μm, das aus vielen einzelnen plättchenförmigen Bornitrid-Primärpartikeln aufgebaut ist, sowie den nicht abgesiebten im Produkt verbleibenden Feinanteil. Figur 3b zeigt die Siebfraktion 100 - 200 μm, an der die Agglomeratstabilität bestimmt wird.

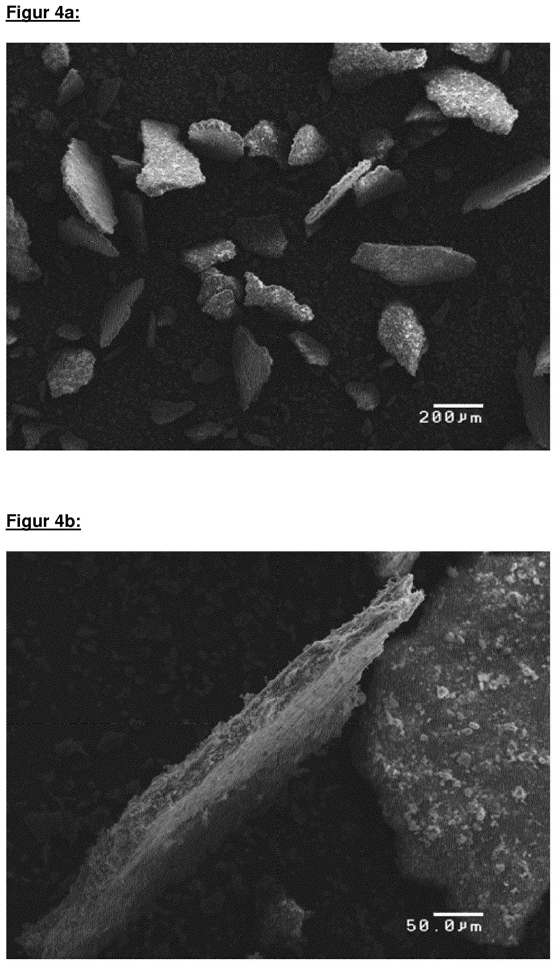

Figuren 4 a und b zeigen REM-Aufnahmen der für die erfindungsgemäßen Bauteile und Polymer-Bornitrid-Compounds eingesetzten Bornitrid-Agglomerate aus Beispiel 1. Figur 4 a zeigt eine Übersichtsaufnahme der Bornitrid-Agglomerate in der Siebfraktion < 500 μm. Figur 4b zeigt eine Bruchfläche eines Agglomerats mit einer Dicke von 30 μm.

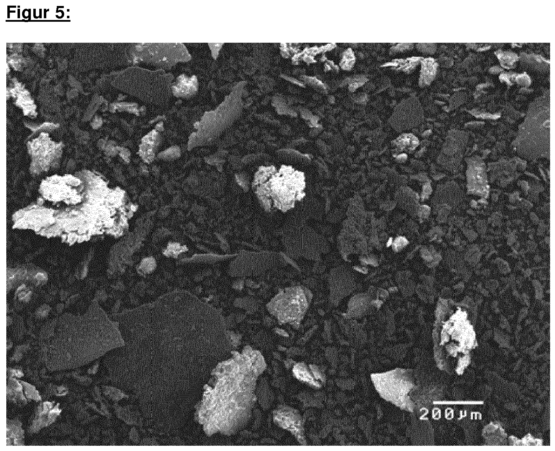

Figur 5 zeigt eine REM-Übersichtsaufnahme der für die erfindungsgemäßen Bauteile und Polymer-Bornitrid-Compounds eingesetzten Bornitrid-Agglomerate in der Siebfraktion < 500 μm aus Beispiel 29. Die Dicke der Bornitrid-Agglomerate beträgt 10 μm.

Wie oben bereits ausgeführt, ist die Through-Plane-Wärmeleitfähigkeit die in der Through-Plane-Richtung, also senkrecht zur Plattenebene, gemessene Wärmeleitfähigkeit. Die In-Plane-Wärmeleitfähigkeit ist die in In-Plane-Richtung, also in der Plattenebene, gemessene Wärmeleitfähigkeit.

Die Through-plane-Wärmeleitfähigkeit der erfindungsgemäßen Bauteile und Polymer-Bornitrid-Compounds beträgt vorzugsweise wenigstens 1 W/m*K, weiter vorzugsweise wenigstens 1,2 W/m*K, weiter vorzugsweise wenigstens 1,5 W/m*K und insbesondere bevorzugt wenigstens 1,8 W/m*K. Die Wärmeleitfähigkeit wird gemäß DIN EN ISO 22007-4 an scheibenförmigen spritzgegossenen Proben einer Dicke von 2 mm gemessen.

Die In-plane-Wärmeleitfähigkeit der erfindungsgemäßen Bauteile und Polymer-Bornitrid-Compounds beträgt vorzugsweise wenigstens 1,5 W/m*K, weiter vorzugsweise wenigstens 1,8 W/m*K, weiter vorzugsweise wenigstens 2,2 W/m*K und insbesondere bevorzugt wenigstens 2,7 W/m*K.

Für die Messung der In-plane-Wärmeleitfähigkeit werden scheibenförmige spritzgegossene Proben einer Stärke von 2 mm aufeinandergestapelt und miteinander verklebt. Aus dem so präparierten Plattenstapel wird parallel zur Through-plane-Richtung und senkrecht zur Fließrichtung der spritzgegossenen Platten eine 2 mm dünne Probe mit den Maßen 2x10x10 mm$^3$ präpariert. Die Messung der In-plane-Wärmeleitfähigkeit erfolgt gemäß DIN EN ISO 22007-4 an der so präparierten 2 mm dicken Probe.

Das Anisotropieverhältnis der In-plane-Wärmeleitfähigkeit zur Through-plane-Wärmeleitfähigkeit der erfindungsgemäßen Bauteile und Bornitrid-Polymer-Compounds beträgt vorzugsweise wenigstens 1,5 und höchstens 4, weiter vorzugsweise wenigstens 1,5 und höchstens 3,5, weiter vorzugsweise wenigstens 1,5 und höchstens 3,0 und insbesondere bevorzugt wenigstens 1,5 und höchstens 2,5.

Das Anisotropieverhältnis wird berechnet, in dem die wie beschrieben ermittelte In-plane-Wärmeleitfähigkeit durch die wie beschrieben gemessene Through-plane-Wärmeleitfähigkeit geteilt wird.

Die Through-plane-Wärmeleitfähigkeit des erfindungsgemäßen Bauteils und Polymer-Bornitrid-Compounds ist vorzugsweise um wenigstens 0,8 W/m*K, weiter vorzugsweise um wenigstens 1 W/m*K, weiter vorzugsweise um wenigstens 1,3 W/m*K und insbesondere bevorzugt um wenigstens 1,6 W/m*K höher als die Wärmeleitfähigkeit des Polymerwerkstoffs ohne wärmeleitenden Füllstoff.

Die In-plane-Wärmeleitfähigkeit des erfindungsgemäßen Bauteils und Polymer-Bornitrid-Compounds ist vorzugsweise um wenigstens 1,3 W/m*K, weiter vorzugsweise um wenigstens 1,6 W/m*K, weiter vorzugsweise um wenigstens 2,0 W/m*K und insbesondere bevorzugt um wenigstens 2,5 W/m*K höher als die Wärmeleitfähigkeit des Polymerwerkstoffs ohne wärmeleitenden Füllstoff.

Der Anteil an Bornitrid-Agglomeraten im erfindungsgemäßen Bauteil und Polymer-Bornitrid-Compound beträgt vorzugsweise wenigstens 5 Vol.-%, weiter vorzugsweise wenigstens 10 Vol.-%, weiter vorzugsweise wenigstens 20 Vol.-% und besonders bevorzugt wenigstens 30 Vol.-%, bezogen auf das Gesamtvolumen des Polymer-Bornitrid-Compounds.

Der Anteil an Bornitrid-Agglomeraten im erfindungsgemäßen Bauteil und Polymer-Bornitrid-Compound beträgt vorzugsweise höchstens 70 Vol.-%, weiter vorzugsweise höchstens 60 Vol.-% und besonders bevorzugt höchstens 50 Vol.-%, bezogen auf das Gesamtvolumen des Polymer-Bornitrid-Compounds.

Für das erfindungsgemäße Bauteil und Polymer-Bornitrid-Compound werden als Polymere thermoplastisch verarbeitbare Polymere eingesetzt. Dies sind insbesondere die thermoplastischen Werkstoffe Polyamid (PA), Polyphenylensulfid (PPS), Polycarbonat (PC), Polypropylen (PP), thermoplastische Elastomere (TPE), thermoplastische Polyurethan-Elastomere (TPU) und Polyätherätherketone (PEEK), flüssigkristalline Polymere (LCP) und Polyoxymethylen (POM). Als Polymere können auch duroplastische Formmassen, die thermoplastisch verarbeitet werden können, eingesetzt werden.

Für das erfindungsgemäße Bauteil und Polymer-Bornitrid-Compound werden Bornitrid-Agglomerate mit einer hohen Agglomeratstabilität eingesetzt. Bornitrid-Agglomerate mit einer hohen Agglomeratstabilität werden auch unter Einwirkung von hohen Scherkräften, wie sie bei der Compoundierung der Polymere zusammen mit den Bornitrid-Füllstoffen insbesondere bei hohen Füllgraden auftreten, nur teilweise zu Primärpartikeln oder Agglomeratfragmenten degradiert. Die vorteilhaften Eigenschaften des erfindungsgemäßen Polymer-Borntrid-Compounds, insbesondere das Anisotropieverhältnis, bleiben trotz der teilweisen Degradation erhalten.

Die Stabilität der Agglomerate lässt sich beispielsweise in Ultraschalluntersuchungen bei gleichzeitiger Messung der Agglomeratgröße über Lasergranulometrie untersuchen, wobei durch die Einwirkung des Ultraschalls das Agglomerat mit der Zeit zerfällt. Der Zerfall der Agglomerate wird über die zeitliche Veränderung der Agglomeratgröße aufgezeichnet, wobei sich je nach Agglomeratstabilität unterschiedliche Kurvenverläufe ausbilden. Weiche Agglomerate zerfallen dabei schneller als mechanisch stabilere Agglomerate.

Für die Messung der Agglomeratstabilität werden Bornitrid-Agglomerate kleiner 200 $\mu$m gebrochen und der Feinanteil < 100 $\mu$m wird abgesiebt. An der so erhaltenen Siebfraktion 100 - 200 $\mu$m wird mittels eines Lasergranulometers (Mastersizer 2000 mit Dispergiereinheit Hydro 2000S, Malvern, Herrenberg, Deutschland) die Agglomeratstabilität bestimmt. Dazu wird als Dispergiermedium eine Lösung aus einem Netzmittel in Wasser (Mischung aus 2 ml eines Spülmittels (G 530 Spülfix, BUZIL-Werk Wagner GmbH & Co. KG, Memmingen) und 0,375 ml Imbentin (Polyethylenglycolalkylether) in 10 1 destilliertem Wasser) verwendet. In einem Schnappdeckelgläschen (8 ml) werden 10 - 20 mg der Agglomerate mit 6 ml des Dispergiermediums durch Schütteln dispergiert. Aus der Probe wird mit einer Pipette Suspension entnommen und in die Nassmesszelle des Lasergranulometers getropft, bis die Laserverdunklung 5 % erreicht (spezifizierter Bereich: 5 - 30%). Es wird mit einer Messung ohne Ultraschall begonnen und alle 15 Sekunden wird je eine weitere Messung mit Ultraschall durchgeführt, wobei die über die Gerätesoftware auf Werte zwischen 0 und 100 % einstellbare Ultraschallleistung der Dispergiereinheit jeweils auf 5 % der Maximalleistung eingestellt wird. Insgesamt werden zehn Messungen durchgeführt. Bei den Messungen läuft der Rührer der Dispergiereinheit mit 1750 U/min. Als Maß für die Agglomeratstabilität wird der Quotient aus dem $d_{90}$-Wert nach den zehn Messungen und dem $d_{90}$-Wert der ersten Messung herangezogen (multipliziert mit 100 zur Angabe in Prozent). Die hier beschriebene Messmethode wird im Folgenden auch als "Ultraschallmethode" bezeichnet.

Die Agglomeratstabilität der für die erfindungsgemäßen Polymer-Bornitrid-Compounds und die erfindungsgemäßen Bauteile eingesetzten Bornitrid-Agglomerate beträgt vorzugsweise wenigstens 40 %, weiter bevorzugt wenigstens 50 % und insbesondere bevorzugt wenigstens 60 %. Die Agglomeratstabilität wird dabei mit der oben beschrieben Ultraschallmethode bestimmt.

Die spezifische Oberfläche (BET) der für die erfindungsgemäßen Polymer-Bornitrid-Compounds und die erfindungsgemäßen Bauteile eingesetzten Bornitrid- Agglomerate beträgt vorzugsweise 20 m$^2$/g und weniger, weiter vorzugsweise 10 m$^2$/g und weniger.

Die für die erfindungsgemäßen Polymer-Bornitrid-Compounds und die erfindungsgemäßen Bauteile eingesetzten Bornitrid-Agglomerate sind im Unterschied zu nicht agglomerierten Bornitrid-Pulvern rieselfähig und gut dosierbar.

In einer bevorzugten Ausführungsform des erfindungsgemäßen Bauteils und Polymer-Bornitrid-Compounds werden als Bornitrid-Agglomerate weitgehend isotrope nitridgebundene Bornitrid-Agglomerate eingesetzt. Bei diesen Bornitrid-Agglomeraten handelt es sich um Agglomerate von plättchenförmigen hexagonalen Bornitrid-Primärpartikeln, wobei die hexagonalen Bornitrid-Primärpartikel miteinander mittels einer anorganischen Bindephase verbunden sind. Die anorganische Bindephase umfasst wenigstens ein Nitrid und/oder Oxinitrid. Bei den Nitriden und Oxinitriden handelt es sich vorzugsweise um Verbindungen der Elemente Aluminium, Silizium, Titan und Bor. Diese Bornitrid-Agglomerate können auch als isotrope nitridgebundene Bornitrid-Agglomerate bzw. als isotrope Bornitrid-Agglomerate mit nitridischer Bindephase bezeichnet werden. Die Bornitrid-Plättchen sind in diesen Agglomeraten im Wesentlichen ohne Vorzugsrichtung zueinander orientiert, so dass sie weitgehend isotrope Eigenschaften haben. Die isotropen nitridgebundenen Bornitrid-Agglomerate werden im Folgenden auch als Bornitrid-Hybrid-Agglomerate bezeichnet.

Zur Herstellung solcher nitridgebundenen isotropen Bornitrid-Agglomerate wird Bornitrid-Ausgangspulver in Form von Bornitrid-Primärpartikeln oder amorphem Bornitrid mit Bindephasen-Rohstoffen vermischt, zu Granulaten oder Formkörpern verarbeitet und diese anschließend einer Temperaturbehandlung bei einer Temperatur von mindestens 1600°C in einer Nitridieratmosphäre unterzogen und die erhaltenen Granulate oder Formkörper gegebenenfalls zerkleinert und/oder fraktioniert.

Vorzugsweise handelt es sich bei den in der Bindephase enthaltenen Nitriden und Oxinitriden um Aluminiumnitrid (AlN), Aluminiumoxinitrid, Titannitrid (TiN), Siliziumnitrid ($Si_3N_4$) und Bornitrid (BN), vorzugsweise Aluminiumnitrid, Aluminiumoxinitrid, Titannitrid und/oder Siliziumnitrid, weiter vorzugsweise Aluminiumnitrid und/oder Aluminiumoxinitrid enthält. Besonders bevorzugt enthält die Bindephase Aluminiumnitrid.

Die Nitride und Oxinitride der Bindephase können amorph, teilkristallin oder kristallin sein. Vorzugsweise ist die Bindephase kristallin.

Die nitridische Bindephase kann zusätzlich auch oxidische Phasen enthalten, wie beispielsweise Boroxid ($B_2O_3$), Aluminiumoxid ($Al_2O_3$), Siliziumdioxid ($SiO_2$), Titandioxid ($TiO_2$), Yttriumoxid ($Y_2O_3$), Magnesiumoxid (MgO), Calciumoxid (CaO) und Seltenerdmetalloxide.

Weiterhin kann die Bindephase zusätzlich noch Borate enthalten, beispielsweise Aluminiumborate oder Calciumborate. Außerdem kann die Bindephase noch Verunreinigungen enthalten, beispielsweise Kohlenstoff, metallische Verunreinigungen, elementares Bor, Boride, Borcarbid oder andere Carbide wie beispielsweise Siliziumcarbid.

Der Anteil der nitridischen Bindephase in den nitridgebundenen isotropen Bornitrid-Agglomeraten beträgt vorzugsweise wenigstens 1 Gew.-%, weiter vorzugsweise wenigstens 5 Gew.-%, weiter vorzugsweise wenigstens 10 Gew.-%, weiter vorzugsweise wenigstens 20 Gew.-% und insbesondere bevorzugt wenigstens 30 Gew.-%, jeweils bezogen auf die Gesamtmenge der Bornitrid-Agglomerate.

Der Anteil der Nitride und Oxinitride in der Bindephase beträgt vorzugsweise wenigstens 50 Gew.-%, besonders bevorzugt wenigstens 80 Gew.-%, bezogen auf die Gesamtmenge der Bindephase.

Die Bindephase bindet die Bornitrid-Primärpartikel im Agglomerat, so dass im Vergleich zu binderfreien Agglomeraten mechanisch stabilere Agglomerate erhalten werden können.

Die nitridgebundenen isotropen Bornitrid-Agglomerate können abhängig von Herstellungsverfahren rundlich bis kugelförmig oder blockig und kantig sein. Über Sprühtrocknen hergestellte Agglomerate behalten ihre rundliche bis kugelige Form auch nach der Nitridierung. Über Kompaktierung und Zerkleinerung hergestellte Agglomerate haben eine eher blockige oder brockige, kantige bzw. eckige Form.

Bei der Herstellung der erfindungsgemäßen Polymer-Bornitrid-Compounds werden die nitridgebundenen isotropen Bornitrid-Agglomerate bevorzugt mit einem mittleren Agglomeratdurchmesser ($d_{50}$) von $\leq$ 1000 $\mu$m, weiter bevorzugt $\leq$ 500 $\mu$m, weiter bevorzugt $\leq$ 400 $\mu$m, weiter bevorzugt $\leq$ 300 $\mu$m und weiter bevorzugt $\leq$ 200 $\mu$m eingesetzt. Der mittlere Agglomeratdurchmesser ($d_{50}$) kann mittels Laserbeugung ermittelt werden (Naßmessung, Mastersizer 2000, Malvern). Der mittlere Agglomeratdurchmesser entspricht mindestens dem Zweifachen der mittleren Partikelgröße der bei der Agglomeratherstellung eingesetzten Bornitrid-Primärpartikel, bevorzugt mindestens der dreifachen Größe. Der mittlere Agglomeratdurchmesser kann auch das Zehnfache oder auch das Fünfzigfache oder mehr der mittleren Partikelgröße der bei der Agglomeratherstellung eingesetzten Bornitrid-Primärpartikel betragen. Die mittlere Partikelgröße der Primärpartikel ($d_{50}$) in den nitridgebundenen isotropen Bornitrid-Agglomeraten beträgt $\leq$ 50$\mu$m, bevorzugt $\leq$ 30$\mu$m, weiter bevorzugt $\leq$ 15$\mu$m, weiter bevorzugt $\leq$ 10$\mu$m und insbesondere bevorzugt $\leq$ 6 $\mu$m.

Die bei der Compoundierung der Polymer-Bornitrid-Compounds eingesetzten nitridgebundenen isotropen Bornitrid-Agglomerate weisen ein Aspektverhältnis von 1,0 bis 1,8, vorzugsweise von 1,0 bis 1,5 auf.

Die nitridgebundenen isotropen Bornitrid-Agglomerate sind Bornitrid-Agglomerate hoher Dichte.

In den nitridgebundenen isotropen Bornitrid-Agglomeraten gibt es direkte Kontaktstellen zwischen den einzelnen plättchenförmigen Bornitrid-Primärpartikeln, so dass es in den Bornitrid-Agglomeraten durchgehende aus Bornitrid-Primärpartikeln bestehende Wärmeleitpfade gibt.

Als Bornitrid-Ausgangspulver zur Erzeugung der nitridgebundenen isotropen Bornitrid-Agglomerate können hexagonales Bornitrid, amorphes Bornitrid, teilkristallines Bornitrid, sowie Mischungen davon eingesetzt werden.

Die mittlere Partikelgröße ($d_{50}$) des eingesetzten Bornitrid-Pulvers kann 0,5 - 50 $\mu$m, vorzugsweise 0,5 - 15 $\mu$m, weiter vorzugsweise 0,5 - 5 $\mu$m betragen. So können beispielsweise hexagonale Bornitrid-Pulver mit einer mittleren Partikelgröße von 1 $\mu$m, 3 $\mu$m, 6 $\mu$m, 9 $\mu$m und 15 $\mu$m eingesetzt werden, aber auch höhere mittlere Partikelgrößen bis zu 50 $\mu$m sind möglich. Ebenso können Mischungen verschiedener hexagonaler Bornitrid-Pulver mit unterschiedlichen Partikelgrößen eingesetzt werden. Die Messung der mittleren Partikelgröße ($d_{50}$) der eingesetzten Bornitrid-Pulver erfolgt üblicherweise mittels Laserbeugung (Naßmessung, Mastersizer 2000, Malvern).

Es können $B_2O_3$-freie Bornitrid-Pulver sowie Bornitrid-Pulver mit geringeren $B_2O_3$-Gehalten von bis zu 0,5 Gew.-%, aber auch mit höheren $B_2O_3$-Gehalten von bis zu 10 Gew.-% und mehr eingesetzt werden.

Die Bindephasen-Rohstoffe können in fester oder flüssiger bzw. pastöser Form vorliegen.

Die Vermischung von Bornitrid-Ausgangspulver und Bindephasen-Rohstoffen kann beispielsweise in einer Mischtrommel, in einem V-Mischer, Röhnradmischer, einer Schwingmühle oder einem Eirichmischer erfolgen. Die Homogenität kann in einem folgenden Mahlschritt, beispielsweise in einer Schlagkreuzmühle, Trommelmühle oder Rührwerkskugelmühle, weiter erhöht werden. Die Pulvermischung kann trocken oder angefeuchtet sein. Der Zusatz von Presshilfsmitteln und ggf. Gleithilfsmitteln ist ebenfalls möglich. Die Vermischung kann auch nass erfolgen, beispielsweise wenn die anschließende Herstellung der Granulate über Sprühtrocknen oder Aufbaugranulation erfolgt.

Die Formgebung kann durch Verdichten der trockenen oder angefeuchteten Pulvermischung zu Platten oder Tabletten mittels Uniaxialpressen, über isostatisches Verpressen oder über Walzenkompaktieren erfolgen. Ebenfalls mögliche Formgebungsverfahren sind Granulationsverfahren wie Sprühgranulierung oder Aufbaugranulierung. Die Restfeuchte der hergestellten Formkörper oder Granulate kann vor der Nitridierung durch eine Temperaturbehandlung bei ca. 100 °C ausgetrieben werden.

Die trockenen Formkörper oder Granulate werden einer Hochtemperaturbehandlung in einer Nitridieratmosphäre unterzogen, bei Temperaturen von wenigstens 1600 °C, vorzugsweise von wenigstens 1800 °C. Die Nitridieratmosphäre umfasst vorzugsweise Stickstoff und/oder Ammoniak. Vorzugsweise enthält die Nitridieratmosphäre zusätzlich Argon. Nach Erreichen der Maximaltemperatur kann eine Haltezeit von bis zu mehreren Stunden oder Tagen eingelegt werden. Die Temperaturbehandlung kann in einem kontinuierlichen oder in einem Batch-Verfahren durchgeführt werden. Durch die Temperaturbehandlung in der Nitridieratmosphäre entsteht eine nitridische Bindephase, die die Bornitrid-Primärpartikel miteinander verbindet. Durch den Nitridierschritt kann der Kristallisationsgrad der Primärpartikel zunehmen, was mit einem Primärpartikelwachstum verbunden ist.

Die Granulate oder Formkörper werden vor der Hochtemperaturbehandlung vorzugsweise noch einer Temperaturbehandlung bei einer Temperatur von mindestens 700 °C in einer Nitridieratmosphäre unterzogen, wobei die Temperatur dieser ersten Temperaturbehandlung unterhalb der Temperatur der Hochtemperaturbehandlung liegt. Die Nitridieratmosphäre dieser Vornitridierung umfasst vorzugsweise Stickstoff und/oder Ammoniak. Vorzugsweise enthält die Nitridieratmosphäre zusätzlich Argon.

Der Anteil an bei der Nitridierung nicht umgesetzten Rohstoffe der Bindephase in den nitridgebundenen isotropen Bornitrid-Agglomeraten beträgt bevorzugt $\leq$ 10 %, weiter bevorzugt $\leq$ 5 %, weiter bevorzugt $\leq$ 3 % und besonders bevorzugt $\leq$ 2 %. Die Verunreinigung mit Sauerstoff beträgt bevorzugt $\leq$ 10 %, weiter bevorzugt $\leq$ 5 %, weiter bevorzugt $\leq$ 2% und insbesondere bevorzugt $\leq$ 1 %.

Als Bindephasen-Rohstoffe zur Erzeugung der nitridischen Bindephase werden vorzugsweise Metallpulver eingesetzt, die über direkte Nitridierung in das entsprechende Metallnitrid oder in ein Oxinitrid oder in Mischungen von Metallnitriden und Oxinitriden umgewandelt werden. Vorzugsweise handelt es sich bei den eingesetzten Metallpulvern um Aluminium-, Silizium- oder Titanpulver oder Mischungen davon. Insbesondere bevorzugt wird Aluminiumpulver eingesetzt.

Als Bindephasen-Rohstoffe zur Erzeugung der nitridischen Bindephase können auch Metallverbindungen in Kombination mit Reduktionsmitteln eingesetzt werden, die nitridische Bindephase wird dabei über eine Reduktions-Nitridierung hergestellt. Als Metallverbindungen werden dabei vorzugsweise Verbindungen der Elemente Aluminium, Silizium und Titan eingesetzt, bevorzugt Oxide und/oder Hydroxide wie beispielsweise Aluminiumoxid ($Al_2O_3$), Aluminiumhydroxid ($Al(OH)_3$), Böhmit ($AlOOH$), Siliziumdioxid ($SiO_2$) und Titandioxid ($TiO_2$). Als Metallverbindungen können weiterhin Borate eingesetzt werden, beispielsweise Aluminiumborat. Als Reduktionsmittel können Kohlenstoff und Wasserstoff sowie organische Verbindungen wie beispielsweise Polyvinylbutyral (PVB), Melamin und Methan eingesetzt werden. Werden gasförmige Stoffe wie beispielsweise Wasserstoff oder Methan als Reduktionsmittel eingesetzt, so werden diese Stoffe der Nitridieratmosphäre zugesetzt. Das zur Reduktion notwendige Reduktionsmittel kann auch bereits in der Metallverbindung vorliegen, so dass sich der Einsatz zusätzlicher Reduktionsmittel erübrigt, beispielsweise bei Einsatz von Aluminiumisopropoxid, Tetraethylorthosilikat oder Titanisopropoxid als Bindemittel-Rohstoff. Im Nitridierschritt werden die Metallverbindungen zu den entsprechenden Metallnitriden umgesetzt. Es ist auch möglich, dass bei der Nitridierung Oxinitride bzw. Mischungen von Metallnitriden und Oxinitriden entstehen, ebenso kann die Bindephase noch Reste von nicht umgesetzten Oxiden enthalten.

Als Bindephasen-Rohstoffe zur Erzeugung der nitridischen Bindephase können auch Edukte zur Herstellung von Bornitrid eingesetzt werden. Die Edukte zur Herstellung von Bornitrid können eine oxidische Borquelle wie beispielsweise Borsäure ($H_3BO_3$) und Boroxid ($B_2O_3$) in Kombination mit einem Reduktionsmittel wie beispielsweise Kohlenstoff oder Wasserstoff oder organischen Verbindungen wie Polyvinylalkohol (PVA), Polyvinylbutyral (PVB), Melamin und Methan enthalten. Werden gasförmige Stoffe wie beispielsweise Wasserstoff oder Methan als Reduktionsmittel eingesetzt, so werden diese Stoffe der Nitridieratmosphäre zugesetzt. Weiterhin können als Edukte zur Herstellung von Bornitrid im Wesentlichen sauerstofffreie Borquellen wie beispielsweise elementares Bor, Borcarbid und Trimethylborat eingesetzt werden. Im Nitridierschritt werden diese Rohstoffe zu hexagonalem Bornitrid umgesetzt.

Als Bindephasen-Rohstoffe zur Erzeugung der nitridischen Bindephase können weiterhin nitridische Materialien eingesetzt werden, die sich bei der Temperaturbehandlung in der Nitridieratmosphäre verfestigen. Das nitridische Material kann eine Nitrid- und/oder Oxinitrid-Verbindung von Aluminium und Silizium sein, es können auch Titannitrid und die Nitride der Seltenen Erden eingesetzt werden, ebenso wie Verbindungen aus der Gruppe der Sialone. Als Sinterhilfsstoffe können Flüssigphasen eingesetzt werden wie beispielsweise Yttriumoxid, Aluminiumoxid, Magnesiumoxid, Calciumoxid, Siliziumoxid und Oxide der Seltenen Erden.

Es ist auch möglich, Mischungen der verschiedenen aufgeführten Bindephasen-Rohstoffe einzusetzen.

Die Formkörper oder Granulate werden nach der Temperaturbehandlung in der Nitridieratmosphäre, falls erforderlich, in einem anschließenden Zerkleinerungs- und/oder Fraktionierungsschritt auf die gewünschte Agglomeratgröße gebrochen bzw. fraktioniert und somit die erfindungsgemäßen nitridgebundenen Agglomerate hergestellt. Wurde bereits während der Granulierung der Rohstoffe die Endagglomeratgröße eingestellt, beispielsweise wenn die Granulierung mittels Sprühtrocknung oder Aufbaugranulierung erfolgt ist, entfällt der Zerkleinerungsschritt nach der Nitridierung.

Zur Erreichung der Zielagglomeratgröße der nitridgebundenen isotropen Bornitrid-Agglomerate können übliche Schritte wie Sieben, Siebbrechen und Sichten eingesetzt werden. Gegebenenfalls enthaltener Feinanteil kann als erstes entfernt werden. Alternativ zum Sieben kann die definierte Zerkleinerung der Agglomerate auch über Siebreiben, Sichtermühlen, strukturierte Walzenbrecher und Schneidräder erfolgen. Auch eine Mahlung beispielsweise in einer Kugelmühle ist möglich.

Die nitridgebundenen isotropen Bornitrid-Agglomerate können im Anschluss an ihre Herstellung noch weiteren Behandlungen unterzogen werden. Dabei können beispielsweise eine oder mehrere der folgenden möglichen derartigen Behandlungen durchgeführt werden:

- eine Temperaturbehandlung unter Sauerstoff, die zur oberflächlichen Oxidation der nitridgebundenen isotropen Bornitrid-Agglomerate führt. So können beispielsweise durch eine oberhalb von 500 °C durchgeführte Oxidation an Luft von Agglomeraten mit Titannitrid (TiN) enthaltender Bindephase Agglomerate mit oberflächlichem Titandioxid ($TiO_2$) hergestellt werden, bei einer Siliziumnitrid ($Si_3N_4$) enthaltenden Bindephase kann oberflächliches Siliziumdioxid ($SiO_2$) und bei einer Aluminiumnitrid (AlN) enthaltenden Bindephase kann oberflächliches Aluminiumoxid ($Al_2O_3$) erzeugt werden.

- eine Wasserdampfbehandlung

- eine Oberflächenmodifizierung mit Silanen, Titanaten oder anderen metallorgani- schen Verbindungen, entweder bei Raumtemperatur oder unter Temperatureinwirkung und mit Träger- oder Reaktionsgasen. Diese Oberflächenmodifizierung erhöht auch die Hydrolysebeständigkeit der nitridischen Bindephase.

- eine Oberflächenmodifizierung mit Polymeren, beispielsweise mit Polyethylenglykol (PEG), Polyvinylalkohol (PVA), Polyvinylbutyral (PVB), Polyvinylpyrroldion (PVP), Copolymeren, Acrylaten, Ölen oder Carbonsäuren

- eine Infiltration mit Sol-Gel-Systemen, beispielsweise mit Böhmitsol oder $SiO_2$-Sol, oder mit wasserlöslichen Gläsern oder Nanopartikeln oder oberflächenmodifizierten Nanopartikeln oder Mischungen daraus.

- eine Infiltration mit wasser- oder ethanollöslichen Polymeren. Die Bornitrid-Agglomerate können mit Harzen, wie beispielsweise Silikon-, Epoxy- oder Polyurethan-Harzen infiltriert werden und das Harz mit Härter oder temperaturhärtend vor oder während der Compoundierung aushärten.

Die aufgeführten Oberflächenbehandlungen können auch für Gemische von nitridgebundenen isotropen Bornitrid-Agglomeraten mit anderen Bornitrid-Füllstoffen wie beispielsweise Bornitrid-Primärpartikeln durchgeführt werden.

Es ist auch möglich, mehrere der aufgeführten Behandlungen in beliebiger Reihenfolge zu kombinieren. Die Behandlungen können beispielsweise im Wirbelschichtverfahren durchgeführt werden.

Durch die aufgeführten Behandlungen kann eine verbesserte Ankopplung der Polymermatrix an die nitridgebundenen isotropen Agglomerate erzielt werden.

Mit den nitridgebundenen isotropen Bornitrid-Agglomeraten kann überraschenderweise bei ansonsten vergleichbaren Verarbeitungsbedingungen die Through-plane-Wärmeleitfähigkeit bei einem Füllgrad von 30 Vol.-% um mehr als 40% und bei einem Füllgrad von 40 Vol.-% um mehr als 70% gegenüber dem Einsatz von nicht agglomeriertem plättchenförmigem Bornitrid gesteigert werden. Besonders überraschend ist, dass diese Steigerungen auch bei schroffer Compoundierung im Doppelschneckenextruder und beim Spritzguss dünner Platten erzielt werden.

In einer weiteren bevorzugten Ausführungsform des erfindungsgemäßen Bauteils und Polymer-Bornitrid-Compounds werden als Bornitrid-Agglomerate weitgehend anisotrope schuppenförmige Bornitrid-Agglomerate eingesetzt. Bei diesen Bornitrid-Agglomeraten handelt es sich um Agglomerate umfassend plättchenförmige hexagonale Bornitrid-Primärpartikel, die miteinander zu schuppenförmig ausgebildeten Bornitrid-Agglomeraten agglomeriert sind. Diese Bornitrid-Agglomerate können auch als schuppenförmige Bornitrid-Agglomerate oder als Bornitrid-Flakes bezeichnet werden. Diese Bornitrid-Flakes sind zu unterscheiden von nicht agglomerierten plättchenförmigen Bornitrid-Primärpartikeln, die in der englischsprachigen Literatur oftmals auch als "flaky boron nitride particles" bezeichnet werden. Die schuppenförmigen Bornitrid-Agglomerate sind in ihrer Struktur aus vielen einzelnen Bornitrid-Plättchen aufgebaut. Die plättchenförmigen Bornitrid-Primärpartikel sind in diesen Agglomeraten nicht regellos zueinander orientiert. Die schuppenförmigen Bornitrid-Agglomerate umfassen plättchenförmige Bornitrid-Primärpartikel, deren Plättchenebenen parallel zueinander ausgerichtet sind. Vorzugsweise sind die plättchenförmigen Bornitrid-Primärpartikel miteinander in der Weise agglomeriert, dass die Plättchenebenen der Bornitrid-Primärpartikel im Wesentlichen parallel zueinander ausgerichtet sind. Die schuppenförmigen Bornitrid-Agglomerate haben anisotrope Eigenschaften, da die plättchenförmigen Bornitrid-Primärpartikel in diesen Agglomeraten nicht regellos zueinander orientiert sind.

Der Grad der Ausrichtung der plättchenförmigen Bornitrid-Primärpartikel in den anisotropen schuppenförmigen Bornitrid-Agglomeraten kann durch den Texturindex charakterisiert werden. Der Texturindex von hexagonalem Bornitrid (hBN) mit vollständig isotroper Ausrichtung der plättchenförmigen Bornitrid-Primärpartikel, also ohne Vorzugsorientierung, liegt bei 1. Mit dem Grad der Orientierung in der Probe, das heißt je mehr plättchenförmige Bornitrid-Primärpartikel mit ihren Basalflächen aufeinander bzw. parallel zueinander angeordnet sind, bzw. je mehr Plättchenebenen der Bornitrid-Primärpartikel parallel zueinander ausgerichtet sind, steigt der Texturindex an. Der Texturindex der für die erfindungsgemäßen Bauteile eingesetzten anisotropen schuppenförmigen Bornitrid-Agglomerate liegt vorzugsweise bei Werten von größer 2,0, vorzugsweise bei 2,5 und mehr, weiter vorzugsweise bei 3,0 und mehr, besonders bevorzugt bei 3,5 und mehr. Der Texturindex der schuppenförmigen Agglomerate kann auch Werte von 5,0 und mehr sowie von 10,0 und mehr aufweisen. Vorzugsweise liegt der Texturindex der schuppenförmigen Bornitrid-Agglomerate bei Werten von 100 und weniger, weiter vorzugsweise bei Werten von 50 und weniger. Die Bestimmung des Texturindex erfolgt röntgenographisch. Dazu wird das Verhältnis der an Röntgenbeugungsdiagrammen gemessenen Intensitäten des (002)- und des (100)-Beugungsreflexes bestimmt und durch den entsprechenden Verhältniswert für eine ideale, nicht texturierte hBN-Probe geteilt. Dieses ideale Verhältnis kann aus den JCPDS-Daten ermittelt werden und beträgt 7,29.

Der Texturindex (TI) der Bornitrid-Agglomerate kann somit gemäß der Formel

$$TI = \frac{I_{(002),\ Probe} / I_{(100),\ Probe}}{I_{(002),\ theoretisch} / I_{(100),\ theoretisch}} = \frac{I_{(002),\ Probe} / I_{(100),\ Probe}}{7,29}$$

als Verhältnis $I_{(002)}/I_{(100)}$ der Intensitäten des (002)- und des (100)-Beugungsreflexes des Röntgenbeugungsdiagramms der Bornitrid-Agglomerate, dividiert durch die Zahl 7,29, ermittelt werden. Der Texturindex der Bornitrid-Agglomerate wird an einer Schüttung der Bornitrid-Agglomerate gemessen. Die Messung wird bei 20 °C durchgeführt.

Wird der Texturindex an großen schuppenförmigen Einzel-Agglomeraten einer Größe von etwa 3,5 cm$^2$ (bezogen auf die Fläche der Ober- bzw. Unterseite der schuppenförmigen Agglomerate) ermittelt, so können für den Texturindex sehr hohe Werte von 100 und mehr und von bis zu etwa 500 erhalten werden. Diese an den großen schuppenförmigen Agglomeraten gemessenen Werte sind ein Beleg für die sehr starke Ausrichtung der Primärpartikel in den schuppenförmigen Bornitrid-Agglomeraten. Bei der Messung des Texturindex an den für die erfindungsgemäßen Bauteile und Polymer-Bornitrid-Compounds eingesetzten schuppenförmigen Bornitrid-Agglomeraten, die wie oben bereits beschrieben an einer Agglomeratschüttung durchgeführt wird, erfolgt teilweise eine statistische Ausrichtung im Probenträger für die röntgenografische Messung. Daher sind die an kleineren schuppenförmigen Agglomeraten einer Größe von $\leq$ 1 mm erhaltenen Werte für den Texturindex immer niedriger als es der Orientierung der Primärpartikel im einzelnen schuppenförmigen Agglomerat entspricht.

Der Texturindex der für die erfindungsgemäßen Bauteile und Bornitrid-Polymer-Compounds eingesetzten isotropen nitridgebundenen Agglomerate liegt vorzugsweise bei Werten von 1,0 bis < 2,0.

In den erfindungsgemäßen Polymer-Bornitrid-Compounds und den erfindungsgemäßen Bauteilen werden die anisotropen schuppenförmigen Bornitrid-Agglomerate vorzugsweise mit einem mittleren Agglomeratdurchmesser ($d_{50}$) von $\leq$ 1000 $\mu$m, weiter vorzugsweise von $\leq$ 500 $\mu$m, weiter vorzugsweise von $\leq$ 300 $\mu$m und insbesondere bevorzugt von $\leq$ 200 $\mu$m eingesetzt. Der mittlere Agglomeratdurchmesser ($d_{50}$) der in den erfindungsgemäßen Polymer-Bornitrid-Compounds und den erfindungsgemäßen Bauteilen eingesetzten anisotropen schuppenförmigen Bornitrid-Agglomerate beträgt vorzugsweise $\geq$ 20 $\mu$m, weiter vorzugsweise $\geq$ 30 $\mu$m, weiter vorzugsweise $\geq$ 50 $\mu$m und insbesondere bevorzugt $\geq$ 100 $\mu$m. Der mittlere Agglomeratdurchmesser ($d_{50}$) kann mittels Laserbeugung ermittelt werden (Naßmessung, Mastersizer 2000, Malvern). Der mittlere Agglomeratdurchmesser entspricht mindestens dem Zweifachen der mittleren Partikelgröße der bei der Agglomeratherstellung eingesetzten Bornitrid-Primärpartikel, bevorzugt mindestens der dreifachen Größe. Der mittlere Agglomeratdurchmesser kann auch das Zehnfache oder auch das Fünfzigfache oder mehr der mittleren Partikelgröße der bei der Agglomeratherstellung eingesetzten Bornitrid-Primärpartikel betragen. Die mittlere Partikelgröße der Primärpartikel ($d_{50}$) in den anisotropen schuppenförmigen Bornitrid-Agglomeraten beträgt $\leq$ 50$\mu$m, bevorzugt $\leq$ 30$\mu$m, weiter bevorzugt $\leq$ 15$\mu$m, weiter bevorzugt $\leq$ 10$\mu$m und insbesondere bevorzugt $\leq$ 6 $\mu$m.

Die Dicke der anisotropen schuppenförmigen Bornitrid-Agglomerate beträgt $\leq$ 500 $\mu$m, bevorzugt $\leq$ 200 $\mu$m, weiter bevorzugt $\leq$ 100 $\mu$m, weiter bevorzugt $\leq$ 70 $\mu$m, weiter bevorzugt $\leq$ 50 $\mu$m und insbesondere bevorzugt $\leq$ 35 $\mu$m. Die Dicke beträgt mindestens 1 $\mu$m, weiter bevorzugt $\geq$ 2 $\mu$m, weiter bevorzugt $\geq$ 3 $\mu$m und insbesondere bevorzugt $\geq$ 5 $\mu$m. Die Dicke der anisotropen schuppenförmigen Bornitrid-Agglomerate kann mit einer Präzisions-Digital-Messuhr oder im Raserelektronenmikroskop (REM) ermittelt werden.

Das Aspektverhältnis, d. h. das Verhältnis des Agglomeratdurchmessers zur Agglomeratdicke der schuppenförmigen Bornitrid-Agglomerate kann anhand von rasterelektronenmikroskopischen (REM-) Aufnahmen ermittelt werden, indem Agglomeratdurchmesser und -dicke vermessen werden. Das Aspektverhältnis der erfindungsgemäßen schuppenförmigen Agglomerate liegt bei einem Wert von größer als 1, vorzugsweise bei Werten von 2 und mehr, weiter vorzugsweise bei Werten von 3 und mehr, weiter vorzugsweise bei Werten von 5 und mehr und besonders bevorzugt bei Werten von 10 und mehr.

Die anisotropen schuppenförmigen Bornitrid-Agglomerate sind Bornitrid-Agglomerate hoher Dichte.

In den anisotropen schuppenförmigen Bornitrid-Agglomeraten gibt es direkte Kontaktstellen zwischen den einzelnen plättchenförmigen Bornitrid-Primärpartikeln, so dass es in den Bornitrid-Agglomeraten durchgehende aus Bornitrid-Primärpartikeln aufgebaute Wärmeleitpfade gibt.

Die für die erfindungsgemäßen Bauteile und Bornitrid-Polymer-Compounds eingesetzten schuppenförmigen Bornitrid-Agglomerate haben auf ihrer Ober- und Unterseite durch das Formgebungsverfahren unmittelbar erzeugte, nicht durch Zerkleinern hergestellte Oberflächen. Diese Oberflächen werden im Folgenden als "Formgebungsflächen" bezeichnet. Die Formgebungsflächen sind vergleichsweise glatt im Unterschied zu den rauen seitlichen Oberflächen (Bruchflächen) der Agglomerate, die durch Brechen bzw. Zerkleinerungsschritte entstanden sind. Die Oberflächen der schuppenförmigen Bornitrid-Agglomerate sind im Wesentlichen eben

(planar) und ihre Ober- und Unterseite sind weitgehend parallel zueinander.

Der Anteil der Formgebungsfläche an der Gesamtoberfläche der schuppenförmigen Bornitrid-Agglomerate beträgt bei Annahme einer Plättchen- bzw. Schuppenform mit runder Grundfläche durchschnittlich mindestens 33 % (für den Fall, dass der Durchmesser der Agglomerate gleich ihrer Höhe ist) und bei Annahme einer Plättchen- bzw. Schuppenform mit quadratischer Grundfläche ebenfalls mindestens 33 % (für den Fall von würfelförmigen Agglomeraten). Für schuppenförmigen Bornitrid-Agglomerate mit hohem Aspektverhältnis liegt der Anteil der Formgebungsfläche an der Gesamtoberfläche deutlich höher, für Agglomerate mit einem Aspektverhältnis > 3,0 liegt der Anteil üblicherweise zwischen 60 und 95 %, für sehr große Agglomerate kann der Anteil noch höher liegen. Durch Verrunden der Agglomerate oder als Folge eines Sieb- bzw. Klassierungsprozesses kann sich der Anteil der Formgebungsfläche an der Gesamtoberfläche reduzieren, in der Regel beträgt der Anteil aber stets wenigstens 10 %, vorzugsweise wenigstens 20 %.

Das Verhältnis von Formgebungsfläche zu Gesamtoberfläche kann durch Auswertung von REM-Aufnahmen ermittelt werden. Dazu werden die zur Bestimmung des Aspektverhältnisses ermittelten Werte für Agglomeratdurchmesser und -dicke verwendet. Aus diesen Werten wird der Anteil der Formgebungsfläche an der Gesamtoberfläche wie folgt ermittelt:

$$\text{Anteil Formgebungsfläche [\%]} = ((2 * \text{Stirnfläche}) / \text{Gesamtoberfläche}) * 100$$

wobei

$$\text{Stirnfläche} = \text{Agglomeratdurchmesser} * \text{Agglomeratdurchmesser}$$

$$\text{Gesamtoberfläche} = 2 * \text{Stirnfläche} + 4 * \text{Seitenfläche}$$

$$\text{Seitenfläche} = \text{Agglomeratdicke} * \text{Agglomeratdurchmesser}$$

Zur Herstellung der schuppenförmigen Bornitrid-Agglomerate wird Bornitrid-Ausgangspulver in Form von Bornitrid-Primärpartikeln oder amorphem Bornitrid, gegebenenfalls vermischt mit Bindephasen-Rohstoffen, in einem Formgebungsschritt zu schuppenförmigen Agglomeraten verarbeitet und anschließend einem thermischen Behandlungsschritt, einer Hochtemperaturglühung, unterzogen und die erhaltenen schuppenförmigen Agglomerate gegebenenfalls anschließend noch zerkleinert und/oder fraktioniert.

Die Formgebung der schuppenförmigen Bornitrid-Agglomerate erfolgt durch Verdichten der trockenen oder angefeuchteten Pulvermischung mittels Uniaxialpressen oder über Walzenkompaktieren.

Vorzugsweise wird zur Formgebung das Bornitrid-Ausgangspulver bzw. die Pulvermischung aus Bornitrid-Ausgangspulver und Bindephasen-Rohstoffen zwischen zwei sich drehenden gegenläufigen Walzen verpresst. Dabei werden Anpresskräfte im Walzenspalt von $\geq 0,5$ kN, vorzugsweise von $\geq 1$ kN, weiter vorzugsweise von $\geq 2$ kN, weiter vorzugsweise von $\geq 3$ kN, weiter vorzugsweise von $\geq 5$ kN, weiter vorzugsweise von $\geq 7$ kN und besonders bevorzugt von $\geq 10$ kN pro cm Walzspaltlänge eingestellt. Der Anpressdruck der Walzen hat Einfluss auf die Dichte der anisotropen schuppenförmigen Bornitrid-Agglomerate. Bei hohen Anpressdrücken wird ein Teil des Bornitrid-Rohstoffs amorphisiert, der bei der anschließenden Hochtemperaturglühung rekristallisiert. Die Herstellung der anisotropen schuppenförmigen Bornitrid-Agglomerate kann auch bei Verwendung mikrostrukturierter Walzen erfolgen.

Die Restfeuchte der hergestellten Agglomerate kann vor der weiteren Temperaturbehandlung bzw. Nitridierung durch eine Trocknung bei ca. 100 °C ausgetrieben werden.

Das zu schuppenförmigen Agglomeraten kompaktierte Material wird einem thermischen Behandlungsschritt, einer Hochtemperaturglühung, unterzogen. Werden die schuppenförmigen Agglomerate ohne Zusatz von Bindephasen-Rohstoffen und nur unter Verwendung von Bornitrid-Ausgangspulvern, also von Bornitrid-Primärpartikeln oder amorphem Bornitrid, hergestellt, so erfolgt die Hochtemperaturglühung der schuppenförmigen Agglomerate bei Temperaturen von mindestens 1600 °C, vorzugsweise von mindestens 1800 °C.

Die erhaltenen schuppenförmigen Agglomerate können gegebenenfalls anschließend noch zerkleinert und/oder fraktioniert werden.

Mit steigendem Anpressdruck bei der Kompaktierung und mit steigender Temperatur bei der thermischen Behandlung steigt die Stabilität der anisotropen schuppenförmigen Bornitrid-Agglomerate an, ebenso wie die Wärmeleitfähigkeit, gemessen an dünnen Platten einer Stärke von 2 mm, die aus erfindungsgemäßen Polymer-Bornitrid-Compounds unter Verwendung der anisotropen schuppenförmigen Bornitrid-Agglomerate hergestellt wurden.

Bei der Herstellung der anisotropen schuppenförmigen Bornitrid-Agglomerate können Bornitrid-Pulver ohne weitere Zusätze eingesetzt und zu den anisotropen schuppenförmigen Bornitrid-Agglomeraten verarbeitet werden. Vorzugsweise werden Mischungen aus hexagonalem Bornitrid-Pulver und anderen Pulvern eingesetzt und somit anisotrope schuppenförmige Mischagglomerate aus Bornitrid und Sekundärphasen hergestellt ("Bornitrid-Hybrid-Flakes"). Bei den zur Herstellung der anisotropen schuppenförmigen Mischagglomerate zum hexagonalen Bornitrid-Pulver zugesetzten weiteren Pulvern handelt es sich um Bindephasen-Rohstoffe zur Erzeugung einer anorganischen Bindephase. In den anisotropen schuppenförmigen Mischagglomeraten sind die hexagonalen Bornitrid-Primärpartikel miteinander mittels einer anorganischen Bindephase als Sekundärphase verbunden.

Die anorganische Bindephase der anisotropen schuppenförmgien Bornitrid-Mischagglomerate umfasst wenigstens ein Carbid, Borid, Nitrid, Oxid, Hydroxid, Metall oder Kohlenstoff.

Die plättchenförmigen Bornitrid-Primärpartikel sind in diesen schuppenförmigen Mischagglomeraten wie in den bindephasenfreien anisotropen schuppenförmigen Bornitrid-Agglomeraten nicht regellos zueinander orientiert. Die schuppenförmigen Bornitrid-Mischagglomerate umfassen plättchenförmige Bornitrid-Primärpartikel, deren Plättchenebenen parallel zueinander ausgerichtet sind. Vorzugsweise sind die plättchenförmigen Bornitrid-Primärpartikel miteinander in der Weise agglomeriert, dass die Plättchenebenen der Bornitrid-Primärpartikel im Wesentlichen parallel zueinander ausgerichtet sind. Die schuppenförmigen Bornitrid-Mischagglomerate haben anisotrope Eigenschaften, da die plättchenförmigen Bornitrid-Primärpartikel in diesen Agglomeraten nicht regellos zueinander orientiert sind.

Die Bindephase befindet sich in den anisotropen schuppenförmigen Bornitrid-Mischagglomeraten (Bornitrid-Hybrid-Flakes) zwischen den Bornitrid-Primärpartikeln, sie kann sich auch zumindest teilweise auf der Oberfläche der Bornitrid-Hybrid-Flakes befinden oder die Oberfläche zum großen Teil bedecken. Die Bindephase bindet die Bornitrid-Primärpartikel in den Bornitrid-Hybrid-Flakes, so dass im Vergleich zu binderfreien Agglomeraten mechanisch stabilere Agglomerate erhalten werden können.

Vorzugsweise haben die anisotropen schuppenförmigen Bornitrid-Mischagglomerate einen Bindephasen-Anteil von wenigstens 1 %, weiter vorzugsweise von wenigstens 5 %, weiter vorzugsweise von wenigstens 10 %, weiter vorzugsweise von wenigstens 20 % und insbesondere vorzugsweise von wenigstens 30 %, jeweils bezogen auf die Gesamtmenge der schuppenförmigen Bornitrid-Agglomerate.

Die Hochtemperaturglühung der schuppenförmigen Bornitrid-Agglomerate mit anorganischer Bindephase wird bei Temperaturen von wenigstens 1000 °C durchgeführt.

In einer weiteren bevorzugten Ausführungsform umfasst die anorganische Bindephase der anisotropen schuppenförmigen Mischagglomerate wenigstens ein Nitrid und/oder Oxinitrid. Bei den Nitriden und Oxinitriden handelt es sich vorzugsweise um Verbindungen der Elemente Aluminium, Silizium, Titan und Bor.

Diese Bornitrid-Mischagglomerate können auch als anisotrope nitridgebundene Bornitrid-Agglomerate bzw. als anisotrope Bornitrid-Agglomerate mit nitridischer Bindephase bezeichnet werden.

Vorzugsweise handelt es sich bei den in der Bindephase enthaltenen Nitriden und Oxinitriden um Aluminiumnitrid (AlN), Aluminiumoxinitrid, Titannitrid (TiN), Siliziumnitrid ($Si_3N_4$) und Bornitrid (BN), vorzugsweise Aluminiumnitrid, Aluminiumoxinitrid, Titannitrid und/oder Siliziumnitrid, weiter vorzugsweise Aluminiumnitrid und/oder Aluminiumoxinitrid enthält. Besonders bevorzugt enthält die Bindephase Aluminiumnitrid.

Die Nitride und Oxinitride der Bindephase können amorph, teilkristallin oder kristallin sein. Vorzugsweise ist die Bindephase kristallin, da damit höhere Wärmeleitfähigkeitswerte in den erfindungsgemäßen Polymer-Bornitrid-Compounds und den erfindungsgemäßen Bauteilen erzielt werden können.

Die Nitride und/oder Oxinitride enthaltende Bindephase kann zusätzlich auch oxidische Phasen enthalten, wie beispielsweise Boroxid ($B_2O_3$), Aluminiumoxid ($Al_2O_3$), Siliziumdioxid ($SiO_2$), Titandioxid ($TiO_2$), Yttriumoxid ($Y_2O_3$), Magnesiumoxid (MgO), Calciumoxid (CaO) und Seltenerdmetalloxide.

Weiterhin kann die Bindephase zusätzlich noch Borate enthalten, beispielsweise Aluminiumborate oder Calciumborate. Außerdem kann die Bindephase noch Verunreinigungen enthalten, beispielsweise Kohlenstoff, metallische Verunreinigungen, elementares Bor, Boride, Borcarbid oder andere Carbide wie beispielsweise Siliziumcarbid.

Der Anteil der Nitride und Oxinitride in der Bindephase beträgt vorzugsweise wenigstens 50 Gew.-%, besonders bevorzugt wenigstens 80 Gew.-%, bezogen auf die Gesamtmenge der Bindephase.

Vorzugsweise enthält die Bindephase Aluminiumnitrid, Siliziumnitrid oder Titannitrid oder Mischungen daraus in einem Anteil von $\geq$ 50 Gew.-% bezogen auf die Gesamtmenge der Bindephase. Insbesondere bevorzugt enthält die Bindephase Aluminiumnitrid, vorzugsweise in einem Anteil von $\geq$ 90 Gew.-% bezogen auf die Gesamtmenge der Bindephase.

Als Bindephasen-Rohstoffe zur Erzeugung der nitridischen Bindephase der anisotropen nitridgebundenen Bornitrid-Agglomerate werden vorzugsweise Metallpulver eingesetzt, die über direkte Nitridierung in das entsprechende Metallnitrid oder in ein Oxinitrid oder in Mischungen von Metallnitriden und Oxinitriden umgewandelt werden. Vorzugsweise handelt es sich bei den eingesetzten Metallpulvern um Aluminium-, Silizium- oder Titanpulver oder Mischungen davon. Insbesondere bevorzugt wird Aluminiumpulver eingesetzt. Im Nitridierschritt wird das Metall zum entsprechenden Metallnitrid umgesetzt. Es ist auch möglich, dass bei der Nitridierung Oxinitride bzw. Mischungen von Metallnitriden und Oxinitriden entstehen.

Als Bindephasen-Rohstoffe zur Erzeugung der nitridischen Bindephase der anisotropen nitridgebundenen Bornitrid-Agglomerate können auch Metallverbindungen in Kombination mit Reduktionsmitteln eingesetzt werden, die nitridische Bindephase wird dabei über eine Reduktions-Nitridierung hergestellt. Als Metallverbindungen werden dabei vorzugsweise Verbindungen der Elemente Aluminium, Silizium und Titan eingesetzt, bevorzugt Oxide und/oder Hydroxide wie beispielsweise Aluminiumoxid ($Al_2O_3$), Aluminiumhydroxid ($Al(OH)_3$), Böhmit (AlOOH), Siliziumdioxid ($SiO_2$) und Titandioxid ($TiO_2$). Als Metallverbindungen können weiterhin Borate eingesetzt werden, beispielsweise Aluminiumborat. Als Reduktionsmittel können Kohlenstoff und Wasserstoff sowie organische Verbindungen wie beispielsweise Polyvinylbutyral (PVB), Melamin und Methan eingesetzt werden. Werden gasförmige Stoffe wie beispielsweise Wasserstoff oder Methan als Reduktionsmittel eingesetzt, so werden diese Stoffe der Nitridieratmosphäre zugesetzt. Das zur Reduktion notwendige Reduktionsmittel kann auch bereits in der Metallverbindung vorliegen, so dass sich der Einsatz zusätzlicher Reduktionsmittel erübrigt, beispielsweise bei Einsatz von Aluminiumisopropoxid, Tetraethylorthosilikat oder Titanisopropoxid als Bindemittel-Rohstoff. Im Nitridierschritt werden die Metallverbindungen zu den entsprechenden Metallnitriden umgesetzt. Es ist auch möglich, dass bei der Nitridierung Oxinitride bzw. Mischungen von Metallnitriden und Oxinitriden entstehen, ebenso kann die Bindephase noch Reste von nicht umgesetzten Oxiden enthalten.

Als Bindephasen-Rohstoffe zur Erzeugung der nitridischen Bindephase der anisotropen nitridgebundenen Bornitrid-Agglomerate können auch Edukte zur Herstellung von Bornitrid eingesetzt werden. Die Edukte zur Herstellung von Bornitrid können eine oxidische Borquelle wie beispielsweise Borsäure ($H_3BO_3$) und Boroxid ($B_2O_3$) in Kombination mit einem Reduktionsmittel wie beispielsweise Kohlenstoff oder Wasserstoff oder organischen Verbindungen wie Polyvinylalkohol (PVA), Polyvinylbutyral (PVB), Melamin und Methan enthalten. Werden gasförmige Stoffe wie beispielsweise Wasserstoff oder Methan als Reduktionsmittel eingesetzt, so werden diese Stoffe der Nitridieratmosphäre zugesetzt. Weiterhin können als Edukte zur Herstellung von Bornitrid im Wesentlichen sauerstofffreie Borquellen wie beispielsweise elementares Bor, Borcarbid und Trimethylborat eingesetzt werden. Im Nitridierschritt werden diese Rohstoffe zu hexagonalem Bornitrid umgesetzt.

Als Bindephasen-Rohstoffe zur Erzeugung der nitridischen Bindephase der anisotropen nitridgebundenen Bornitrid-Agglomerate können weiterhin nitridische Materialien eingesetzt werden, die sich bei der Temperaturbehandlung in der Nitridieratmosphäre verfestigen. Das nitridische Material kann eine Nitrid- und/oder Oxinitrid-Verbindung von Aluminium und Silizium sein, es können auch Titannitrid und die Nitride der Seltenen Erden eingesetzt werden, ebenso wie Verbindungen aus der Gruppe der Sialone. Als Sinterhilfsstoffe können Flüssigphasen eingesetzt werden wie beispielsweise Yttriumoxid, Aluminiumoxid, Magnesiumoxid, Calciumoxid, Siliziumoxid und Oxide der Seltenen Erden.

Es ist auch möglich, Mischungen der verschiedenen aufgeführten Bindephasen-Rohstoffe einzusetzen.

Als Bornitrid-Ausgangspulver zur Erzeugung der anisotropen schuppenförmigen Bornitrid-Agglomerate können hexagonales Bornitrid, amorphes Bornitrid, teilkristallines Bornitrid, sowie Mischungen davon eingesetzt werden.

Die mittlere Partikelgröße $d_{50}$ des eingesetzten Bornitrid-Pulvers kann 0,5 - 50 $\mu$m, vorzugsweise 0,5 - 15 $\mu$m, weiter vorzugsweise 0,5 - 5 $\mu$m betragen. So können beispielsweise hexagonale Bornitrid-Pulver mit einer mittleren Partikelgröße von 1 $\mu$m, 3 $\mu$m, 6 $\mu$m, 9 $\mu$m und 15 $\mu$m eingesetzt werden, aber auch höhere mittlere Partikelgrößen bis zu 50 $\mu$m sind möglich. Ebenso können Mischungen verschiedener hexagonaler Bornitrid-Pulver mit unterschiedlichen Partikelgrößen eingesetzt werden. Die Messung der mittleren Partikelgröße ($d_{50}$) der eingesetzten Bornitrid-Pulver erfolgt üblicherweise mittels Laserbeugung (Naßmessung, Mastersizer 2000, Malvern).

Es können $B_2O_3$-freie Bornitrid-Pulver sowie Bornitrid-Pulver mit geringeren $B_2O_3$-Gehalten von bis zu 0,5 Gew.-%, aber auch mit höheren $B_2O_3$-Gehalten von bis zu 10 Gew.-% und mehr eingesetzt werden. Es ist auch möglich, Mischungen aus pulverförmigem oder granuliertem Bornitrid einzusetzen. Die Bindephasen-Rohstoffe können in fester oder flüssiger bzw. pastöser Form vorliegen.

Die Vermischung von Bornitrid-Ausgangspulver und Bindephasen-Rohstoffen kann beispielsweise in einer Mischtrommel, in einem V-Mischer, Röhnradmischer, einer Schwingmühle oder einem Eirichmischer erfolgen. Die Homogenität kann in einem folgenden Mahlschritt (z.B. Schlagkreuzmühle, Trommelmühle, Rührwerkskugelmühle) weiter erhöht werden. Die Pulvermischung kann trocken oder angefeuchtet sein. Der Zusatz von Presshilfsmitteln und ggf. Gleithilfsmitteln ist ebenfalls möglich. Die Vermischung kann auch nass erfolgen, beispielsweise wenn die anschließende Herstellung der Granulate über Sprühtrocknen oder Aufbaugranulation erfolgt.

Das zu schuppenförmigen Agglomeraten kompaktierte Material wird anschließend einer Hochtemperaturglühung in einer Nitridieratmosphäre unterzogen, bei Temperaturen von mindestens 1600°C, vorzugsweise von mindestens 1800°C. Die Nitridieratmosphäre umfasst vorzugsweise Stickstoff und/oder Ammoniak. Vorzugsweise enthält die Nitridieratmosphäre zusätzlich Argon. Nach Erreichen der Maximaltemperatur kann eine Haltezeit von bis zu mehreren Stunden oder Tagen eingelegt werden. Die Temperaturbehandlung kann in einem kontinuierlichen oder in einem Batch-Verfahren durchgeführt werden.

Durch die Temperaturbehandlung in der Nitridieratmosphäre entsteht eine nitridische Bindephase als Sekundärphase, die die Bornitrid-Primärpartikel miteinander verbindet. Durch den Nitridierschritt kann der Kristallisationsgrad der Primärpartikel zunehmen, was mit einem Primärpartikelwachstum verbunden ist.

Der Rest an bei der Nitridierung nicht umgesetzten Rohstoffen in der Bindephase in den anisotropen nitridgebundenen Bornitrid-Mischagglomeraten beträgt bevorzugt ≤ 10 %, weiter bevorzugt ≤ 5 %, weiter bevorzugt ≤ 3 % und besonders bevorzugt ≤ 2 %. Die Verunreinigung mit Sauerstoff beträgt bevorzugt ≤ 10%, weiter bevorzugt ≤ 5 %, weiter bevorzugt ≤ 2 % und besonders bevorzugt ≤ 1 %.

Das zu schuppenförmigen Agglomeraten kompaktierte Material wird vor der Hochtemperaturbehandlung vorzugsweise noch einer Temperaturbehandlung bei einer Temperatur von mindestens 700 °C in einer Nitridieratmosphäre unterzogen, wobei die Temperatur dieser ersten Temperaturbehandlung unterhalb der Temperatur der Hochtemperaturbehandlung liegt. Die Nitridieratmosphäre dieser Vornitridierung umfasst vorzugsweise Stickstoff und/oder Ammoniak. Vorzugsweise enthält die Nitridieratmosphäre zusätzlich Argon.

Mit steigender Temperatur und Dauer bei der Temperaturbehandlung nimmt der Kristallisationsgrad der in den schuppenförmigen Bornitrid-Mischagglomeraten enthaltenen Bornitrid-Primärpartikel zu, und der Sauerstoffgehalt und die spezifische Oberfläche der enthaltenen Bornitrid-Primärpartikel nehmen ab.

Zur Erreichung der Zielagglomeratgröße der schuppenförmigen Bornitrid-Agglomerate können übliche Schritte wie Sieben, Siebbrechen und Sichten eingesetzt werden. Gegebenenfalls enthaltener Feinanteil kann als erstes entfernt werden. Alternativ zum Sieben kann die definierte Zerkleinerung der Agglomerate auch über Siebreiben, Sichtermühlen, strukturierte Walzenbrecher und Schneidräder erfolgen. Auch eine Mahlung beispielsweise in einer Kugelmühle ist möglich. Die mehrere Millimeter bis mehrere Zentimeter großen Agglomerate werden in einem weiteren Prozessschritt auf definierte Agglomeratgrößen verarbeitet. Hierzu können beispielsweise handelsübliche Siebe unterschiedlicher Siebweite und Siebhilfen auf einem Rüttelsieb verwendet werden. Ein mehrstufiger Sieb-/Siebzerkleinerungsprozess hat sich als vorteilhaft erwiesen.

Die anisotropen schuppenförmigen Bornitrid-Agglomerate können im Anschluss an ihre Herstellung noch weiteren Behandlungen unterzogen werden. Dabei können beispielsweise eine oder mehrere der folgenden möglichen derartigen Behandlungen durchgeführt werden:

- eine Wasserdampfbehandlung

- eine Oberflächenmodifizierung mit Silanen, Titanaten oder anderen metallorgani- schen Verbindungen, entweder bei Raumtemperatur oder unter Temperatureinwirkung und mit Träger- oder Reaktionsgasen. Diese Oberflächenmodifizierung erhöht im Fall der nitridgebundenen schuppenförmigen Agglomerate auch die Hydrolysebeständigkeit der nitridischen Bindephase.

- eine Oberflächenmodifizierung mit Polymeren, beispielsweise mit Polyethylenglykol (PEG), Polyvinylalkohol (PVA), Polyvinylbutyral (PVB), Polyvinylpyrroldion (PVP), Copolymeren, Acrylaten, Ölen oder Carbonsäuren

- eine Infiltration mit Sol-Gel-Systemen, beispielsweise mit Böhmitsol oder $SiO_2$-Sol, oder mit wasserlöslichen Gläsern oder Nanopartikeln oder oberflächenmodifizierten Nanopartikeln oder Mischungen daraus.

- eine Infiltration mit wasser- oder ethanollöslichen Polymeren. Die Bornitrid-Agglomerate können mit Harzen, wie beispielsweise Silikon-, Epoxy- oder Polyurethan-Harzen infiltriert werden und das Harz mit Härter oder temperaturhärtend vor oder während der Compoundierung aushärten.

- im Fall der nitridgebundenen schuppenförmigen Agglomerate eine Temperaturbehandlung unter Sauerstoff, die zur oberflächlichen Oxidation der anisotropen nitridgebundenen Bornitrid-Agglomerate führt. So können beispielsweise durch eine oberhalb von 500 °C durchgeführte Oxidation an Luft von Agglomeraten mit Titannitrid (TiN) enthaltender Bindephase Agglomerate mit oberflächlichem Titandioxid (TiO$_2$) hergestellt werden, bei einer Siliziumnitrid (Si$_3$N$_4$) enthaltenden Bindephase kann oberflächliches Siliziumdioxid (SiO$_2$) und bei einer Aluminiumnitrid (AlN) enthaltenden Bindephase kann oberflächliches Aluminiumoxid (Al$_2$O$_3$) erzeugt werden. Für anisotrope nitridgebundene Bornitrid-Agglomerate enthaltend AlN als Bindephase kann eine Temperaturbehandlung an Luft durchgeführt werden, bevorzugt bei Temperaturen von 500 °C und höher, weiter bevorzugt bei Temperaturen zwischen 700 °C und 1200°C und insbesondere bevorzugt bei Temperaturen zwischen 700 °C und 1000 °C.

Die aufgeführten Oberflächenbehandlungen können auch für Gemische von anisotropen nitridgebundenen Bornitrid-Agglomeraten mit anderen Bornitrid-Füllstoffen wie beispielsweise Bornitrid-Primärpartikeln durchgeführt werden.

Es ist auch möglich, mehrere der aufgeführten Behandlungen in beliebiger Reihenfolge zu kombinieren. Die Behandlungen können beispielsweise im Wirbelschichtverfahren durchgeführt werden.

Durch die aufgeführten Behandlungen kann in den erfindungsgemäßen Polymer-Bornitrid-Compounds eine verbesserte Ankopplung der Polymermatrix an die schuppenförmigen Bornitrid-Agglomerate erzielt werden.

Die anisotropen nitridgebundenen Bornitrid-Agglomerate weisen eine ausgezeichnete mechanische Stabilität auf. Die mechanische Stabilität der Bornitrid-Agglomerate ist von Bedeutung, da sie das Abfüllen, den Transport, die Dosierung, die Compoundierung, also die Weiterverarbeitung der Bornitrid-Agglomerate zu Polymer-Bornitrid-Compounds und die anschließende Formgebung über Spritzguß möglichst mit nur geringem Zerfall überstehen müssen. Falls die Bornitrid-Agglomerate beim Compoundieren zerfallen, besteht die Gefahr, dass sich die rheologischen Eigenschaften der Polymer-Bornitrid-Compounds verschlechtern und die Wärmeleitfähigkeit in den aus den Compounds hergestellten Bauteilen insbesondere bei spritzgegossenen dünnen Platten in through-plane-Richtung abnimmt. Dabei besteht die Gefahr, dass die Bornitrid-Agglomerate so weit degradieren, dass die Wärmeleitfähigkeit in through-plane-Richtung so weit sinkt, dass sie auf ein zu unter Verwendung von Bornitrid-Primärpartikeln hergestellten Polymercompounds vergleichbares Niveau abfällt.

Mit den anisotropen schuppenförmigen Bornitrid-Agglomeraten und mit den anisotropen nitridgebundenen Bornitrid-Agglomeraten ist die Wärmeleitfähigkeit in den erfindungsgemäßen Bornitrid-Polymer-Compounds nicht so stark richtungsabhängig wie in unter Verwendung von plättchenförmigen Bornitrid-Primärpartikeln hergestellten Bornitrid-Polymer-Compounds. Die Through-plane-Wärmeleitfähigkeit der mit den anisotropen schuppenförmigen Bornitrid-Agglomeraten und den isotropen nitridgebundenen Bornitrid-Agglomeraten hergestellten erfindungsgemäßen Bornitrid-Polymer-Compounds ist in etwa auf gleichem Niveau, während die In-plane-Wärmeleitfähigkeit der mit den anisotropen schuppenförmigen Bornitrid-Agglomeraten und den anisotropen nitridgebundenen Bornitrid-Agglomeraten hergestellten erfindungsgemäßen Polymer-Bornitrid-Compounds signifikant höher ist als die bei Verwendung der isotropen nitridgebundenen Bornitrid-Agglomerate mit identischer chemischer Zusammensetzung hergestellten erfindungsgemäßen Polymer-Bornitrid-Compounds. Die anisotropen schuppenförmigen Bornitrid-Agglomerate und die anisotropen nitridgebundenen Bornitrid-Agglomerate haben eine so hohe Festigkeit, dass sie den Compoundierprozess mit einer Polymerschmelze in hoher Anzahl und Größe überstehen.

Mit den anisotropen nitridgebundenen Bornitrid-Agglomeraten kann in den erfindungsgemäßen Polymer-Bornitrid-Compounds überraschenderweise bei ansonsten vergleichbaren Verarbeitungsbedingungen die Through-plane-Wärmeleitfähigkeit bei einem Füllgrad von 30 Vol.-% um 50 % und mehr und bei einem Füllgrad von 40 Vol.-% um etwa das Doppelte gegenüber dem Einsatz von nicht agglomeriertem plättchenförmigem Bornitrid gesteigert werden. Besonders überraschend ist, dass diese Steigerungen auch bei schroffer Compoundierung im Doppelschneckenextruder und beim Spritzguß dünner Platten erzielt wurden.

Die isotropen nitridgebundenen Bornitrid-Agglomerate, anisotropen schuppenförmigen Bornitrid-Agglomerate und die schuppenförmigen Bornitrid-Agglomerate mit anorganischer Bindephase sind stabil genug für die Anwendung in der Compoundierung und im Spritzguss von dünnen Platten einer Wandstärke von etwa 2 mm. Bei weiterer Reduzierung der Wandstärke von dünnen Platten, bei denen eine noch höhere Stabilität der Agglomerate erforderlich ist, kann durch die Erhöhung des Anteils an Bindephase in den isotropen nitridgebundenen Bornitrid-Agglomeraten und den schuppenförmigen Bornitrid-Agglomeraten mit anorganischer Bindephase eine Anpassung an die jeweiligen Stabilitätsanforderungen erfolgen.

Auch von Vorteil ist, dass durch die Einstellbarkeit bzw. die Erhöhung der Stabilität der isotropen nitridgebundenen Bornitrid-Agglomerate und der schuppenförmigen Bornitrid-Agglomerate mit anorganischer Bindephase auch Mischungen mit abrasiven Sekundärfüllstoffen möglich sind. In Mischungen von Bornitrid-Agglomeraten mit abrasiven Sekundärfüllstoffen werden herkömmliche Bornitrid-Agglomerate degradiert. Bei den erfindungsgemäß eingesetzten Bornitrid-Agglomeraten ist die Degradation soweit reduziert, dass die vorteilhaften Wärmeleitungseigenschaften, wie etwa das Anisotropieverhältnis, erhalten werden können.

Weiterhin ist von Vorteil, dass insbesondere bei hohen Füllstoffgehalten, bei denen die Schmelzviskosität in der thermoplastischen Verarbeitung hoch ist und damit eine hohe Scherung des Füllstoffs stattfindet, die Stabilität der isotropen nitridgebundenen Bornitrid-Agglomerate und der schuppenförmigen Bornitrid-Agglomerate mit anorganischer Bindephase durch Erhöhung des Bindephasenanteils angepasst werden kann und damit eine Verarbeitung von hohen Füllstoffgehalten oder hohen Gehalten an Füllstoffgemischen ermöglicht wird.

Durch die Einstellbarkeit der Stabilität der isotropen nitridgebundenen Bornitrid-Agglomerate, der anisotropen schuppenförmigen Bornitrid-Agglomerate und der schuppenförmigen Bornitrid-Agglomerate mit anorganischer Bindephase kann ein guter Kompromiss zwischen der Abrasivität des wärmeleitfähigen Füllstoffs und einer ausreichenden Stabilität für die jeweilige Anwendung erreicht werden.

Das erfindungsgemäße Bauteil und Polymer-Bornitrid-Compound kann in einer weiteren bevorzugten Ausführungsform neben den Bornitrid-Agglomeraten als wärmeleitendem Füllstoff auch zusätzlich noch wenigstens einen von Bornitrid verschiedenen, die Wärmeleitfähigkeit erhöhenden Füllstoff enthalten. Diese zusätzlichen Füllstoffe werden im Folgenden auch als Sekundärfüllstoffe bezeichnet.

Die Wärmeleitfähigkeit solcher Sekundärfüllstoffe beträgt üblicherweise $\geq$ 5 W/m*K, vorzugsweise $\geq$ 8 W/m*K.

Der Gesamtanteil an Bornitrid-Agglomeraten und den Sekundärfüllstoffen im erfindungsgemäßen Bauteil und Polymer-Bornitrid-Compound beträgt vorzugsweise wenigstens 20 Vol.-%, weiter vorzugsweise wenigstens 30 Vol.-%, jeweils bezogen auf das Gesamtvolumen des Polymer-Bornitrid-Compounds. Vorzugsweise liegt der Gesamtanteil an Bornitrid-Agglomeraten und Sekundärfüllstoffen im erfindungsgemäßen Bauteil und Polymer-Bornitrid-Compound bei höchstens 70 Vol.-%, weiter vorzugsweise bei höchstens 60 Vol.-%, jeweils bezogen auf das Gesamtvolumen des Polymer-Bornitrid-Compounds. Besonders bevorzugt beträgt der Gesamtanteil an Bornitrid-Agglomeraten und Sekundärfüllstoffen im erfindungsgemäßen Bauteil und Polymer-Bornitrid-Compound höchstens 50 Vol.-%, jeweils bezogen auf das Gesamtvolumen des Polymer-Bornitrid-Compounds.

Als Sekundärfüllstoffe können Metallpulver, vorzugsweise gewählt aus der Gruppe umfassend Aluminium-, Silizium-, Titan-, Kupfer-, Eisen- und Bronzepulver und Mischungen davon, eingesetzt werden.

Es kann auch Kohlenstoff in Form von Graphit, expandiertem Graphit oder Ruß als Sekundärfüllstoff eingesetzt werden, wobei expandierter Graphit besonders bevorzugt ist.

Weiterhin können auch keramische Füllstoffe wie Oxide, Nitride und Carbide als Sekundärfüllstoffe eingesetzt werden, vorzugsweise ausgewählt aus der Gruppe umfassend Aluminiumoxid, Magnesiumoxid, Aluminiumnitrid, Siliziumdioxid, Siliziumcarbid, Siliziumnitrid und Mischungen davon, besonders bevorzugt Aluminiumoxid, Magnesiumoxid und/oder Aluminiumnitrid.

Als Sekundärfüllstoffe können auch mineralische Füllstoffe eingesetzt werden, vorzugsweise ausgewählt aus der Gruppe umfassend Alumosilikate, Aluminiumsilikate, Magnesiumsilikat ($2MgO*SiO_2$), Magnesiumaluminat ($MgO*Al_2O_3$), Brucit (Magnesiumhydroxid, $Mg(OH)_2$), Quarz, Cristobalit und Mischungen davon. Als Alumosilikate bzw. Aluminiumsilikate können beispielsweise Kyanit ($Al_2SiO_5$) und/oder Mullit ($3Al_2O_3*2SiO_2$) eingesetzt werden.

Auch Kombinationen von Sekundärfüllstoffe sind möglich. Eine Kombination von anisotropen nitridgebundenen Bornitrid-Agglomeraten, Alumosilikat und expandiertem Graphit als wärmeleitende Füllstoffe hat sich im erfindungsgemäßen Bauteil und Polymer-Bornitrid-Compound als besonders vorteilhaft erwiesen.

Die Sekundärfüllstoffe liegen bevorzugt partikelförmig vor. Die Sekundärfüllstoff-Partikel können in ihrer Form unregelmäßig, brockig oder sphärisch oder plättchenförmig vorliegen. Der Anteil an plättchenförmigen Sekundärfüllstoffen im erfindungsgemäßen Bauteil und Polymer-Bornitrid-Compound beträgt vorzugsweise nicht mehr als 10 Vol.-%, weiter vorzugsweise nicht mehr als 5 Vol.-%.

Die Sekundärfüllstoffe haben bevorzugt einen Partikeldurchmesser oder Plättchendurchmesser von $\geq$ 0,5 $\mu$m, weiter bevorzugt von $\geq$ 1 $\mu$m, weiter bevorzugt von $\geq$ 2 $\mu$m und besonders bevorzugt von $\geq$ 5 $\mu$m.

Der Sekundärfüllstoff liegt als Pulver vor, bevorzugt als agglomeriertes Pulver. Die Agglomerierung des Sekundärfüllstoffs kann über Walzenkompaktierung oder über Aufbaugranulierung beispielsweise im Eirichmischer erfolgen. Als Granulierungsmittel kann dabei eine PVA-Lösung verwendet werden. Vorzugsweise wird das Sekundärfüllstoffgranulat vor der Dosierung bei der Compoundierung im Extruder mit den Bornitrid-Agglomeraten abgemischt. Vor der Abmischung des Sekundärfüllstoffgranulats mit den Bornitrid-Agglomeraten wird das Sekundärfüllstoffgranulat getrocknet. Die Granulation des Sekundärfüllstoffs unterstützt die gleichmäßige Dosierung bei der Compoundierung.

Vorzugsweise werden bei Verwendung von Füllstoffkombinationen von Bornitrid-Agglomeraten und Sekundärfüllstoffen die isotropen nitridgebundenen Bornitrid-Agglomerate und/oder die anisotropen schuppenförmigen Bornitrid-Agglomerate in Kombination mit Sekundärfüllstoffen eingesetzt. Der Einsatz eines Füllstoffgemischs aus den anisotropen schuppenförmigen Bornitrid-Agglomeraten und Sekundärfüllstoffen ist dabei bevorzugt.

Die Wärmeleitfähigkeit der erfindungsgemäßen Bauteile und Polymer-Bornitrid-Compounds mit Füllstoffkombinationen von Bornitrid-Agglomeraten und Sekundärfüllstoffen ist höher als die von allein unter Verwendung der Sekundärfüllstoffe hergestellten Polymer-Compounds, jeweils bei gleichem Gesamt-Volumenanteil an Füllstoffen.

Bei der Kombination von Bornitrid-Agglomeraten, insbesondere der vorzugsweise eingesetzten anisotropen schuppenförmigen Bornitrid-Agglomerate, mit den Sekundärfüllstoffen zeigt sich überraschenderweise, dass die erzielten Wärmeleitfähigkeitswerte der mit den Füllstoffkombinationen hergestellten erfindungsgemäßen Polymer-Bornitrid-Compounds höher sind als zu erwarten gewesen wäre, wenn man die Wärmeleitfähigkeitswerte für die mit den entsprechenden Anteilen der Bornitrid-Agglomerate und Sekundärfüllstoffe jeweils einzeln gefüllten Polymerwerkstoffe, jeweils abzüglich der Wärmeleitfähigkeit des ungefüllten Basispolymers, addiert. Dies trifft sowohl für die In-plane- als auch für die Through-plane-Wärmeleitfähigkeit zu.

Die erfindungsgemäßen Bauteile und Polymer-Bornitrid-Compounds können neben den Bornitrid-Agglomeraten zusätzlich noch Bornitrid-Primärpartikel enthalten. Bei den unter Verwendung von Füllstoffkombinationen von Bornitrid-Agglomeraten und Sekundärfüllstoffen hergestellten Polymer-Bornitrid-Compounds können ebenfalls zusätzlich noch Bornitrid-Primärpartikel zugesetzt werden. Als Bornitrid-Primärpartikel können dabei Bornitrid-Pulver eingesetzt werden, aber auch wenig stabile Bornitrid-Agglomerate wie beispielsweise sprühgetrocknete Bornitrid-Agglomerate, die beim Compoundieren weitgehend oder ganz zu Primärpartikeln degradiert werden. Der Anteil an zusätzlichen Bornitrid-Primärpartikeln im erfindungsgemäßen Polymer-Bornitrid-Compound beträgt vorzugsweise ≤ 20 Vol.-%, besonders bevorzugt ≤ 10 Vol.-%.

Die erfindungsgemäßen Bauteile und Polymer-Bornitrid-Compounds können neben den Bornitrid-Agglomeraten bzw. neben den Bornitrid-Agglomeraten und Sekundärfüllstoffen mit einer Wärmeleitfähigkeit von ≥ 5 W/m*K auch weitere von Bornitrid verschiedene Füllstoffe mit einer geringeren Wärmeleitfähigkeit von < 5 W/m*K wie beispielsweise Talk enthalten.

Die erfindungsgemäßen Bauteile und Polymer-Bornitrid-Compounds können neben den wärmeleitenden Füllstoffen auch noch zusätzliche Additive und Füllstoffe enthalten, die andere Funktionen wie etwa die Anpassung der mechanischen oder elektrischen Eigenschaften oder des Wärmeausdehnungskoeffizienten übernehmen. Die Füllstoffe können dabei beispielsweise als brockige, sphärische, plättchenförmige oder als Partikel mit regelloser Morphologie vorliegen.

Zur Herstellung der erfindungsgemäßen Bauteile und Polymer-Bornitrid-Compounds können auch Mischungen unterschiedlicher Fraktionen von nitridgebundenen isotropen Bornitrid-Agglomeraten oder von anisotropen schuppenförmigen Bornitrid-Agglomeraten eingesetzt werden. Auch Mischungen von nitridgebundenen isotropen Bornitrid-Agglomeraten und von anisotropen schuppenförmigen Bornitrid-Agglomeraten sind möglich.

Die erfindungsgemäßen Polymer-Bornitrid-Compounds können durch Compoundierung mit allen gängigen Compoundieraggregaten hergestellt werden. Hierzu gehören unter anderem Einschneckenextruder, Doppelschneckenextruder, tangierend oder dichtkämmend, gleich oder gegenläufig, Planetenwalzenextruder, Nutbuchsenextruder, Stiftextruder, Kalandrieren, Buss Ko-Kneter, Scherwalzenextruder und Spritzgussmaschinen. Die Compoundierung im Doppelschneckenextruder ist bevorzugt.

Das zur Compoundierung eingesetzte Polymer kann in Pulverform oder als Granulat vorliegen. Das Polymer kann mit den Bornitrid-Agglomeraten oder den Bornitrid-Agglomeraten und weiteren Füllstoffen trocken vorgemischt werden, bevor die Mischung einem Compoundieraggregat zugeführt wird. Alternativ dazu kann die Zugabe der Bornitrid-Agglomerate und gegebenenfalls weiterer Füllstoffe über Seitendosierungen in die Polymerschmelze erfolgen, ohne dass die Füllstoffe zuvor mit dem Polymer vorgemischt werden. Weiterhin kann zunächst ein Masterbatch, also ein Polymercompound mit einem Füllstoffgehalt, der höher ist als in der Endanwendung, hergestellt werden, welches anschließend mit dem Polymer beispielsweise in einem Doppelschneckenextruder homogenisiert wird.

Nach der Homogenisierung im Compoundieraggregat wird die gefüllte Polymerschmelze granuliert. Die Granulation des Polymer-Bornitrid-Compounds kann beispielsweise durch Stranggranulation, Unterwassergranulation, Heißabschlag oder Kaltabschlag erfolgen. Auch eine Kombination der Verfahren zur Verarbeitung des Compounds ist möglich. Das erhaltene Polymer-Bornitrid-Compound in Granulatform kann über Formgebungsverfahren wie beispielsweise Spritzguß zu Bauteilen weiterverarbeitet werden.

Die erfindungsgemäßen Bauteile werden durch thermoplastische Verarbeitung der Polymer-Bornitrid-Compounds hergestellt. Die Polymer-Bornitrid-Compounds können durch Spritzgießen, Extrudieren, Kalandrieren oder Spritzprägen in jede beliebige Form gebracht werden, vorzugsweise durch Spritzgießen oder Extrudieren. Die Verarbeitung über Spritzguß ist besonders bevorzugt. Hierzu kann beispielsweise das Compound-Granulat in einer hydraulisch oder elektromechanisch angetriebenen Plastifiziereinheit aufgeschmolzen und, gegebenenfalls noch mit weiteren zusätzlichen Füllstoffen oder Polymeren, bis zum Austritt aus der Düse homogenisiert werden. Anschließend kann die Schmelze während der Einspritzphase in das geschlossene Werkzeug einer Spritzgußanlage eingespritzt werden. Hierbei können sowohl klassische Spritzgießwerkzeuge als auch Werkzeuge mit Heißkanalsystemen zum Einsatz kommen. Nach vollständiger Füllung der Kavität kann der Nachdruck bis zur vollständigen Erstarrung des Bauteils konstant gehalten werden. Nach Ablauf der Kühlzeit kann das Werkzeug geöffnet und das Bauteil ausgestoßen werden. Das Auswerfen kann wiederum über die Auswerfereinheit der Spritzgussmaschine oder über andere Entnahmemöglichkeiten wie Roboterarme erfolgen.

Bei der thermoplastischen Verarbeitung, d.h. während der Herstellung des erfindungsgemäßen Polymer-Bornitrid-Compounds oder während des Spritzgusses des erfindungsgemäßen Bauteils, kann ein Anteil der nitridgebundenen isotropen Bornitrid-Agglomerate durch Scherung während der Compoundierung oder während des Spritzgusses zu Primärpartikeln oder Agglomeratfragmenten degradieren, ohne dass die vorteilhaften Eigenschaften des Compounds verloren gehen.

Die erfindungsgemäßen Bauteile werden zur Wärmeabfuhr von zu kühlenden Komponenten oder Baugruppen verwendet, vorzugsweise von elektronischen Komponenten oder Baugruppen.

Die erfindungsgemäßen Bauteile enthalten dünnwandige Bestandteile, durch die Wärme von zu kühlenden Komponenten oder Baugruppen abgeführt werden kann. Die dünnwandigen Teile des Bauteils haben eine Dicke von ≤ 3 mm, vorzugsweise von ≤ 2 mm. Das erfindungsgemäße Bauteil kann beispielsweise als dünne Platte einer Stärke von ≤ 3 mm, vorzugsweise von ≤ 2 mm vorliegen, die beispielsweise mittels Spritzguß oder Extrusion als Formgebungsmethode hergestellt werden kann. Die erfindungsgemäßen Bauteile können elektrisch leitfähig oder elektrisch isolierend sein. Es ist auch möglich, während der Formgebung oder in einem nachfolgenden Verarbeitungsschritt ein Laminat aus leitfähigen und nicht leitfähigen Schichten in Form einer dünnen Platte zu erzeugen, wobei zumindest die elektrisch isolierende Schicht der dünnen Platte unter Verwendung des erfindungsgemäßen Polymer-Bornitrid-Compounds hergestellt wurde.

Das erfindungsgemäße Bauteil kann nach der beispielsweise mittels Spritzguß erfolgten Formgebung mit einer Beschichtung versehen werden, beispielsweise kann eine Metallisierung durchgeführt werden. Es können auch Leiterbahnen appliziert werden.

Das erfindungsgemäße Bauteil kann als ebene oder geschwungene Platte mit einheitlicher oder uneinheitlicher Wandstärke vorliegen. Die Oberfläche des erfindungsgemäßen Bauteils kann eben oder strukturiert vorliegen.

Das erfindungsgemäße Bauteil kann als Trägerplatte für Elektronikkomponenten dienen, oder Wärme von einem Bauteil auf ein anderes übertragen. Das erfindungsgemäße Bauteil kann auch als Folie oder als dünnwandiges Rohr vorliegen.

Das erfindungsgemäße Bauteil kann auch als dünnwandiger wesentlicher Bestandteil eines überwiegend dünnwandigen Gehäuses, einer Halterung oder eines Verbindungselements oder eines Rohres vorliegen. Weiterhin kann das erfindungsgemäße Bauteil als Kühlrippe als Bestandteil eines Kühlkörpers, eines Gehäuses, einer Halterung, eines Verbindungselements oder Rohrs vorliegen, wobei die Halterung beispielsweise ein Lampensockel sein kann. Das erfindungsgemäße Bauteil kann in komplexeren Bauteilen als Platte Bestandteil eines Plattenstapels sein, wobei die Platte im Plattenstapel als Kühlrippe dienen kann.

Die Erfindung und bevorzugte Ausführungsformen sollen durch nachfolgende Punkte erläutert werden.

1. Bauteil mit einer Wandstärke von höchstens 3 mm an zumindest einem Teil des Bauteils, wobei das Bauteil durch thermoplastische Verarbeitung eines Polymer-Bornitrid-Compounds hergestellt wird, und wobei das Polymer-Bornitrid-Compound einen thermoplastisch verarbeitbaren Polymerwerkstoff und einen wärmeleitenden Füllstoff umfasst, und wobei der Füllstoff Bornitrid-Agglomerate umfasst.

2. Bauteil gemäß Punkt 1, wobei die Through-plane-Wärmeleitfähigkeit des Bauteils wenigstens 1 W/m*K beträgt, vorzugsweise wenigstens 1,2 W/m*K, weiter vorzugsweise wenigstens 1,5 W/m*K und insbesondere bevorzugt wenigstens 1,8 W/m*K, wobei die Wärmeleitfähigkeit gemäß DIN EN ISO 22007-4 an scheibenförmigen spritzgegossenen Proben einer Dicke von 2 mm gemessen wird.

3. Bauteil gemäß Punkt 1 oder 2, wobei die In-plane-Wärmeleitfähigkeit des Bauteils wenigstens 1,5 W/m*K beträgt, vorzugsweise wenigstens 1,8 W/m*K, weiter vorzugsweise wenigstens 2,2 W/m*K und insbesondere bevorzugt wenigstens 2,7 W/m*K, wobei die Wärmeleitfähigkeit gemäß DIN EN ISO 22007-4 an scheibenförmigen spritzgegossenen Proben einer Dicke von 2 mm gemessen wird.

4. Bauteil gemäß Punkt 2 und/oder 3, wobei das Anisotropieverhältnis der In-plane-Wärmeleitfähigkeit zur Through-plane-Wärmeleitfähigkeit wenigstens 1,5 und höchstens 4, vorzugsweise wenigstens 1,5 und höchstens 3,5, weiter vorzugsweise wenigstens 1,5 und höchstens 3,0 und insbesondere bevorzugt wenigstens 1,5 und höchstens 2,5 beträgt.

5. Bauteil gemäß einem der Punkte 1 bis 4, wobei die Through-plane-Wärmeleitfähigkeit des Bauteils um wenigstens 0,8 W/m*K, vorzugsweise um wenigstens 1 W/m*K, weiter vorzugsweise um wenigstens 1,3 W/m*K und insbesondere bevorzugt um wenigstens 1,6 W/m*K höher ist als die Wärmeleitfähigkeit des Polymerwerkstoffs ohne wärmeleitenden Füllstoff, wobei die Wärmeleitfähigkeit gemäß DIN EN ISO 22007-4 an scheibenförmigen spritzgegossenen Proben einer Dicke von 2 mm in Through-plane-Richtung gemessen wird.

6. Bauteil gemäß einem der Punkte 1 bis 5, wobei die In-plane-Wärmeleitfähigkeit des Bauteils um wenigstens 1,3 W/m*K, vorzugsweise um wenigstens 1,6 W/m*K, weiter vorzugsweise um wenigstens 2,0 W/m*K und insbesondere bevorzugt um wenigstens 2,5 W/m*K höher ist als die Wärmeleitfähigkeit des Polymerwerkstoffs ohne wärmeleitenden Füllstoff, wobei die Wärmeleitfähigkeit gemäß DIN EN ISO 22007-4 an scheibenförmigen spritzgegossenen Proben einer Dicke von 2 mm in In-plane-Richtung gemessen wird.

7. Bauteil gemäß einem der Punkte 1 bis 6, wobei der Anteil an Bornitrid-Agglomeraten wenigstens 5 Vol.-%, vorzugsweise wenigstens 10 Vol.-%, weiter vorzugsweise wenigstens 20 Vol.-% und besonders bevorzugt wenigstens 30 Vol.-% beträgt, bezogen auf das Gesamtvolumen des Polymer-Bornitrid-Compounds.

8. Bauteil gemäß einem der Punkte 1 bis 7, wobei der Anteil an Bornitrid-Agglomeraten höchstens 70 Vol.-%, vorzugsweise höchstens 60 Vol.-% und besonders bevorzugt höchstens 50 Vol.-% beträgt, bezogen auf das Gesamtvolumen des Polymer-Bornitrid-Compounds.

9. Bauteil gemäß einem der Punkte 1 bis 8, wobei der Polymerwerkstoff ausgewählt ist aus der Gruppe bestehend aus den thermoplastischen Werkstoffen Polyamid (PA), Polyphenylensulfid (PPS), Polycarbonat (PC), Polypropylen (PP), thermoplastischen Elastomeren (TPE), thermoplastischen Polyurethan-Elastomeren (TPU), Polyetheretherketonen (PEEK), flüssigkristallinen Polymeren (LCP), Polyoxymethylen (POM) und duroplastische Formmassen, die thermoplastisch verarbeitet werden können.

10. Bauteil gemäß einem der Punkte 1 bis 9, wobei die Bornitrid-Agglomerate plättchenförmige hexagonale Bornitrid-Primärpartikel umfassen, welche miteinander mittels einer anorganischen Bindephase, welche wenigstens ein Nitrid und/oder Oxinitrid umfasst, verbunden sind.

11. Bauteil gemäß Punkt 10, wobei die anorganische Bindephase der Bornitrid-Agglomerate Aluminiumnitrid (AlN), Aluminiumoxinitrid, Titannitrid (TiN), Siliziumnitrid ($Si_3N_4$) oder/und Bornitrid (BN), vorzugsweise Aluminiumnitrid, Aluminiumoxinitrid, Titannitrid und/oder Siliziumnitrid, weiter vorzugsweise Aluminiumnitrid und/oder Aluminiumoxinitrid, umfasst.

12. Bauteil gemäß Punkt 10 oder 11, wobei die anorganische Bindephase der Bornitrid-Agglomerate Aluminiumnitrid umfasst.

13. Bauteil gemäß einem der Punkte 10 bis 12, wobei die Bornitrid-Agglomerate einen Bindephasenanteil von wenigstens 1 Gew.-%, vorzugsweise von wenigstens 5 Gew.-%, weiter vorzugsweise von wenigstens 10 Gew.-%, weiter vorzugsweise von wenigstens 20 Gew.-% und insbesondere bevorzugt von wenigstens 30 Gew.-% aufweisen, jeweils bezogen auf die Gesamtmenge der Bornitrid-Agglomerate.

14. Bauteil gemäß einem der Punkte 10 bis 13, wobei der mittlere Agglomeratdurchmesser ($d_{50}$) der Bornitrid-Agglomerate $\leq$ 1000 $\mu$m, bevorzugt $\leq$ 500 $\mu$m, weiter bevorzugt $\leq$ 400 $\mu$m, weiter bevorzugt $\leq$ 300 $\mu$m und insbesondere bevorzugt $\leq$ 200 $\mu$m beträgt.

15. Bauteil gemäß einem der Punkte 10 bis 14, wobei das Aspektverhältnis der Bornitrid-Agglomerate 1,0 bis 1,8, vorzugsweise 1,0 bis 1,5 beträgt.

16. Bauteil gemäß einem der Punkte 1 bis 15, wobei die Bornitrid-Agglomerate plättchenförmige hexagonale Bornitrid-Primärpartikel umfassen, welche miteinander zu schuppenförmig ausgebildeten Bornitrid-Agglomeraten agglomeriert sind.

17. Bauteil gemäß Punkt 16, wobei der Texturindex der schuppenförmigen Bornitrid-Agglomerate größer als 2,0 ist und vorzugsweise 2,5 und mehr, weiter vorzugsweise 3,0 und mehr, besonders bevorzugt 3,5 und mehr beträgt.

18. Bauteil gemäß Punkt 16 oder 17, wobei der mittlere Agglomeratdurchmesser ($d_{50}$) der schuppenförmigen Bornitrid-Agglomerate $\leq$ 1000 $\mu$m, vorzugsweise $\leq$ 500 $\mu$m, weiter vorzugsweise $\leq$ 300 $\mu$m und insbesondere bevorzugt $\leq$ 200 $\mu$m beträgt.

19. Bauteil gemäß einem der Punkte 16 bis 18, wobei die Dicke der schuppenförmigen Bornitrid-Agglomerate $\leq$ 500 $\mu$m, bevorzugt $\leq$ 200 $\mu$m, weiter bevorzugt $\leq$ 100 $\mu$m, weiter bevorzugt $\leq$ 70 $\mu$m, weiter bevorzugt $\leq$ 50 $\mu$m und insbesondere bevorzugt $\leq$ 35 $\mu$m beträgt.

20. Bauteil gemäß einem der Punkte 16 bis 19, wobei das Aspektverhältnis der schuppenförmigen Bornitrid-Agglomerate größer als 1 ist und vorzugsweise 2 und mehr, weiter vorzugsweise 3 und mehr, weiter vorzugsweise 5 und mehr und besonders bevorzugt 10 und mehr beträgt.

21. Bauteil gemäß einem der Punkte 16 bis 20, wobei die schuppenförmigen Bornitrid-Agglomerate eine anorganische Bindephase umfassen.

22. Bauteil gemäß Punkt 21, wobei die schuppenförmigen Bornitrid-Agglomerate einen Bindephasen-Anteil von wenigstens 1%, vorzugsweise von wenigstens 5%, weiter vorzugsweise von wenigstens 10%, weiter vorzugsweise von wenigstens 20% und insbesondere vorzugsweise von wenigstens 30% aufweisen, jeweils bezogen auf die Gesamtmenge der schuppenförmigen Bornitrid-Agglomerate.

23. Bauteil gemäß Punkt 21 oder 22, wobei die Bindephase Aluminiumnitrid (AlN), Aluminiumoxinitrid, Titannitrid (TiN), Siliziumnitrid ($Si_3N_4$) oder/und Bornitrid (BN), vorzugsweise Aluminiumnitrid, Aluminiumoxinitrid, Titannitrid und/oder Siliziumnitrid, weiter vorzugsweise Aluminiumnitrid und/oder Aluminiumoxinitrid enthält.

24. Bauteil gemäß Punkt 23, wobei die Bindephase Aluminiumnitrid (AlN) enthält.

25. Bauteil gemäß einem der Punkte 1 bis 24, umfassend wenigstens einen von Bornitrid verschiedenen, die Wärmeleitfähigkeit erhöhenden Füllstoff.

26. Bauteil gemäß Punkt 25, wobei der von Bornitrid verschiedene Füllstoff ein Metallpulver ist, vorzugsweise gewählt aus der Gruppe umfassend Aluminium-, Silizium-,Titan-, Kupfer-, Eisen- und Bronzepulver, und Mischungen davon.

27. Bauteil gemäß Punkt 25, wobei der von Bornitrid verschiedene Füllstoff Kohlenstoff in Form von Graphit, expandiertem Graphit oder Ruß ist, wobei expandierter Graphit besonders bevorzugt ist.

28. Bauteil gemäß Punkt 25, wobei der von Bornitrid verschiedene Füllstoff ein Oxid, Nitrid oder Carbid ist, vorzugsweise ausgewählt aus der Gruppe umfassend Aluminiumoxid, Magnesiumoxid, Aluminiumnitrid, Siliziumdioxid, Siliziumcarbid, Siliziumnitrid und Mischungen davon, besonders bevorzugt Aluminiumoxid, Magnesiumoxid und/oder Aluminiumnitrid.

29. Bauteil gemäß Punkt 25, wobei der von Bornitrid verschiedene Füllstoff ein mineralischer Füllstoff ist und vorzugsweise ausgewählt ist aus der Gruppe umfassend Alumosilikate, Aluminiumsilikate, Magnesiumsilikat ($2MgO^*SiO_2$), Magnesiumaluminat ($MgO^*Al_2O_3$), Brucit (Magnesiumhydroxid, $Mg(OH)_2$), Quarz, Cristobalit und Mischungen davon.

30. Bauteil gemäß einem der Punkte 25 bis 29, wobei der Gesamtanteil an Bornitrid-Agglomeraten und den von Bornitrid verschiedenen wärmeleitenden Füllstoffen wenigstens 20 Vol.-% beträgt, vorzugsweise wenigstens 30 Vol.-%, jeweils bezogen auf das Gesamtvolumen des Polymer-Bornitrid-Compounds.

31. Bauteil gemäß einem der Punkte 25 bis 30, wobei der Gesamtanteil an Bornitrid-Agglomeraten und den von Bornitrid verschiedenen wärmeleitenden Füllstoffen höchstens 70 Vol.-%, bevorzugt höchstens 60 Vol.-% und besonders bevorzugt höchstens 50 Vol.-% beträgt, jeweils bezogen auf das Gesamtvolumen des Polymer-Bornitrid-Compounds.

32. Bauteil gemäß einem der Punkte 1 bis 31, wobei die Wandstärke des Bauteils an zumindest einem Teil des Bauteils höchstens 2 mm beträgt.

33. Polymer-Bornitrid-Compound zur Herstellung eines Bauteils gemäß einem der Punkte 1 bis 32, wobei das Polymer-Bornitrid-Compound einen thermoplastisch verarbeitbaren Polymerwerkstoff und einen wärmeleitenden Füllstoff umfasst, wobei der Füllstoff Bornitrid-Agglomerate umfasst.

34. Verwendung eines Bauteils nach einem der Punkte 1 bis 32 zur Wärmeabfuhr von zu kühlenden Komponenten oder Baugruppen, vorzugsweise von elektronischen Komponenten oder Baugruppen.

Beispiele und Vergleichsbeispiele

Für die Compoundierung der Polymere mit den Bornitrid-Agglomeraten oder Füllstoffgemischen wird ein Doppelschneckenextruder ZSE 18 maxx (Leistritz, Nürnberg, Deutschland) verwendet. Es werden zwei verschiedene Schneckenkonfigurationen eingesetzt, zum einen die vergleichsweise schroffe Schneckenkonfiguration "standard" mit zwei Mischelementen und sechs Knetblöcken (Schneckenkonfiguration 1), zum anderen die schonendere Schneckenkonfiguration "soft" mit drei Mischelementen und ohne Knetblock (Schneckenkonfiguration 2). Als Schneckendrehzahlen werden 300 U/min sowie 900 U/min eingestellt. Als Polymer wird ein Polyamid PA 6 (Schulamid® 6 NV 12) verwendet. Bei der Compoundierung wird die Polymerschmelze auf 265°C temperiert. Der Durchsatz wird in allen Versuchen auf 6 kg/h eingestellt. Das Polymer wird über die Hauptdosierung zugeführt. Der Füllstoff (Bornitrid-Agglomerate) oder das Füllstoffgemisch (Bornitrid-Agglomerate und Sekundärfüllstoffe) wird über eine Seitendosierung zugeführt.

Die füllstoffhaltige Polymerschmelze wird durch zwei 3 mm Düsen ausgetragen, in Form von Strängen abgekühlt und in einem Häcksler zu Granulat verarbeitet. Aus den Granulaten werden über Spritzgießen 2 mm dünnen Platten mit einer Grundfläche von 80x80 mm$^2$ hergestellt.

Beispiel 1:

Beispiel 1 a): Herstellung von Bornitrid-Hybrid-Flakes (anisotrope schuppenförmige nitridgebundene Bornitrid-Agglomerate)

Es werden 4000 g Aluminiumpaste STAPA ALUPOR SK I-NE/70 (Fa. Eckart, Hartenstein, Deutschland) und 7000 g Bornitrid-Pulver BORONID® S1-SF (ESK Ceramics GmbH & Co. KG, Deutschland; mittlere Partikelgröße $d_{50}$ = 3 $\mu$m, gemessen mittels Laserbeugung (Mastersizer 2000, Malvern, Naßmessung)) in einem PE-Fass auf dem Rollenbock mit Mahlkugeln für 20 Stunden homogenisiert. Das Pulvergemisch wird über eine gravimetrische Dosierung mit 8 kg/h in einen Walzenkompaktierer RC 250*250 (Powtec, Remscheid, Deutschland) dosiert. Der Walzenkompaktierer ist so modifiziert, dass die glatten Edelstahlwalzen ohne Produktaufgabe auf Kontakt laufen. Es wird eine Anpresskraft von 75 kN auf die Walzen ausgeübt, was 3 kN/cm Walzspaltlänge entspricht und eine Walzendrehzahl von 20 U/min eingestellt. Es entstehen Bornitrid-Hybrid-Flakes mit einer Dicke von 30 $\mu$m und bis zu mehreren Zentimetern Durchmesser. An den Walzen klebende grüne (d.h. kompaktierte, aber noch nicht temperaturbehandelte) Bornitrid-Hybrid-Flakes werden durch einen Schaber abgezogen. Der Feinanteil < 200 $\mu$m wird nach der Kompaktierung abgesiebt und in der nächsten Rohstoffhomogenisierung mit 4000 g Aluminiumpaste und 7000 g Bornitrid-Pulver S1 im PE-Fass zugeführt. Der Vorgang wird so lange wiederholt, bis in der Summe 55 kg Bornitrid-Hybrid-Flakes erzeugt wurden. Die Bornitrid-Hybrid-Flakes werden unter Luftabschluss in einer Atmosphäre aus 80 % Stickstoff und 20 % Argon bei 300 °C entbindert und der Aluminiumanteil in den Bornitrid-Hybrid-Flakes wird bei 800 °C in einer Atmosphäre aus 80 % Stickstoff und 20 % Argon während einer Haltezeit von 5 Stunden weitestgehend in AlN umgewandelt. Anschließend erfolgt eine Hochtemperaturglühung bei 1950 °C für 2 Stunden in einer Atmosphäre von 80 % Stickstoff und 20 % Argon.

Nach der Glühung beträgt der Aluminiumanteil insgesamt in den Bornitrid-Hybrid-Flakes 24,6 Gew.-% gemessen mittels alkalischem Schmelzaufschluss und ICP-OES (Arcos, Spectro, Kleve, Deutschland). Rechnerisch ergibt sich aus dem Aluminiumanteil ein Aluminiumnitridanteil im Bornitrid-Hybrid-Flake von 37 Gew.-%.

Der Aluminium-frei-Gehalt beträgt 0,35 Gew.-%. Der Aluminium- frei-Gehalt wird gemessen mittels Extraktion mit 2-molarer HCl für 16 h bei Raumtemperatur. An dem klaren Überstand aus der Extraktion wird der Aluminiumgehalt der Lösung mit ICP-OES (Arcos, Spectro, Kleve, Deutschland) bestimmt. Der Kohlenstoffgehalt beträgt 0,05%, er wird indirekt gemessen mittels Verbrennung in Sauerstoff im Induktionsofen und anschließender IR-Messung von $CO_2$ (CS200, LECO, Mönchengladbach, Deutschland).

Die spezifische Oberfläche wird gemäß ISO 18757 mittels Stickstoffadsorption und der 5-Punkt-BET-Methode an dem Gerät SA3100 (Coulter, USA) gemessen. Die Probe wird vor der Messung bei 300°C, 360 min in Vakuum ausgeheizt. Die spezifische Oberfläche beträgt 6,8 m$^2$/g.

Der Sauerstoffgehalt wird indirekt mittels Trägergasheißextraktion gemessen, wobei der Sauerstoff aus der Probe mit Kohlenstoff umgesetzt wird und der Gehalt an entstehendem $CO_2$ mit IR-Spektroskopie (TCH 600, LECO, Mönchengladbach, Deutschland) ermittelt wird. Der Sauerstoffgehalt beträgt 0,15%.

Röntgenographisch können nur die Phasen Bornitrid und Aluminiumnitrid nachgewiesen werden.

Die Bornitrid-Hybrid-Flakes werden in einem Schwingsieb mit Gummikugeln siebgebrochen. Dabei werden Siebe in der Reihenfolge 5 mm, 2 mm, 1 mm, 500 $\mu$m eingesetzt.

Die erhaltenen Bornitrid-Hybrid-Flakes in der Siebfraktion < 500 $\mu$m haben eine mittlere Partikelgröße ($d_{50}$) von 192 $\mu$m, gemessen mittels Laserbeugung (Mastersizer 2000, Malvern, Naßmessung). Die Dicke der Bornitrid-Hybrid-Flakes beträgt 30 $\mu$m. Die Dicke wird mit einer Präzisions-Digital-Messuhr ermittelt.

Der Texturindex, gemessen an einer Schüttung der Bornitrid-Hybrid-Flakes, beträgt 20,6.

Aus den hergestellten Bornitrid-Hybrid-Flakes wird eine Fraktion < 200 $\mu$m gebrochen und der Feinanteil < 100 $\mu$m durch Siebung abgetrennt. An der so erhaltenen Siebfraktion 100 - 200 $\mu$m der Bornitrid-Hybrid-Flakes wird die Agglomeratstabilität mit der Ultraschallmethode bestimmt. Die an den Bornitrid-Hybrid-Flakes ermittelte Agglomeratstabilität beträgt 75 %.

An der REM-Übersichtsaufnahme der hergestellten Bornitrid-Hybrid-Flakes Agglomerate in der Siebfraktion < 500 $\mu$m (Figur 4 a) sind die ebenen Oberflächen der Agglomerate deutlich zu sehen. Bei diesen Oberflächen handelt es sich um Formgebungsflächen, die durch das Formgebungsverfahren (Verpressen zwischen zwei sich drehenden gegenläufigen Walzen) unmittelbar erzeugt wurden und nicht durch nachfolgende Zerkleinerung entstanden sind. Figur 4b zeigt eine Bruchfläche eines Agglomerats mit einer Dicke von 30 $\mu$m, die ebene Formgebungsfläche dieses Agglomerats sowie die ebene Formgebungsfläche eines weiteren Agglomerats.

Beispiel 1 b): Herstellung eines Compounds aus PA 6 mit 10 Vol.-% Bornitrid-Hybrid-Flakes

Es werden in einem Doppelschneckenextruder (Leistritz ZSE18 max, Nürnberg, Deutschland) in der gravimetrischen Hauptdosierung als Polymer das Polyamid PA 6 (Schulamid® 6 NV 12, A. Schulman, Kerpen, Deutschland) und in einer gravimetrischen Seitendosierung Bornitrid-Hybrid-Flakes aus Beispiel 1 a) zudosiert. Es kommt die schroffe Schneckenkonfiguration 1 zum Einsatz. Eine Schneckendrehzahl von 300 U/min wird eingestellt und ein Durchsatz von 6 kg/h gefahren, wobei bei der Hauptdosierung 4,8 kg/h PA 6 und bei der Seitendosierung 1,2 kg/h Bornitrid-Hybrid-Flakes aus der Siebfraktion < 500 $\mu$m dosiert werden. Das erhaltene Compound wird durch zwei 3 mm Düsen geleitet, durchläuft eine Kühlstrecke im Wasserbad und wird zu Granulat gehäckselt. Der Anteil an Bornitrid-Hybrid-Flakes im Compound beträgt 10 Vol.-%.

Beispiel 1 c): Spritzguss von 2 mm dünnen Platten und Messung der Wärmeleitfähigkeit

Das Compoundgranulat aus Beispiel 1 b) wird in einer Spritzgießmaschine (Engel e-motion) zu 2 mm dünnen Platten mit den Maßen 80x80x2 $mm^3$ spritzgegossen.

Die Wärmeleitfähigkeit wird an scheibenförmigen spritzgegossenen Proben einer Stärke von 2 mm gemessen, wobei die Probe für die Messung der Through-plane-Wärmeleitfähigkeit aus der Mitte einer spritzgegossenen Platte der Stärke von 2 mm (Abmessungen 2x80x80 $mm^3$) mit den Abmessungen 2x10x10 $mm^3$ präpariert wird. Die Dicke der Probe für die Wärmeleitfähigkeitsmessung entspricht der Plattendicke aus dem Spritzguss. Für die Messung der In-plane-Wärmeleitfähigkeit wird ein Plattenstapel von spritzgegossenen 2 mm dünnen Platten mit Sekundenkleber verklebt und aus dem so präparierten Plattenstapel wird parallel zur Through-plane-Richtung und senkrecht zur Fließrichtung der spritzgegossenen Proben eine 2 mm dünne Platte mit den Maßen 2x10x10 $mm^3$ präpariert. An dieser Probe wird die In-plane-Wärmeleitfähigkeit ermittelt.

Das Anisotropieverhältnis wird berechnet, in dem die wie beschrieben ermittelte In-plane-Wärmeleitfähigkeit durch die wie beschrieben gemessene Through-plane-Wärmeleitfähigkeit geteilt wird.

Zur Messung der Wärmeleitfähigkeit wird die Laser-Flash-Methode angewandt und mit dem Nanoflash LFA 447 (Netzsch, Selb, Deutschland) nach DIN EN ISO 22007-4 durchgeführt. Die Messung erfolgt bei 22 °C.

Die Bestimmung der Wärmeleitfähigkeit (WLF) erfolgt dabei durch Messung der Größen Temperaturleitfähigkeit a, spezifische Wärmekapazität $c_p$ und Dichte D und wird aus diesen Größen berechnet nach der Gleichung

$$WLF = a * c_p * D.$$

Die Messung von a und $c_p$ wird mit dem Nanoflash LFA 447 (Netzsch, Selb, Deutschland) an den wie oben beschrieben hergestellten Proben der Größe 10x10x2 $mm^3$ durchgeführt. Die Dichte wird durch Wägung und Bestimmung der geometrischen Abmessungen der exakt geformten Proben ermittelt. Für die Messung wird der Standard Pyroceram 9606 verwendet.

Die Compoundierparameter, die Ergebnisse der Wärmeleitfähigkeitsmessungen und das Anisotropieverhältnis sind in Tabelle 1 aufgeführt.

Die an einer spritzgegossenen dünnen Platte der Abmessungen 80x80x2 $mm^3$ ermittelte Wärmeleitfähigkeit für das ungefüllte Polymer PA 6 (Schulamid® 6 NV 12) beträgt 0,26 W/m*K.

Beispiel 2:

Herstellung eines Compounds aus PA 6 mit 20 Vol.-% Bornitrid-Hybrid-Flakes

Die Herstellung der Bornitrid-Hybrid-Flakes und die Compoundierung erfolgen gemäß Beispiel 1, wobei statt 10 Vol.-% Bornitrid-Hybrid-Flakes hier 20 Vol.-% Bornitrid-Hybrid-Flakes in PA 6 compoundiert werden.

Der Spritzguss und die Wärmeleitfähigkeitsmessungen erfolgen wie in Beispiel 1 beschrieben. Die Compoundierparameter, die Ergebnisse der Wärmeleitfähigkeitsmessungen und das Anisotropieverhältnis sind in Tabelle 1 aufgeführt.

Beispiel 3:

Herstellung eines Compounds aus PA 6 mit 30 Vol.-% Bornitrid-Hybrid-Flakes

Die Herstellung der Bornitrid-Hybrid-Flakes und die Compoundierung erfolgen gemäß Beispiel 1, wobei statt 10 Vol.-% Bornitrid-Hybrid-Flakes hier 30 Vol.-% Bornitrid-Hybrid-Flakes in PA 6 compoundiert werden.
Der Spritzguss und die Wärmeleitfähigkeitsmessungen erfolgen wie in Beispiel 1 beschrieben. Die Compoundierparameter, die Ergebnisse der Wärmeleitfähigkeitsmessungen und das Anisotropieverhältnis sind in Tabelle 1 aufgeführt.

Beispiel 4:

Herstellung eines Compounds aus PA 6 mit 40 Vol.-% Bornitrid-Hybrid-Flakes

Die Herstellung der Bornitrid-Hybrid-Flakes und die Compoundierung erfolgen gemäß Beispiel 1, wobei statt 10 Vol.-% Bornitrid-Hybrid-Flakes hier 40 Vol.-% Bornitrid-Hybrid-Flakes in PA 6 compoundiert werden.
Der Spritzguss und die Wärmeleitfähigkeitsmessungen erfolgen wie in Beispiel 1 beschrieben. Die Compoundierparameter, die Ergebnisse der Wärmeleitfähigkeitsmessungen und das Anisotropieverhältnis sind in Tabelle 1 aufgeführt.

Beispiel 5:

Herstellung eines Compounds aus PA 6 mit 50 Vol.-% Bornitrid-Hybrid-Flakes

Die Herstellung der Bornitrid-Hybrid-Flakes und die Compoundierung erfolgen gemäß Beispiel 1, wobei statt 10 Vol.-% Bornitrid-Hybrid-Flakes hier 50 Vol.-% Bornitrid-Hybrid-Flakes in PA 6 compoundiert werden.
Der Spritzguss und die Wärmeleitfähigkeitsmessungen erfolgen wie in Beispiel 1 beschrieben. Die Compoundierparameter, die Ergebnisse der Wärmeleitfähigkeitsmessungen und das Anisotropieverhältnis sind in Tabelle 1 aufgeführt.

Beispiel 6:

Herstellung eines Compounds aus PA 6, 10 Vol.-% Bornitrid-Hybrid-Flakes und 10 Vol.-% Alumosilikat

Es wird ein Füllstoffgemisch hergestellt, indem 5,82 kg Alumosilikat Trefil 1360-400 (Quarzwerke, Frechen, Deutschland) mit einer mittleren Partikelgröße ($d_{50}$) von 6,3 μm und 4,18 kg Hybrid-Flakes aus Beispiel 1 in einem PE-Fass auf dem Rollenbock 5 Minuten homogenisiert werden. Das Alumosilikat hat eine Dichte von 3,6 g/cm³, die Wärmeleitfähigkeit beträgt 14 W/m*K. Röntgenografisch ist die Hauptphase des Alumosilikats Kyanit ($Al_2SiO_5$). Das Füllstoffgemisch ist so eingestellt, dass die Füllstoffe rechnerisch zu jeweils gleichem Volumenanteil im Füllstoffgemisch vorliegen.
Es werden in einem Doppelschneckenextruder (Leistritz ZSE18 max, Nürnberg, Deutschland) in der gravimetrischen Hauptdosierung PA 6 (Schulamid® 6 NV 12, A. Schulman, Kerpen, Deutschland) zudosiert und in einer gravimetrischen Seitendosierung das Füllstoffgemisch aus Bornitrid-Hybrid-Flakes und Alumosilikat. An dem Doppelschneckenextruder wird eine Schneckendrehzahl von 300 U/min eingestellt und ein Durchsatz von 6 kg/h, wobei bei der Hauptdosierung 3,6 kg/h PA 6 und bei der Seitendosierung 2,4 kg/h Füllstoffgemisch dosiert wird. Die Compoundierung ist so eingestellt, dass der Volumenanteil des Füllstoffgemischs im Compound 20 Vol.-% einnimmt. Das erhaltene Compound wird durch zwei 3 mm Düsen geleitet, durchläuft eine Kühlstrecke im Wasserbad und wird zu Granulat gehäckselt.
Der Anteil an Bornitrid-Hybrid-Flakes im Compound beträgt 10 Vol.-%, der Anteil an Alumosilikat im Compound beträgt ebenfalls 10 Vol.-%.
Der Spritzguss und die Wärmeleitfähigkeitsmessungen erfolgen wie in Beispiel 1 beschrieben. Die Compoundierparameter, die Ergebnisse der Wärmeleitfähigkeitsmessungen und das Anisotropieverhältnis sind in Tabelle 1 aufgeführt.

Beispiel 7:

Herstellung eines Compounds aus PA 6, 10 Vol.-% Bornitrid-Hybrid-Flakes und 20 Vol.-% Alumosilikat

Wie in Beispiel 6 wird ein Füllstoffgemisch hergestellt, jedoch werden die Mengenanteile an Alumosilikat und Bornitrid-Hybrid-Flakes so gewählt, dass das Alumosilikat in der Füllstoffmischung mit den Bornitrid-Hybrid-Flakes rechnerisch mit doppeltem Volumenanteil vorliegt. Die Compoundierung wird gemäß Beispiel 6 durchgeführt, jedoch so, dass der Volumenanteil des Füllstoffgemischs im Compound 30 Vol.-% einnimmt. Der Anteil an Bornitrid-Hybrid-Flakes im Compound beträgt 10 Vol.-%, der Anteil an Alumosilikat im Compound beträgt 20 Vol.-%.

Der Spritzguss und die Wärmeleitfähigkeitsmessungen erfolgen gemäß Beispiel 1. Die Compoundierparameter, die Ergebnisse der Wärmeleitfähigkeitsmessungen und das Anisotropieverhältnis sind in Tabelle 1 aufgeführt.

Beispiel 8:

Herstellung eines Compounds aus PA 6, 10 Vol.-% Bornitrid-Hybrid-Flakes und 30 Vol.-% Alumosilikat

Wie in Beispiel 6 wird ein Füllstoffgemisch hergestellt, jedoch werden die Mengenanteile an Alumosilikat und Bornitrid-Hybrid-Flakes so gewählt, dass das Alumosilikat in der Füllstoffmischung mit den Bornitrid-Hybrid-Flakes rechnerisch mit dreifachem Volumenanteil vorliegt. Die Compoundierung wird gemäß Beispiel 6 durchgeführt, jedoch so, dass der Volumenanteil des Füllstoffgemischs im Compound 40 Vol.-% einnimmt. Der Anteil an Bornitrid-Hybrid-Flakes im Compound beträgt 10 Vol.-%, der Anteil an Alumosilikat im Compound beträgt 30 Vol.-%.

Der Spritzguss und die Wärmeleitfähigkeitsmessungen erfolgen gemäß Beispiel 1. Die Compoundierparameter, die Ergebnisse der Wärmeleitfähigkeitsmessungen und das Anisotropieverhältnis sind in Tabelle 1 aufgeführt.

Beispiel 9:

Herstellung eines Compounds aus PA 6, 10 Vol.-% Bornitrid-Hybrid-Flakes und 40 Vol.-% Alumosilikat

Wie in Beispiel 6 wird ein Füllstoffgemisch hergestellt, jedoch werden die Mengenanteile an Alumosilikat und Bornitrid-Hybrid-Flakes so gewählt, dass das Alumosilikat in der Füllstoffmischung mit den Bornitrid-Hybrid-Flakes rechnerisch mit vierfachem Volumenanteil vorliegt. Die Compoundierung wird gemäß Beispiel 6 durchgeführt, jedoch so, dass der Volumenanteil des Füllstoffgemischs im Compound 50 Vol.-% einnimmt. Der Anteil an Bornitrid-Hybrid-Flakes im Compound beträgt 10 Vol.-%, der Anteil an Alumosilikat im Compound beträgt 30 Vol.-%.

Der Spritzguss und die Wärmeleitfähigkeitsmessungen erfolgen gemäß Beispiel 1. Die Compoundierparameter, die Ergebnisse der Wärmeleitfähigkeitsmessungen und das Anisotropieverhältnis sind in Tabelle 1 aufgeführt.

Beispiel 10:

Herstellung eines Compounds aus PA 6, 20 Vol.-% Bornitrid-Hybrid-Flakes und 10 Vol.-% Alumosilikat

Wie in Beispiel 6 wird ein Füllstoffgemisch hergestellt, jedoch werden die Mengenanteile an Alumosilikat und Bornitrid-Hybrid-Flakes so gewählt, dass die Bornitrid-Hybrid-Flakes in der Füllstoffmischung mit dem Alumosilikat rechnerisch mit doppeltem Volumenanteil vorliegt. Die Compoundierung wird gemäß Beispiel 6 durchgeführt, jedoch so, dass der Volumenanteil des Füllstoffgemischs im Compound 30 Vol.-% einnimmt. Der Anteil an Bornitrid-Hybrid-Flakes im Compound beträgt 20 Vol.-%, der Anteil an Alumosilikat im Compound beträgt 10 Vol.-%.

Der Spritzguss und die Wärmeleitfähigkeitsmessungen erfolgen gemäß Beispiel 1. Die Compoundierparameter, die Ergebnisse der Wärmeleitfähigkeitsmessungen und das Anisotropieverhältnis sind in Tabelle 1 aufgeführt.

Beispiel 11:

Herstellung eines Compounds aus PA 6, 20 Vol.-% Bornitrid-Hybrid-Flakes und 20 Vol.-% Alumosilikat

Es wird das Füllstoffgemisch gemäß Beispiel 6 hergestellt. Die Compoundierung wird gemäß Beispiel 6 durchgeführt, jedoch so, dass der Volumenanteil des Füllstoffgemischs im Compound 40 Vol.-% einnimmt. Der Anteil an Bornitrid-Hybrid-Flakes im Compound beträgt 20 Vol.-%, der Anteil an Alumosilikat im Compound beträgt 20 Vol.-%.

Der Spritzguss und die Wärmeleitfähigkeitsmessungen erfolgen gemäß Beispiel 1. Die Compoundierparameter, die Ergebnisse der Wärmeleitfähigkeitsmessungen und das Anisotropieverhältnis sind in Tabelle 1 aufgeführt.

Beispiel 12:

Herstellung eines Compounds aus PA 6, 20 Vol.-% Bornitrid-Hybrid-Flakes und 30 Vol.-% Alumosilikat

Wie in Beispiel 6 wird ein Füllstoffgemisch hergestellt, jedoch so, dass rechnerisch die Bornitrid-Hybrid-Flakes mit 40 Vol.-% und das Alumosilikat mit 60 Vol.-% in der Füllstoffmischung vorliegen. Die Compoundierung wird gemäß Beispiel 6 durchgeführt, jedoch so, dass der Volumenanteil des Füllstoffgemischs im Compound 50 Vol.-% einnimmt. Der Anteil an Bornitrid-Hybrid-Flakes im Compound beträgt 20 Vol.-%, der Anteil an Alumosilikat im Compound beträgt 30 Vol.-%.

Der Spritzguss und die Wärmeleitfähigkeitsmessungen erfolgen gemäß Beispiel 1. Die Compoundierparameter, die Ergebnisse der Wärmeleitfähigkeitsmessungen und das Anisotropieverhältnis sind in Tabelle 1 aufgeführt.

Beispiel 13:

Herstellung eines Compounds aus PA 6, 30 Vol.-% Bornitrid-Hybrid-Flakes und 10 Vol.-% Alumosilikat

Wie in Beispiel 6 wird ein Füllstoffgemisch hergestellt, jedoch so, dass rechnerisch die Bornitrid-Hybrid-Flakes mit 75 Vol.-% und das Alumosilikat mit 25 Vol.-% in der Füllstoffmischung vorliegen. Die Compoundierung wird gemäß Beispiel 6 durchgeführt, jedoch so, dass der Volumenanteil des Füllstoffgemischs im Compound 40 Vol.-% einnimmt. Der Anteil an Bornitrid-Hybrid-Flakes im Compound beträgt 30 Vol.-%, der Anteil an Alumosilikat im Compound beträgt 10 Vol.-%.

Der Spritzguss und die Wärmeleitfähigkeitsmessungen erfolgen gemäß Beispiel 1. Die Compoundierparameter, die Ergebnisse der Wärmeleitfähigkeitsmessungen und das Anisotropieverhältnis sind in Tabelle 1 aufgeführt.

Beispiel 14:

Herstellung eines Compounds aus PA 6, 30 Vol.-% Bornitrid-Hybrid-Flakes und 20 Vol.-% Alumosilikat

Wie in Beispiel 6 wird ein Füllstoffgemisch hergestellt, jedoch so, dass rechnerisch die Bornitrid-Hybrid-Flakes mit 60 Vol.-% und das Alumosilikat mit 40 Vol.-% in der Füllstoffmischung vorliegen. Die Compoundierung wird gemäß Beispiel 6 durchgeführt, jedoch so, dass der Volumenanteil des Füllstoffgemischs im Compound 50 Vol.-% einnimmt. Der Anteil an Bornitrid-Hybrid-Flakes im Compound beträgt 30 Vol.-%, der Anteil an Alumosilikat im Compound beträgt 20 Vol.-%.

Der Spritzguss und die Wärmeleitfähigkeitsmessungen erfolgen gemäß Beispiel 1. Die Compoundierparameter, die Ergebnisse der Wärmeleitfähigkeitsmessungen und das Anisotropieverhältnis sind in Tabelle 1 aufgeführt.

Beispiel 15:

Herstellung eines Compounds aus PA 6, 40 Vol.-% Bornitrid-Hybrid-Flakes und 10 Vol.-% Alumosilikat

Wie in Beispiel 6 wird ein Füllstoffgemisch hergestellt, jedoch so, dass rechnerisch die Bornitrid-Hybrid-Flakes mit 80 Vol.-% und das Alumosilikat mit 20 Vol.-% in der Füllstoffmischung vorliegen. Die Compoundierung wird gemäß Beispiel 6 durchgeführt, jedoch so, dass der Volumenanteil des Füllstoffgemischs im Compound 50 Vol.-% einnimmt. Der Anteil an Bornitrid-Hybrid-Flakes im Compound beträgt 40 Vol.-%, der Anteil an Alumosilikat im Compound beträgt 10 Vol.-%.

Der Spritzguss und die Wärmeleitfähigkeitsmessungen erfolgen gemäß Beispiel 1. Die Compoundierparameter, die Ergebnisse der Wärmeleitfähigkeitsmessungen und das Anisotropieverhältnis sind in Tabelle 1 aufgeführt.

Beispiel 16:

Herstellung eines Compounds aus PA 6, 20 Vol.-% Bornitrid-Hybrid-Flakes und 20 Vol.-% Magnesiumhydroxid

Wie in Beispiel 6 wird ein Füllstoffgemisch hergestellt, jedoch wird anstelle des Alumosilikats hier Magnesiumhydroxid (Brucit, APYMAG 40, Nabaltech, Schwandorf, Deutschland) eingesetzt, so dass rechnerisch die Bornitrid-Hybrid-Flakes mit 50 Vol.-% und das Magnesiumhydroxid mit 50 Vol.-% in der Füllstoffmischung vorliegen. Das Magnesiumhydroxid hat eine Dichte von 2,4 g/cm$^3$. Die Compoundierung wird gemäß Beispiel 6 durchgeführt, jedoch so, dass der Volumenanteil des Füllstoffgemischs im Compound 40 Vol.-% einnimmt. Der Anteil an Bornitrid-Hybrid-Flakes im Compound beträgt 40 Vol.-%, der Anteil an Magnesiumhydroxid im Compound beträgt 10 Vol.-%.

Der Spritzguss und die Wärmeleitfähigkeitsmessungen erfolgen gemäß Beispiel 1. Die Compoundierparameter, die Ergebnisse der Wärmeleitfähigkeitsmessungen und das Anisotropieverhältnis sind in Tabelle 1 aufgeführt.

Beispiel 17:

Herstellung eines Compounds aus PA 6, 30 Vol.-% Bornitrid-Hybrid-Flakes und 10 Vol.-% Magnesiumhydroxid

Wie in Beispiel 16 wird ein Füllstoffgemisch aus Bornitrid-Hybrid-Flakes und Magnesiumhydroxid hergestellt, jedoch so, dass rechnerisch die Bornitrid-Hybrid-Flakes mit 75 Vol.-% und das Magnesiumhydroxid mit 25 Vol.-% in der Füllstoffmischung vorliegen. Die Compoundierung wird gemäß Beispiel 6 durchgeführt, jedoch so, dass der Volumenanteil des Füllstoffgemischs im Compound 40 Vol.-% einnimmt. Der Anteil an Bornitrid-Hybrid-Flakes im Compound beträgt 30 Vol.-%, der Anteil an Magnesiumhydroxid im Compound beträgt 10 Vol.-%.

Der Spritzguss und die Wärmeleitfähigkeitsmessungen erfolgen gemäß Beispiel 1. Die Compoundierparameter, die Ergebnisse der Wärmeleitfähigkeitsmessungen und das Anisotropieverhältnis sind in Tabelle 1 aufgeführt.

Beispiel 18:

Herstellung von Bornitrid-Hybrid-Agglomeraten (isotrope nitridgebundene Bornitrid-Agglomerate) und Herstellung eines Compounds aus PA 6 mit 20 Vol.-% Bornitrid-Hybrid-Agglomeraten

14 kg hexagonales Bornitrid-Pulver (BORONID® S1-SF, ESK Ceramics GmbH & Co. KG, Deutschland; mittlere Partikelgröße $d_{50}$ = 3 $\mu$m, gemessen mittels Laserbeugung (Mastersizer 2000, Malvern, Naßmessung)) wird mit 8 kg Aluminiumpulver aus der Al-Paste (Grade STAPA Alupor SK I-NE/75, Fa. Eckart GmbH & Co. KG, Velden, Deutschland) gemischt und in einem PE-Fass auf dem Rollenbock mit Mahlkugeln 12 Stunden homogenisiert.

Das Pulvergemisch wird über eine gravimetrische Dosierung mit 40 kg/h in einen Walzenkompaktierer RC 250*250 (Powtec, Remscheid, Deutschland) dosiert. Der Walzenkompaktierer ist so modifiziert, dass die geriffelten Edelstahlwalzen ohne Produktaufgabe auf Kontakt laufen. Es wird eine Anpresskraft von 306 kN auf die Walzen ausgeübt, was 12,2 kN/cm Walzspaltlänge entspricht und eine Walzendrehzahl von 25 U/min eingestellt. An den Walzen klebende grüne Schülpen werden durch einen Schaber abgezogen. Die Schülpen haben eine Dicke von 0,4 - 1,6 mm. In der integrierten Siebreibe mit 1 mm Siebweite werden die Schülpen zerkleinert. Das entstandene Granulat wird unter gleichen Prozessbedingungen nochmals aufgegeben, wobei durch Umgehung der Siebreibe Schülpen mit einer Grundfläche von ca. 3 $cm^2$ und einer Dicke von 0,4 bis 1,6 mm gewonnen werden.

Nach einer Entbinderung an Stickstoff bei 300 °C und einer Vornitridierung in einem Stickstoff-Argon Gemisch (80 % Stickstoff, 20 % Argon) bei 800 °C während 5 Stunden wird die Hochtemperaturnitridierung und Glühung der Bindephase bei 1950 °C während 2 Stunden in strömender Stickstoff-Argonatmosphäre (80% Stickstoff, 20 % Argon) durchgeführt. Dabei wird mit 17,5 °C/min bis 1600 °C aufgeheizt, nach einer Stunde Haltezeit bei 1600 °C wird anschließend mit 17,5 °C/min bis zum Erreichen der Endtemperatur von 1950 °C aufgeheizt. Die erhaltenen nitridgebundenen Bornitrid-Schülpen werden auf eine Größe von < 200 $\mu$m siebgebrochen. Entstehender Feinanteil verbleibt im Produkt.

Die mittlere Agglomeratgröße ($d_{50}$) der so hergestellten Bornitrid-Hybrid-Agglomerate beträgt 56 $\mu$m.

Der Aluminiumgehalt, der Aluminium-frei-Gehalt, der Kohlenstoff- und der Sauerstoffgehalt sowie die spezifische Oberfläche werden wie in Beispiel 1 beschrieben ermittelt. Nach der Glühung beträgt der Gesamt-Aluminiumanteil in den Bornitrid-Hybrid-Flakes 24,2 Gew.-%. Rechnerisch ergibt sich aus dem Aluminiumanteil ein Aluminiumnitridanteil im Bornitrid-Hybrid-Agglomerat von 36,5 Gew.-%. Der Aluminium-frei-Gehalt beträgt 0,58 Gew.-%, der Kohlenstoffgehalt 0,12 Gew.-% und der Sauerstoffgehalt 0,15 Gew.-%. Die spezifische Oberfläche (BET) liegt bei 6,5 $m^2$/g.

Röntgenografisch lässt sich an den erhaltenen Bornitrid-Hybrid-Agglomeraten Aluminiumnitrid nachweisen, neben hexagonalem Bornitrid als Hauptphase. Der ermittelte Texturindex beträgt 1,7.

Aus den hergestellten Bornitrid-Hybrid-Agglomeraten < 200 $\mu$m wird der Feinanteil < 100 $\mu$m durch Siebung abgetrennt. An der so erhaltenen Siebfraktion 100 - 200 $\mu$m der Bornitrid-Hybrid-Agglomerate wird mit der Ultraschallmethode die Agglomeratstabilität ermittelt.

Die an den Bornitrid-Hybrid-Agglomeraten ermittelte Agglomeratstabilität beträgt 85 %.

Es werden in einem Doppelschneckenextruder (Leistritz ZSE18 max, Nürnberg, Deutschland) in der gravimetrischen Hauptdosierung PA 6 (Schulamid® 6 NV 12, A. Schulman, Kerpen, Deutschland) und in einer gravimetrischen Seitendosierung Bornitrid-Hybrid-Agglomerate wie zuvor hergestellt zudosiert. Es kommt die Schneckenkonfiguration 2 gemäß Figur 2 zum Einsatz, eine Schneckendrehzahl von 300 U/min wird eingestellt und ein Durchsatz von 6 kg/h gefahren, wobei bei der Hauptdosierung 3,8 kg/h PA6 und bei der Seitendosierung 2,2 kg/h Hybrid-Agglomerate dosiert wurden. Der erhaltene Compound wird durch zwei 3 mm Düsen geleitet, durchläuft eine Kühlstrecke im Wasserbad und wird zu Granulat gehäckselt. Der Anteil an Bornitrid-Hybrid-Agglomeraten im Compound beträgt 20 Vol.-%.

Der Spritzguss und die Wärmeleitfähigkeitsmessungen erfolgen gemäß Beispiel 1. Die Compoundierparameter, die Ergebnisse der Wärmeleitfähigkeitsmessungen und das Anisotropieverhältnis sind in Tabelle 1 aufgeführt.

Beispiel 19:

Herstellung eines Compounds aus PA 6 mit 30 Vol.-% Bornitrid-Hybrid-Agglomeraten

Die Herstellung der Bornitrid-Hybrid-Agglomerate und die Compoundierung erfolgen gemäß Beispiel 18, wobei statt 20 Vol.-% Bornitrid-Hybrid-Agglomeraten hier 30 Vol.-% Bornitrid-Hybrid-Agglomerate in PA 6 compoundiert werden.

Der Spritzguss und die Wärmeleitfähigkeitsmessungen erfolgen gemäß Beispiel 1. Die Compoundierparameter, die Ergebnisse der Wärmeleitfähigkeitsmessungen und das Anisotropieverhältnis sind in Tabelle 1 aufgeführt.

Beispiel 20:

Herstellung eines Compounds aus PA 6 mit 40 Vol.-% Bornitrid-Hybrid-Agglomeraten

Die Herstellung der Bornitrid-Hybrid-Agglomerate und die Compoundierung erfolgen gemäß Beispiel 18, wobei statt 20 Vol.-% Bornitrid-Hybrid-Agglomerate hier 40 Vol.-% Bornitrid-Hybrid-Agglomerate in PA 6 compoundiert werden.

Der Spritzguss und die Wärmeleitfähigkeitsmessungen erfolgen gemäß Beispiel 1. Die Compoundierparameter, die Ergebnisse der Wärmeleitfähigkeitsmessungen und das Anisotropieverhältnis sind in Tabelle 1 aufgeführt.

Beispiel 21:

Herstellung eines Compounds aus PA 6 mit 20 Vol.-% Bornitrid-Hybrid-Agglomeraten

Die Herstellung der Bornitrid-Hybrid-Agglomerate und die Compoundierung erfolgt gemäß Beispiel 18, wobei die Compoundierung mit der Schneckenkonfiguration 2 gemäß Figur 2 mit einer Drehzahl von 900 U/min erfolgt. Der Anteil an Bornitrid-Hybrid-Agglomeraten im Compound beträgt 20 Vol.-%.

Der Spritzguss und die Wärmeleitfähigkeitsmessungen erfolgen gemäß Beispiel 1. Die Compoundierparameter, die Ergebnisse der Wärmeleitfähigkeitsmessungen und das Anisotropieverhältnis sind in Tabelle 1 aufgeführt.

Beispiel 22:

Herstellung eines Compounds aus PA 6 mit 30 Vol.-% Bornitrid-Hybrid-Agglomeraten

Die Herstellung der Bornitrid-Hybrid-Agglomerate und die Compoundierung erfolgen gemäß Beispiel 18, wobei die Compoundierung mit der Schneckenkonfiguration 2 gemäß Figur 2 mit einer Drehzahl von 900 U/min erfolgt und wobei statt 20 Vol.-% Hybrid-Agglomeraten hier 30 Vol.-% Bornitrid-Hybrid-Agglomerate in PA 6 compoundiert werden.

Der Spritzguss und die Wärmeleitfähigkeitsmessungen erfolgen gemäß Beispiel 1. Die Compoundierparameter, die Ergebnisse der Wärmeleitfähigkeitsmessungen und das Anisotropieverhältnis sind in Tabelle 1 aufgeführt.

Beispiel 23:

Herstellung eines Compounds aus PA 6 mit 20 Vol.-% Bornitrid-Hybrid-Agglomeraten

Die Herstellung der Bornitrid-Hybrid-Agglomerate und die Compoundierung erfolgen gemäß Beispiel 18, wobei die Compoundierung mit der Schneckenkonfiguration 1 durchgeführt wird.

Der Spritzguss und die Wärmeleitfähigkeitsmessungen erfolgen gemäß Beispiel 1. Die Compoundierparameter, die Ergebnisse der Wärmeleitfähigkeitsmessungen und das Anisotropieverhältnis sind in Tabelle 1 aufgeführt.

Beispiel 24:

Herstellung eines Compounds aus PA 6 mit 30 Vol.-% Bornitrid-Hybrid-Agglomeraten

Die Herstellung der Bornitrid-Hybrid-Agglomerate und die Compoundierung erfolgen gemäß Beispiel 19, wobei die Compoundierung mit der Schneckenkonfiguration 1 durchgeführt wird.

Der Spritzguss und die Wärmeleitfähigkeitsmessungen erfolgen gemäß Beispiel 1. Die Compoundierparameter, die Ergebnisse der Wärmeleitfähigkeitsmessungen und das Anisotropieverhältnis sind in Tabelle 1 aufgeführt.

Beispiel 25:

Herstellung eines Compounds aus PA 6 mit 40 Vol.-% Bornitrid-Hybrid-Agglomeraten

Die Herstellung der Bornitrid-Hybrid-Agglomerate und die Compoundierung erfolgen gemäß Beispiel 20, wobei die Compoundierung mit der Schneckenkonfiguration 1 durchgeführt wird.
Der Spritzguss und die Wärmeleitfähigkeitsmessungen erfolgen gemäß Beispiel 1. Die Compoundierparameter, die Ergebnisse der Wärmeleitfähigkeitsmessungen und das Anisotropieverhältnis sind in Tabelle 1 aufgeführt.

Beispiel 26:

Herstellung eines Compounds aus PA 6 mit 20 Vol.-% Bornitrid-Hybrid-Agglomeraten

Die Herstellung der Bornitrid-Hybrid-Agglomerate und die Compoundierung erfolgen gemäß Beispiel 21, wobei die Compoundierung mit der Schneckenkonfiguration 1 durchgeführt wird.
Der Spritzguss und die Wärmeleitfähigkeitsmessungen erfolgen gemäß Beispiel 1. Die Compoundierparameter, die Ergebnisse der Wärmeleitfähigkeitsmessungen und das Anisotropieverhältnis sind in Tabelle 1 aufgeführt.

Beispiel 27:

Herstellung eines Compounds aus PA 6 mit 30 Vol.-% Bornitrid-Hybrid-Agglomeraten

Die Herstellung der Bornitrid-Hybrid-Agglomerate und die Compoundierung erfolgen gemäß Beispiel 22, wobei die Compoundierung mit der Schneckenkonfiguration 1 durchgeführt wird.
Der Spritzguss und die Wärmeleitfähigkeitsmessungen erfolgen gemäß Beispiel 1. Die Compoundierparameter, die Ergebnisse der Wärmeleitfähigkeitsmessungen und das Anisotropieverhältnis sind in Tabelle 1 aufgeführt.

Beispiel 28:

Herstellung eines Compounds aus PA 6 mit 40 Vol.-% Bornitrid-Hybrid-Agglomeraten

Die Herstellung der Bornitrid-Hybrid-Agglomerate und die Compoundierung erfolgen gemäß Beispiel 25, wobei die Compoundierung mit einer Schneckendrehzahl von 900 U/min erfolgt.
Der Spritzguss und die Wärmeleitfähigkeitsmessungen erfolgen gemäß Beispiel 1. Die Compoundierparameter, die Ergebnisse der Wärmeleitfähigkeitsmessungen und das Anisotropieverhältnis sind in Tabelle 1 aufgeführt.

Beispiel 29:

Herstellung von Bornitrid-Hybrid-Flakes (anisotrope schuppenförmige nitridgebundene Bornitrid-Agglomerate) und Herstellung eines Compounds aus PA 6 mit 20 Vol.-% Bornitrid-Hybrid-Flakes

Die Herstellung der Bornitrid-Hybrid-Flakes erfolgt gemäß Beispiel 1, wobei 5,3 kg Aluminiumpaste STAPA ALUPOR SK I-NE/70 (Fa. Eckart, Hartenstein, Deutschland) und 6 kg Bornitrid-Pulver BORONID® S1-SF (ESK Ceramics GmbH & Co. KG, Deutschland; mittlere Partikelgröße $d_{50}$ = 3 $\mu$m, gemessen mittels Laserbeugung (Mastersizer 2000, Malvern, Naßmessung)) eingesetzt werden. Es entstehen Bornitrid-Hybrid-Flakes mit einer Dicke von 10 $\mu$m und bis zu mehreren Zentimetern Durchmesser. Nach der wie in Beispiel 1 durchgeführten Glühung beträgt der Aluminiumanteil insgesamt in den Bornitrid-Hybrid-Flakes 33,3 Gew.-% gemessen mittels alkalischem Schmelzaufschluss und ICP-OES (Arcos, Spectro, Kleve, Deutschland). Rechnerisch ergibt sich aus dem Aluminiumanteil ein Aluminiumnitridanteil in den Bornitrid-Hybrid-Flakes von 50 Gew.-%.
Röntgenographisch können nur die Phasen Bornitrid und Aluminiumnitrid nachgewiesen werden. Die Bornitrid-Hybrid-Flakes in der Siebfraktion < 500 $\mu$m besitzen gemessen mittels Laserbeugung (Mastersizer 2000, Malvern, Naßmessung) einen mittleren Agglomeratdurchmesser ($d_{50}$) von 78 $\mu$m. Die Dicke der Bornitrid-Hybrid-Flakes beträgt 10 $\mu$m. Die Dicke wurde mit einer Präzisions-Digital-Messuhr ermittelt.
Die REM-Übersichtsaufnahme der hergestellten Bornitrid-Hybrid-Flakes in der Siebfraktion < 500 $\mu$m (Figur 5) zeigt die ebenen Oberflächen der Agglomerate. Bei diesen Oberflächen handelt es sich um Formgebungsflächen, die durch das Formgebungsverfahren (Verpressen zwischen zwei sich drehenden gegenläufigen Walzen) unmittelbar erzeugt wurden und nicht durch nachfolgende Zerkleinerung entstanden sind.
Aus den hergestellten Bornitrid-Hybrid-Flakes wird eine Fraktion < 200 $\mu$m gebrochen und der Feinanteil <

100 μm durch Siebung abgetrennt. An der so erhaltenen Siebfraktion 100 - 200 μm der Bornitrid-Hybrid-Flakes wird die Agglomeratstabilität mit der Ultraschallmethode bestimmt. Die an den Hybrid-Flakes ermittelte Agglomeratstabilität beträgt 80 %.

Die Compoundierung erfolgt gemäß Beispiel 1 mit der Schneckenkonfiguration 1, wobei statt 10 Vol.-% Bornitrid-Hybrid-Flakes hier 20 Vol.-% Bornitrid-Hybrid-Flakes in PA 6 compoundiert werden. Dabei wird eine Schneckendrehzahl von 300 U/min eingestellt und ein Durchsatz von 6 kg/h gefahren, wobei bei der Hauptdosierung 3,8 kg/h PA 6 und bei der Seitendosierung 2,2 kg/h Bornitrid-Hybrid-Flakes aus der Siebfraktion < 500 μm dosiert werden.

Der Spritzguss und die Wärmeleitfähigkeitsmessungen erfolgen wie in Beispiel 1 beschrieben. Die Compoundierparameter, die Ergebnisse der Wärmeleitfähigkeitsmessungen und das Anisotropieverhältnis sind in Tabelle 1 aufgeführt.

Beispiel 30:

Herstellung eines Compounds aus PA 6 mit 30 Vol.-% Bornitrid-Hybrid-Flakes

Die Herstellung der Bornitrid-Hybrid-Flakes und die Compoundierung erfolgen gemäß Beispiel 29, wobei statt 20 Vol.-% Bornitrid-Hybrid-Agglomeraten hier 30 Vol.-% Bornitrid-Hybrid-Agglomerate in PA 6 compoundiert werden.

Der Spritzguss und die Wärmeleitfähigkeitsmessungen erfolgen gemäß Beispiel 1. Die Compoundierparameter, die Ergebnisse der Wärmeleitfähigkeitsmessungen und das Anisotropieverhältnis sind in Tabelle 1 aufgeführt.

Beispiel 31:

Herstellung eines Compounds aus PA 6 mit 40 Vol.-% Bornitrid-Hybrid-Flakes

Die Herstellung der Bornitrid-Hybrid-Flakes und die Compoundierung erfolgen gemäß Beispiel 29, wobei statt 20 Vol.-% Bornitrid-Hybrid-Agglomeraten hier 40 Vol.-% Bornitrid-Hybrid-Agglomerate in PA 6 compoundiert werden.

Der Spritzguss und die Wärmeleitfähigkeitsmessungen erfolgen gemäß Beispiel 1. Die Compoundierparameter, die Ergebnisse der Wärmeleitfähigkeitsmessungen und das Anisotropieverhältnis sind in Tabelle 1 aufgeführt.

Beispiel 32:

Herstellung eines Compounds aus PA 6 mit 20 Vol.-% Bornitrid-Hybrid-Flakes

Die Herstellung der Bornitrid-Hybrid-Flakes und die Compoundierung erfolgen gemäß Beispiel 29, wobei bei der Compoundierung statt 300 U/min hier eine Schneckendrehzahl von 900 U/min eingestellt wird.

Der Spritzguss und die Wärmeleitfähigkeitsmessungen erfolgen gemäß Beispiel 1. Die Compoundierparameter, die Ergebnisse der Wärmeleitfähigkeitsmessungen und das Anisotropieverhältnis sind in Tabelle 1 aufgeführt.

Beispiel 33:

Herstellung eines Compounds aus PA 6 mit 30 Vol.-% Bornitrid-Hybrid-Flakes

Die Herstellung der Bornitrid-Hybrid-Flakes und die Compoundierung erfolgen gemäß Beispiel 30, wobei bei der Compoundierung statt 300 U/min hier eine Schneckendrehzahl von 900 U/min eingestellt wird.

Der Spritzguss und die Wärmeleitfähigkeitsmessungen erfolgen gemäß Beispiel 1. Die Compoundierparameter, die Ergebnisse der Wärmeleitfähigkeitsmessungen und das Anisotropieverhältnis sind in Tabelle 1 aufgeführt.

Beispiel 34:

Herstellung eines Compounds aus PA 6 mit 20 Vol.-% Bornitrid-Hybrid-Flakes

Die Herstellung der Bornitrid-Hybrid-Flakes und die Compoundierung erfolgen gemäß Beispiel 29, wobei die Compoundierung mit Schneckenkonfiguration 2 erfolgt.

Der Spritzguss und die Wärmeleitfähigkeitsmessungen erfolgen gemäß Beispiel 1. Die Compoundierparameter, die Ergebnisse der Wärmeleitfähigkeitsmessungen und das Anisotropieverhältnis sind in Tabelle 1 aufgeführt.

Beispiel 35:

Herstellung eines Compounds aus PA 6 mit 30 Vol.-% Bornitrid-Hybrid-Flakes

Die Herstellung der Bornitrid-Hybrid-Flakes und die Compoundierung erfolgen gemäß Beispiel 30, wobei die Compoundierung mit Schneckenkonfiguration 2 erfolgt.

Der Spritzguss und die Wärmeleitfähigkeitsmessungen erfolgen gemäß Beispiel 1. Die Compoundierparameter, die Ergebnisse der Wärmeleitfähigkeitsmessungen und das Anisotropieverhältnis sind in Tabelle 1 aufgeführt.

Beispiel 36:

Herstellung eines Compounds aus PA 6 mit 20 Vol.-% Bornitrid-Hybrid-Flakes

Die Herstellung der Bornitrid-Hybrid-Flakes und die Compoundierung erfolgen gemäß Beispiel 32, wobei die Compoundierung mit Schneckenkonfiguration 2 erfolgt.

Der Spritzguss und die Wärmeleitfähigkeitsmessungen erfolgen gemäß Beispiel 1. Die Compoundierparameter, die Ergebnisse der Wärmeleitfähigkeitsmessungen und das Anisotropieverhältnis sind in Tabelle 1 aufgeführt.

Beispiel 37:

Herstellung eines Compounds aus PA 6 mit 30 Vol.-% Bornitrid-Hybrid-Flakes

Die Herstellung der Bornitrid-Hybrid-Flakes und die Compoundierung erfolgen gemäß Beispiel 33, wobei die Compoundierung mit Schneckenkonfiguration 2 erfolgt.

Der Spritzguss und die Wärmeleitfähigkeitsmessungen erfolgen gemäß Beispiel 1. Die Compoundierparameter, die Ergebnisse der Wärmeleitfähigkeitsmessungen und das Anisotropieverhältnis sind in Tabelle 1 aufgeführt.

Vergleichsbeispiel 1:

Herstellung eines Compounds aus PA 6 mit 30 Vol.-% TCP015-100

Es werden in einem Doppelschneckenextruder (Leistritz ZSE18 max, Nürnberg, Deutschland) in der gravimetrischen Hauptdosierung als Polymer das Polyamid PA 6 (Schulamid® 6 NV 12, A. Schulman, Kerpen, Deutschland) und in einer gravimetrischen Seitendosierung Bornitrid-Agglomerate TCP015-100 (ESK Ceramics, Kempten, Deutschland) zudosiert. Es kommt die schroffe Schneckenkonfiguration 1 zum Einsatz. Eine Schneckendrehzahl von 900 U/min wird eingestellt und ein Durchsatz von 6 kg/h gefahren, wobei bei der Hauptdosierung 3,3 kg/h PA 6 und bei der Seitendosierung 2,7 kg/h Bornitrid-Pulver TCP015-100 mit einer Bornitrid-Primärpartikelgröße von 15 $\mu$m dosiert werden. Das erhaltene Compound wird durch zwei 3 mm Düsen geleitet, durchläuft eine Kühlstrecke im Wasserbad und wird zu Granulat gehäckselt. Der Anteil an Bornitrid im Compound beträgt 30 Vol.-%.

Der Spritzguss und die Wärmeleitfähigkeitsmessungen erfolgen gemäß Beispiel 1. Die Compoundierparameter, die Ergebnisse der Wärmeleitfähigkeitsmessungen und das Anisotropieverhältnis sind in Tabelle 2 aufgeführt.

Die Bornitrid-Agglomerate sind in den spritzgegossenen Platten als Primärpartikel dispergiert, was an REM-Aufnahmen von Querschliffen und Bruchflächen der spritzgegossenen Platten nachweisbar ist.

Vergleichsbeispiel 2:

Herstellung eines Compounds aus PA 6 mit 40 Vol.-% TCP015-100

Die Compoundierung erfolgt gemäß Vergleichsbeispiel 1, wobei statt 30 Vol.-% Bornitrid-Agglomerate TCP015-100 hier 40 Vol.-% TCP015-100 in PA 6 compoundiert werden.

Der Spritzguss und die Wärmeleitfähigkeitsmessungen erfolgen gemäß Beispiel 1. Die Compoundierparameter, die Ergebnisse der Wärmeleitfähigkeitsmessungen und das Anisotropieverhältnis sind in Tabelle 2 aufgeführt.

Die Bornitrid-Agglomerate sind in den spritzgegossenen Platten als Primärpartikel dispergiert, was an REM-Aufnahmen von Querschliffen und Bruchflächen der spritzgegossenen Platten nachweisbar ist.

Vergleichsbeispiel 3:

Herstellung eines Compounds aus PA 6 mit 50 Vol.-% TCP015-100

Die Compoundierung erfolgt gemäß Vergleichsbeispiel 1, wobei statt 30 Vol.-% Bornitrid-Agglomerate TCP015-100 hier 50 Vol.-% TCP015-100 in PA 6 compoundiert werden.

Der Spritzguss und die Wärmeleitfähigkeitsmessungen erfolgen gemäß Beispiel 1. Die Compoundierparameter, die Ergebnisse der Wärmeleitfähigkeitsmessungen und das Anisotropieverhältnis sind in Tabelle 2 aufgeführt.

Die Bornitrid-Agglomerate sind in den spritzgegossenen Platten als Primärpartikel dispergiert, was an REM-Aufnahmen von Querschliffen und Bruchflächen der spritzgegossenen Platten nachweisbar ist.

Vergleichsbeispiel 4:

Herstellung eines Compounds aus PA 6 mit 10 Vol.-% Alumosilikat

Es werden in einem Doppelschneckenextruder (Leistritz ZSE18 max, Nürnberg, Deutschland) in der gravimetrischen Hauptdosierung als Polymer das Polyamid PA 6 (Schulamid® 6 NV 12, A. Schulman, Kerpen, Deutschland) und in einer gravimetrischen Seitendosierung Alumosilikat Trefil 1360-400 (Quarzwerke, Frechen, Deutschland) mit einer mittleren Partikelgröße ($d_{50}$) von 6,3 $\mu$m zudosiert. Es kommt die schroffe Schneckenkonfiguration 1 zum Einsatz. Eine Schneckendrehzahl von 300 U/min wird eingestellt und ein Durchsatz von 6 kg/h gefahren, wobei bei der Hauptdosierung 4,4 kg/h PA 6 und bei der Seitendosierung 1,6 kg/h Alumosilikat dosiert werden. Das erhaltene Compound wird durch zwei 3 mm Düsen geleitet, durchläuft eine Kühlstrecke im Wasserbad und wird zu Granulat gehäckselt. Der Anteil an Alumosilikat im Compound beträgt 10 Vol.-%.

Der Spritzguss und die Wärmeleitfähigkeitsmessungen erfolgen gemäß Beispiel 1. Die Compoundierparameter, die Ergebnisse der Wärmeleitfähigkeitsmessungen und das Anisotropieverhältnis sind in Tabelle 2 aufgeführt.

Vergleichsbeispiel 5:

Herstellung eines Compounds aus PA 6 mit 20 Vol.-% Alumosilikat

Die Compoundierung erfolgt gemäß Vergleichsbeispiel 4, wobei statt 10 Vol.-% Alumosilikat hier 20 Vol.-% Alumosilikat in PA 6 compoundiert werden.

Der Spritzguss und die Wärmeleitfähigkeitsmessungen erfolgen gemäß Beispiel 1. Die Compoundierparameter, die Ergebnisse der Wärmeleitfähigkeitsmessungen und das Anisotropieverhältnis sind in Tabelle 2 aufgeführt.

Vergleichsbeispiel 6:

Herstellung eines Compounds aus PA 6 mit 30 Vol.-% Alumosilikat

Die Compoundierung erfolgt gemäß Vergleichsbeispiel 4, wobei statt 10 Vol.-% Alumosilikat hier 30 Vol.-% Alumosilikat in PA 6 compoundiert werden.

Der Spritzguss und die Wärmeleitfähigkeitsmessungen erfolgen gemäß Beispiel 1. Die Compoundierparameter, die Ergebnisse der Wärmeleitfähigkeitsmessungen und das Anisotropieverhältnis sind in Tabelle 2 aufgeführt.

Vergleichsbeispiel 7:

Herstellung eines Compounds aus PA 6 mit 40 Vol.-% Alumosilikat

Die Compoundierung erfolgt gemäß Vergleichsbeispiel 4, wobei statt 10 Vol.-% Alumosilikat hier 40 Vol.-% Alumosilikat in PA 6 compoundiert werden.

Der Spritzguss und die Wärmeleitfähigkeitsmessungen erfolgen gemäß Beispiel 1. Die Compoundierparameter, die Ergebnisse der Wärmeleitfähigkeitsmessungen und das Anisotropieverhältnis sind in Tabelle 2 aufgeführt.

Vergleichsbeispiel 8:

Herstellung eines Compounds aus PA 6 mit 50 Vol.-% Alumosilikat

Die Compoundierung erfolgt gemäß Vergleichsbeispiel 4, wobei statt 10 Vol.-% Alumosilikat hier 50 Vol.-%

Alumosilikat in PA 6 compoundiert werden.

Der Spritzguss und die Wärmeleitfähigkeitsmessungen erfolgen gemäß Beispiel 1. Die Compoundierparameter, die Ergebnisse der Wärmeleitfähigkeitsmessungen und das Anisotropieverhältnis sind in Tabelle 2 aufgeführt.

Vergleichsbeispiel 9:

Herstellung eines Compounds aus PA 6 mit 10 Vol.-% Magnesiumhydroxid

Es werden in einem Doppelschneckenextruder (Leistritz ZSE18 max, Nürnberg, Deutschland) in der gravimetrischen Hauptdosierung als Polymer das Polyamid PA 6 (Schulamid® 6 NV 12, A. Schulman, Kerpen, Deutschland) und in einer gravimetrischen Seitendosierung Magnesiumhydroxid (APYMAG 40, Nabaltech, Schwandorf, Deutschland) mit einer mittleren Partikelgröße ($d_{50}$) von 5 $\mu$m zudosiert. Es kommt die schroffe Schneckenkonfiguration 1 zum Einsatz. Eine Schneckendrehzahl von 300 U/min wird eingestellt und ein Durchsatz von 6 kg/h gefahren, wobei bei der Hauptdosierung 4,9 kg/h PA 6 und bei der Seitendosierung 1,1 kg/h Magnesiumhydroxid dosiert werden. Das erhaltene Compound wird durch zwei 3 mm Düsen geleitet, durchläuft eine Kühlstrecke im Wasserbad und wird zu Granulat gehäckselt. Der Anteil an Magnesiumhydroxid im Compound beträgt 10 Vol.-%.

Der Spritzguss und die Wärmeleitfähigkeitsmessungen erfolgen gemäß Beispiel 1. Die Compoundierparameter, die Ergebnisse der Wärmeleitfähigkeitsmessungen und das Anisotropieverhältnis sind in Tabelle 2 aufgeführt.

Vergleichsbeispiel 10:

Herstellung eines Compounds aus PA 6 mit 20 Vol.-% Magnesiumhydroxid

Die Compoundierung erfolgt gemäß Vergleichsbeispiel 9, wobei statt 10 Vol.-% Magnesiumhydroxid hier 20 Vol.-% Magnesiumhydroxid in PA 6 compoundiert werden.

Der Spritzguss und die Wärmeleitfähigkeitsmessungen erfolgen gemäß Beispiel 1. Die Compoundierparameter, die Ergebnisse der Wärmeleitfähigkeitsmessungen und das Anisotropieverhältnis sind in Tabelle 2 aufgeführt.

Vergleichsbeispiel 11:

Herstellung eines Compounds aus PA 6 mit 30 Vol.-% Magnesiumhydroxid

Die Compoundierung erfolgt gemäß Vergleichsbeispiel 9, wobei statt 10 Vol.-% Magnesiumhydroxid hier 30 Vol.-% Magnesiumhydroxid in PA 6 compoundiert werden.

Der Spritzguss und die Wärmeleitfähigkeitsmessungen erfolgen gemäß Beispiel 1. Die Compoundierparameter, die Ergebnisse der Wärmeleitfähigkeitsmessungen und das Anisotropieverhältnis sind in Tabelle 2 aufgeführt.

Vergleichsbeispiel 12:

Herstellung eines Compounds aus PA 6 mit 40 Vol.-% Magnesiumhydroxid

Die Compoundierung erfolgt gemäß Vergleichsbeispiel 9, wobei statt 10 Vol.-% Magnesiumhydroxid hier 40 Vol.-% Magnesiumhydroxid in PA 6 compoundiert werden.

Der Spritzguss und die Wärmeleitfähigkeitsmessungen erfolgen gemäß Beispiel 1. Die Compoundierparameter, die Ergebnisse der Wärmeleitfähigkeitsmessungen und das Anisotropieverhältnis sind in Tabelle 2 aufgeführt.

Tabelle 1:

| Beispiel-Nr. | Bornitrid-Agglomerate [Vol.-%] | Sekundär-Füllstoff [Vol.-%] | Wärmeleitfähigkeit in-plane [W/m*K] | Wärmeleitfähigkeit through-plane [W/m*K] | Anisotropieverhältnis | Schneckenkonfiguration | Schneckendrehzahl [U/min] |
|---|---|---|---|---|---|---|---|
| 1 | 10 | 0 | 0,89 | 0,48 | 1,8 | 1 | 300 |
| 2 | 20 | 0 | 1,86 | 0,75 | 2,5 | 1 | 300 |
| 3 | 30 | 0 | 2,90 | 1,22 | 2,4 | 1 | 300 |
| 4 | 40 | 0 | 4,55 | 1,90 | 2,4 | 1 | 300 |
| 5 | 50 | 0 | 6,01 | 2,60 | 2,3 | 1 | 300 |
| 6 | 10 | 10 | 1,25 | 0,65 | 1,9 | 1 | 300 |
| 7 | 10 | 20 | 1,39 | 0,84 | 1,7 | 1 | 300 |
| 8 | 10 | 30 | 1,83 | 1,26 | 1,5 | 1 | 300 |
| 9 | 10 | 40 | 3,19 | 1,51 | 2,1 | 1 | 300 |
| 10 | 20 | 10 | 2,41 | 1,10 | 2,2 | 1 | 300 |
| 11 | 20 | 20 | 3,24 | 1,53 | 2,1 | 1 | 300 |
| 12 | 20 | 30 | 3,61 | 1,97 | 1,8 | 1 | 300 |
| 13 | 30 | 10 | 3,78 | 1,76 | 2,1 | 1 | 300 |
| 14 | 30 | 20 | 4,83 | 2,23 | 2,2 | 1 | 300 |
| 15 | 40 | 10 | 5,77 | 2,52 | 2,3 | 1 | 300 |
| 16 | 20 | 20 | 2,56 | 1,17 | 2,2 | 1 | 300 |
| 17 | 30 | 10 | 3,45 | 1,44 | 2,4 | 1 | 300 |
| 18 | 20 | 0 | 1,18 | 0,75 | 1,6 | 2 | 300 |
| 19 | 30 | 0 | 2,22 | 1,36 | 1,6 | 2 | 300 |
| 20 | 40 | 0 | 3,52 | 1,70 | 2,1 | 2 | 300 |
| 21 | 20 | 0 | 1,15 | 0,66 | 1,7 | 2 | 900 |
| 22 | 30 | 0 | 2,18 | 1,21 | 1,8 | 2 | 900 |
| 23 | 20 | 0 | 1,26 | 0,82 | 1,5 | 1 | 300 |
| 24 | 30 | 0 | 2,30 | 1,38 | 1,7 | 1 | 300 |

| Beispiel-Nr. | Bornitrid-Agglomerate [Vol.-%] | Sekundär-Füllstoff [Vol.-%] | Wärmeleitfähigkeit in-plane [W/m*K] | Wärmeleitfähigkeit through-plane [W/m*K] | Anisotropieverhältnis | Schneckenkonfiguration | Schneckendrehzahl [U/min] |
|---|---|---|---|---|---|---|---|
| 25 | 40 | 0 | 3,43 | 1,83 | 1,9 | 1 | 300 |
| 26 | 20 | 0 | 1,35 | 0,80 | 1,7 | 1 | 900 |
| 27 | 30 | 0 | 2,10 | 1,22 | 1,7 | 1 | 900 |
| 28 | 40 | 0 | 3,66 | 1,72 | 2,1 | 1 | 900 |
| 29 | 20 | 0 | 1,52 | 1,00 | 1,5 | 1 | 300 |
| 30 | 30 | 0 | 2,87 | 1,65 | 1,7 | 1 | 300 |
| 31 | 40 | 0 | 4,07 | 2,04 | 2,0 | 1 | 300 |
| 32 | 20 | 0 | 1,39 | 0,90 | 1,6 | 1 | 900 |
| 33 | 30 | 0 | 2,47 | 1,47 | 1,7 | 1 | 900 |
| 34 | 20 | 0 | 1,42 | 0,90 | 1,6 | 2 | 300 |
| 35 | 30 | 0 | 2,57 | 1,61 | 1,6 | 2 | 300 |
| 36 | 20 | 0 | 1,61 | 0,95 | 1,7 | 2 | 900 |
| 37 | 30 | 0 | 2,45 | 1,45 | 1,7 | 2 | 900 |

EP 2 816 082 B1

Tabelle 2:

| Vergleichsbeispiel-Nr. | Bornitrid-Primärpartikel [Vol.-%] | Sekundär-Füllstoff [Vol.-%] | Wärmeleitfähigkeit in-plane [W/m*K] | Wärmeleitfähigkeit through-plane [W/m*K] | Anisotropieverhältnis | Schneckenkonfiguration | Schneckendrehzahl [U/min] |
|---|---|---|---|---|---|---|---|
| 1 | 30 | 0 | 3,98 | 0,82 | 4,9 | 1 | 900 |
| 2 | 40 | 0 | 6,72 | 0,95 | 7,1 | 1 | 900 |
| 3 | 50 | 0 | 9,5 | 1,01 | 9,4 | 1 | 900 |
| 4 | 0 | 10 | 0,46 | 0,38 | 1,2 | 1 | 300 |
| 5 | 0 | 20 | 0,74 | 0,56 | 1,3 | 1 | 300 |
| 6 | 0 | 30 | 1,01 | 0,77 | 1,3 | 1 | 300 |
| 7 | 0 | 40 | 1,43 | 1,05 | 1,4 | 1 | 300 |
| 8 | 0 | 50 | 1,93 | 1,54 | 1,3 | 1 | 300 |
| 9 | 0 | 10 | 0,43 | 0,38 | 1,1 | 1 | 300 |
| 10 | 0 | 20 | 0,70 | 0,52 | 1,3 | 1 | 300 |
| 11 | 0 | 30 | 0,94 | 0,68 | 1,4 | 1 | 300 |
| 12 | 0 | 40 | 1,38 | 0,89 | 1,5 | 1 | 300 |

**Patentansprüche**

1. Bauteil mit einer Wandstärke von höchstens 3 mm an zumindest einem Teil des Bauteils, wobei das Bauteil durch thermoplastische Verarbeitung eines Polymer-Bornitrid-Compounds hergestellt wird, und wobei das Polymer-Bornitrid-Compound einen thermoplastisch verarbeitbaren Polymerwerkstoff und einen wärmeleitenden Füllstoff umfasst, wobei der Füllstoff Bornitrid-Agglomerate umfasst, und wobei die Bornitrid-Agglomerate plättchenförmige hexagonale Bornitrid-Primärpartikel umfassen, welche miteinander mittels einer anorganischen Bindephase, welche wenigstens ein Nitrid und/oder Oxinitrid umfasst, verbunden sind.

2. Bauteil gemäß Anspruch 1, wobei die Through-plane-Wärmeleitfähigkeit des Bauteils wenigstens 1 W/m*K beträgt, vorzugsweise wenigstens 1,2 W/m*K, weiter vorzugsweise wenigstens 1,5 W/m*K und insbesondere bevorzugt wenigstens 1,8 W/m*K, wobei die Wärmeleitfähigkeit gemäß DIN EN ISO 22007-4 an scheibenförmigen spritzgegossenen Proben einer Dicke von 2 mm gemessen wird.

3. Bauteil gemäß Anspruch 1 oder 2, wobei die In-plane-Wärmeleitfähigkeit des Bauteils wenigstens 1,5 W/m*K beträgt, vorzugsweise wenigstens 1,8 W/m*K, weiter vorzugsweise wenigstens 2,2 W/m*K und insbesondere bevorzugt wenigstens 2,7 W/m*K, wobei die Wärmeleitfähigkeit gemäß DIN EN ISO 22007-4 an scheibenförmigen spritzgegossenen Proben einer Dicke von 2 mm gemessen wird.

4. Bauteil gemäß Anspruch 2 und/oder 3, wobei das Anisotropieverhältnis der In-plane-Wärmeleitfähigkeit zur Through-plane-Wärmeleitfähigkeit wenigstens 1,5 und höchstens 4, vorzugsweise wenigstens 1,5 und höchstens 3,5, weiter vorzugsweise wenigstens 1,5 und höchstens 3,0 und insbesondere bevorzugt wenigstens 1,5 und höchstens 2,5 beträgt.

5. Bauteil gemäß einem der Ansprüche 1 bis 4, wobei der Anteil an Bornitrid-Agglomeraten wenigstens 5 Vol.-%, vorzugsweise wenigstens 10 Vol.-%, weiter vorzugsweise wenigstens 20 Vol.-% und besonders bevorzugt wenigstens 30 Vol.-% beträgt, bezogen auf das Gesamtvolumen des Polymer-Bornitrid-Compounds.

6. Bauteil gemäß einem der Ansprüche 1-5, wobei die anorganische Bindephase der Bornitrid-Agglomerate Aluminiumnitrid (AlN), Aluminiumoxinitrid, Titannitrid (TiN), Siliziumnitrid ($Si_3N_4$) oder/und Bornitrid (BN), vorzugsweise Aluminiumnitrid, Aluminiumoxinitrid, Titannitrid und/oder Siliziumnitrid, weiter vorzugsweise Aluminiumnitrid und/oder Aluminiumoxinitrid und insbesondere bevorzugt Aluminiumnitrid umfasst.

7. Bauteil gemäß einem der Ansprüche 1-6, wobei die Bornitrid-Agglomerate einen Bindephasenanteil von wenigstens 1 Gew.-%, vorzugsweise von wenigstens 5 Gew.-%, weiter vorzugsweise von wenigstens 10 Gew.-%, weiter vorzugsweise von wenigstens 20 Gew.-% und insbesondere bevorzugt von wenigstens 30 Gew.-% aufweisen, jeweils bezogen auf die Gesamtmenge der Bornitrid-Agglomerate; und/oder wobei das Aspektverhältnis der Bornitrid-Agglomerate 1,0 bis 1,8, vorzugsweise 1,0 bis 1,5 beträgt.

8. Bauteil gemäß einem der Ansprüche 1 bis 7, wobei die Bornitrid-Agglomerate plättchenförmige hexagonale Bornitrid-Primärpartikel umfassen, welche miteinander zu schuppenförmig ausgebildeten Bornitrid-Agglomeraten agglomeriert sind.

9. Bauteil gemäß Anspruch 8, wobei der Texturindex der schuppenförmigen Bornitrid-Agglomerate größer als 2,0 ist und vorzugsweise 2,5 und mehr, weiter vorzugsweise 3,0 und mehr, besonders bevorzugt 3,5 und mehr beträgt; und/oder
wobei die Dicke der schuppenförmigen Bornitrid-Agglomerate • 500 μm, bevorzugt • 200 μm, weiter bevorzugt • 100 μm, weiter bevorzugt • 70 μm, weiter bevorzugt • 50 μm und insbesondere bevorzugt • 35 μm beträgt; und/oder wobei das Aspektverhältnis der schuppenförmigen Bornitrid-Agglomerate größer als 1 ist und vorzugsweise 2 und mehr, weiter vorzugsweise 3 und mehr, weiter vorzugsweise 5 und mehr und besonders bevorzugt 10 und mehr beträgt.

10. Bauteil gemäß einem der Ansprüche 8 oder 9, wobei die schuppenförmigen Bornitrid-Agglomerate eine anorganische Bindephase umfassen.

11. Bauteil gemäß Anspruch 10, wobei die schuppenförmigen Bornitrid-Agglomerate einen Bindephasen-Anteil von wenigstens 1%, vorzugsweise von wenigstens 5%, weiter vorzugsweise von wenigstens 10%, weiter vorzugsweise von wenigstens 20% und insbesondere vorzugsweise von wenigstens 30% aufweisen, jeweils bezogen auf die Gesamtmenge der schuppenförmigen Bornitrid-Agglomerate.

12. Bauteil gemäß Anspruch 10 oder 11, wobei die Bindephase Aluminiumnitrid (AlN), Aluminiumoxinitrid, Titannitrid (TiN), Siliziumnitrid (Si$_3$N$_4$) oder/und Bornitrid (BN), vorzugsweise Aluminiumnitrid, Aluminiumoxinitrid, Titannitrid und/oder Siliziumnitrid, weiter vorzugsweise Aluminiumnitrid und/oder Aluminiumoxinitrid und insbesondere bevorzugt Aluminiumnitrid enthält.

13. Bauteil gemäß einem der Ansprüche 1 bis 12, umfassend wenigstens einen von Bornitrid verschiedenen, die Wärmeleitfähigkeit erhöhenden Füllstoff.

14. Bauteil gemäß Anspruch 13, wobei der von Bornitrid verschiedene Füllstoff ein Metallpulver ist, vorzugsweise gewählt aus der Gruppe umfassend Aluminium-, Silizium-, Titan-, Kupfer-, Eisen- und Bronzepulver, und Mischungen davon; oder wobei der von Bornitrid verschiedene Füllstoff Kohlenstoff in Form von Graphit, expandiertem Graphit oder Ruß ist, wobei expandierter Graphit besonders bevorzugt ist; oder wobei der von Bornitrid verschiedene Füllstoff ein Oxid, Nitrid oder Carbid ist, vorzugsweise ausgewählt aus der Gruppe umfassend Aluminiumoxid, Magnesiumoxid, Aluminiumnitrid, Siliziumdioxid, Siliziumcarbid, Siliziumnitrid und Mischungen davon, besonders bevorzugt Aluminiumoxid, Magnesiumoxid und/oder Aluminiumnitrid; oder wobei der von Bornitrid verschiedene Füllstoff ein mineralischer Füllstoff ist und vorzugsweise ausgewählt ist aus der Gruppe umfassend Alumosilikate, Aluminiumsilikate, Magnesiumsilikat (2MgO*SiO$_2$), Magnesiumaluminat (MgO*Al$_2$O$_3$), Brucit (Magnesiumhydroxid, Mg(OH)$_2$), Quarz, Cristobalit und Mischungen davon.

15. Bauteil gemäß Anspruch 13 oder 14, wobei der Gesamtanteil an Bornitrid-Agglomeraten und den von Bornitrid verschiedenen wärmeleitenden Füllstoffen wenigstens 20 Vol.-% beträgt, vorzugsweise wenigstens 30 Vol.-%, jeweils bezogen auf das Gesamtvolumen des Polymer-Bornitrid-Compounds.

16. Bauteil gemäß einem der Ansprüche 1 bis 15, wobei die Wandstärke des Bauteils an zumindest einem Teil des Bauteils höchstens 2 mm beträgt.

17. Polymer-Bornitrid-Compound zur Herstellung eines Bauteils gemäß einem der Ansprüche 1 bis 16, wobei das Polymer-Bornitrid-Compound einen thermoplastisch verarbeitbaren Polymerwerkstoff und einen wärmeleitenden Füllstoff umfasst, wobei der Füllstoff Bornitrid-Agglomerate umfasst, und wobei die Bornitrid-Agglomerate plättchenförmige hexagonale Bornitrid-Primärpartikel umfassen, welche miteinander mittels einer anorganischen Bindephase, welche wenigstens ein Nitrid und/oder Oxinitrid umfasst, verbunden sind.

18. Verwendung eines Bauteils nach einem der Ansprüche 1 bis 16 zur Wärmeabfuhr von zu kühlenden Komponenten oder Baugruppen, vorzugsweise von elektronischen Komponenten oder Baugruppen.

**Claims**

1. A component with a wall thickness of no more than 3 mm on at least one part of the component, wherein the component is produced via thermoplastic processing of a polymer boron nitride compound, and wherein the polymer boron nitride compound comprises a thermoplastically processable polymer material and a thermally conductive filler, wherein the filler comprises boron nitride agglomerates, and wherein the boron nitride agglomerates comprise platelet-shaped hexagonal boron nitride primary particles which are connected to one another by means of an inorganic binding phase which comprises at least one nitride and/or oxynitride.

2. The component according to claim 1, wherein the through-plane thermal conductivity of the component is at least 1 W/m*K, or preferably at least 1.2 W/m*K, or more preferably at least 1.5 W/m*K, and especially preferably at least 1.8 W/m*K, wherein the thermal conductivity is measured on disc-shaped, injection-molded samples having a thickness of 2 mm, in accordance with DIN EN ISO 22007-4.

3. The component according to claim 1 or 2, wherein the in-plane thermal conductivity of the component is at least 1.5 W/m*K, or preferably at least 1.8 W/m*K, or more preferably at least 2.2 W/m*K, and especially preferably at least 2.7 W/m*K, wherein the thermal conductivity is measured on disc-shaped, injection-molded samples having a thickness of 2 mm, in accordance with DIN EN ISO 22007-4.

4. The component according to claim 2 and/or 3, wherein the anisotropy ratio of the in-plane thermal conductivity to the through-plane thermal conductivity is at least 1.5 and at most 4, or preferably at least 1.5 and at most 3.0, or more preferably at least 1.5 and at most 3.0, and especially preferably at least 1.5 and at most 2.5.

5.  The component according to any of claims 1 to 4, wherein the proportion of boron nitride agglomerates is at least 5 % by volume, or preferably at least 10 % by volume, or more preferably at least 20 % by volume, and particularly preferably at least 30 % by volume, in relation to the total volume of the polymer boron nitride compound.

6.  The component according to any of claims 1-5, wherein the inorganic binding phase of the boron nitride agglomerates comprises aluminum nitride (AlN), aluminum oxynitride, titanium nitride (TiN), silicon nitride ($Si_3N_4$), or/and boron nitride (BN); or preferably aluminum nitride, aluminum oxynitride, titanium nitride, and/or silicon nitride; or more preferably aluminum nitride and/or aluminum oxynitride; and especially preferably aluminum nitride.

7.  The component according to any of claims 1-6, wherein the boron nitride agglomerates have a binding phase proportion of at least 1 % by weight, or preferably at least 5 % by weight, or more preferably at least 10 % by weight, or more preferably at least 20 % by weight, and especially preferably at least 30 % by weight, in relation to the total quantity of boron nitride agglomerates in each case; and/or wherein the aspect ratio of the boron nitride agglomerates is from 1.0 to 1.8, or preferably from 1.0 to 1.5.

8.  The component according to any of claims 1 to 7, wherein the boron nitride agglomerates comprise platelet-shaped hexagonal boron nitride primary particles which are agglomerated with one another to form scaled boron nitride agglomerates.

9.  The component according to claim 8, wherein the texture index of the scaled boron nitride agglomerates is greater than 2.0, and preferably 2.5 or more, or more preferably 3.0 or more, or especially preferably 3.5 or more; and/or wherein the thickness of the scaled boron nitride agglomerates is $\leq 500$ m, or preferably $\leq 200$ $\mu$m, or more preferably $\leq 100$ $\mu$m, or more preferably $\leq 70$ $\mu$m, or more preferably $\leq 50$ $\mu$m, and especially preferably $\leq 35$ $\mu$m; and/or wherein the aspect ratio of the scaled boron nitride agglomerates is greater than 1, and preferably 2 or more, or more preferably 3 or more, or more preferably 5 or more, and especially preferably 10 or more.

10. The component according to one of the claims 8 or 9, wherein the scaled boron nitride agglomerates comprise an inorganic binding phase.

11. The component according to claim 10, wherein the scaled boron nitride agglomerates have a binding phase proportion of at least 1 %, or preferably of at least 5 %, or more preferably of at least 10 %, or more preferably of at least 20 %, and especially preferably of at least 30 %, in relation to the total quantity of the scaled boron nitride agglomerates in each case.

12. The component according to claim 10 or 11, wherein the binding phase comprises aluminum nitride (AlN), aluminum oxynitride, titanium nitride (TiN), silicon nitride ($Si_3N_4$), or/and boron nitride (BN); or preferably aluminum nitride, aluminum oxynitride, titanium nitride, and/or silicon nitride; or more preferably aluminum nitride and/or aluminum oxynitride; and especially preferably aluminum nitride.

13. The component according to any of claims 1 to 12, comprising at least one filler different from boron nitride, with the filler increasing thermal conductivity.

14. The component according to claim 13, wherein the filler different from boron nitride is a metal powder, preferably selected from the group comprising aluminum powder, silicon powder, titanium powder, copper powder, iron powder, and bronze powder, and mixtures thereof; or wherein the filler different from boron nitride is carbon in the form of graphite, expanded graphite, or carbon black, wherein expanded graphite is especially preferred; or wherein the filler different from boron nitride is an oxide, nitride, or carbide, preferably selected from the group comprising aluminum oxide, magnesium oxide, aluminum nitride, silicon dioxide, silicon carbide, silicon nitride, and mixtures thereof, with aluminum oxide, magnesium oxide, and/or aluminum nitride being especially preferred; or wherein the filler different from boron nitride is a mineral filler and is preferably selected from the group comprising aluminosilicates, aluminum silicates, magnesium silicate ($2MgO*SiO_2$), magnesium aluminate ($MgO*Al_2O_3$), brucite (magnesium hydroxide, $Mg(OH)_2$), quartz, cristobalite, and mixtures thereof.

15. The component according to claim 13 or 14, wherein the total proportion of boron nitride agglomerates and the thermally conductive fillers different from boron nitride is at least 20 % by volume, or preferably at least 30 % by volume, in relation to the total volume of the polymer boron nitride compound in each case.

16. The component according to any of claims 1 to 15, wherein the wall thickness of the component is no more than 2 mm on at least one part of the component.

17. The polymer boron nitride compound to produce a component according to any of claims 1 to 16, wherein the polymer boron nitride compound comprises a thermoplastically processable polymer material and a thermally conductive filler, wherein the filler comprises boron nitride agglomerates, and wherein the boron nitride agglomerates comprise platelet-shaped hexagonal boron nitride primary particles which are connected to one another by means of an inorganic binding phase which comprises at least one nitride and/or oxynitride.

18. The use of a component according to any of claims 1 to 16 to dissipate heat from components or assemblies to be cooled, preferably from electronic components or assemblies.

**Revendications**

1. Pièce présentant une épaisseur de paroi d'au plus 3 mm sur au moins une partie de la pièce, la pièce étant fabriquée par transformation thermoplastique d'un composé polymère-nitrure de bore et le composé polymère-nitrure de bore comprenant un matériau polymère pouvant être transformé de manière thermoplastique et une charge thermoconductrice, la charge comprenant des agglomérats de nitrure de bore et les agglomérats de nitrure de bore comprenant des particules primaires hexagonales en forme de plaquettes de nitrure de bore qui sont reliées les unes aux autres au moyen d'une phase inorganique de liant, qui comprend au moins un nitrure et/ou oxynitrure.

2. Pièce selon la revendication 1, la conductibilité thermique à travers le plan de la pièce étant d'au moins 1 W/m*K, de préférence d'au moins 1,2 W/m*K, plus préférablement d'au moins 1,5 W/m*K et en particulier de préférence d'au moins 1,8 W/m*K, la conductibilité thermique étant mesurée selon la norme DIN EN ISO 22007-4 sur des éprouvettes moulées par injection en forme de disque d'une épaisseur de 2 mm.

3. Pièce selon la revendication 1 ou 2, la conductibilité thermique dans le plan de la pièce étant d'au moins 1,5 W/m*K, de préférence d'au moins 1,8 W/m*K, plus préférablement d'au moins 2,2 W/m*K et en particulier de préférence d'au moins 2,7 W/m*K, la conductibilité thermique étant mesurée selon la norme DIN EN ISO 22007-4 sur des éprouvettes moulées par injection en forme de disque d'une épaisseur de 2 mm.

4. Pièce selon la revendication 2 et/ou 3, le rapport d'anisotropie de la conductibilité thermique dans le plan à la conductibilité thermique à travers le plan étant d'au moins 1,5 et d'au plus 4, de préférence d'au moins 1,5 et d'au plus 3,5, plus préférablement d'au moins 1,5 et d'au plus 3,0 et en particulier de préférence d'au moins 1,5 et d'au plus 2,5.

5. Pièce selon l'une quelconque des revendications 1 à 4, la proportion d'agglomérats de nitrure de bore étant d'au moins 5 % en volume, de préférence d'au moins 10 % en volume, plus préférablement d'au moins 20 % en volume et de manière particulièrement préférée d'au moins 30 % en volume, par rapport au volume total du composé polymère-nitrure de bore.

6. Pièce selon l'une quelconque des revendications 1-5, la phase inorganique de liant des agglomérats de nitrure de bore comprenant du nitrure d'aluminium (AlN), de l'oxynitrure d'aluminium, du nitrure de titane (TiN), du nitrure de silicium ($Si_3N_4$) et/ou du nitrure de bore (BN), de préférence du nitrure d'aluminium, de l'oxynitrure d'aluminium, du nitrure de titane et/ou du nitrure de silicium, plus préférablement du nitrure d'aluminium et/ou de l'oxynitrure d'aluminium et en particulier de préférence du nitrure d'aluminium.

7. Pièce selon l'une quelconque des revendications 1-6, les agglomérats de nitrure de bore présentant une proportion de phase de liant d'au moins 1 % en poids, de préférence d'au moins 5 % en poids, plus préférablement d'au moins 10 % en poids, plus préférablement d'au moins 20 % en poids et en particulier de préférence d'au moins 30 % en poids, à chaque fois par rapport à la quantité totale des agglomérats de nitrure de bore ; et/ou le rapport d'aspect des agglomérats de nitrure de bore étant de 1,0 à 1,8, de préférence de 1,0 à 1,5.

8. Pièce selon l'une quelconque des revendications 1 à 7, les agglomérats de nitrure de bore comprenant des particules primaires hexagonales en forme de plaquettes de nitrure de bore qui sont agglomérées les unes avec les autres en agglomérats de nitrure de bore réalisés sous forme d'écailles.

9. Pièce selon la revendication 8, l'indice de texture des agglomérats de nitrure de bore en forme d'écailles étant supérieur à 2,0 et de préférence de 2,5 et plus, plus préférablement de 3,0 et plus, de manière particulièrement préférée de 3,5 et plus ; et/ou
l'épaisseur des agglomérats de nitrure de bore en forme d'écailles étant • de 500 $\mu$m, de préférence • de 200 $\mu$m, plus préférablement • de 100 $\mu$m, plus préférablement • de 70 $\mu$m, plus préférablement • de 50 $\mu$m et en particulier de préférence • de 35 $\mu$m ; et/ou le rapport d'aspect des agglomérats de nitrure de bore en forme d'écailles étant supérieur à 1 et de préférence de 2 et plus, plus préférablement de 3 et plus, plus préférablement de 5 et plus et de manière particulièrement préférée de 10 et plus.

10. Pièce selon l'une quelconque des revendications 8 ou 9, les agglomérats de nitrure de bore en forme d'écailles comprenant une phase inorganique de liant.

11. Pièce selon la revendication 10, les agglomérats de nitrure de bore en forme d'écailles présentant une proportion de phase de liant d'au moins 1 %, de préférence d'au moins 5 %, plus préférablement d'au moins 10 %, plus préférablement d'au moins 20 % et en particulier de préférence d'au moins 30 %, à chaque fois par rapport à la quantité totale des agglomérats de nitrure de bore en forme d'écailles.

12. Pièce selon la revendication 10 ou 11, la phase de liant contenant du nitrure d'aluminium (AlN), de l'oxynitrure d'aluminium, du nitrure de titane (TiN), du nitrure de silicium (Si$_3$N$_4$) et/ou du nitrure de bore (BN), de préférence du nitrure d'aluminium, de l'oxynitrure d'aluminium, du nitrure de titane et/ou du nitrure de silicium, plus préférablement du nitrure d'aluminium et/ou de l'oxynitrure d'aluminium et en particulier de préférence du nitrure d'aluminium.

13. Pièce selon l'une quelconque des revendications 1 à 12, comprenant au moins une charge différente du nitrure de bore augmentant la conductibilité thermique.

14. Pièce selon la revendication 13, la charge différente du nitrure de bore étant une poudre métallique, de préférence choisie parmi le groupe comprenant la poudre d'aluminium, la poudre de silicium, la poudre de titane, la poudre de cuivre, la poudre de fer et la poudre de bronze et leurs mélanges ; ou la charge différente du nitrure de bore étant du carbone sous forme de graphite, de graphite expansé ou de suie, le graphite expansé étant particulièrement préféré ; ou la charge différente du nitrure de bore étant un oxyde, un nitrure ou un carbure, de préférence choisi dans le groupe comprenant l'oxyde aluminium, l'oxyde de magnésium, le nitrure d'aluminium, le dioxyde de silicium, le carbure de silicium, le nitrure de silicium et leurs mélanges, de manière particulièrement préférée l'oxyde d'aluminium, l'oxyde de magnésium et/ou le nitrure d'aluminium ; ou la charge différente du nitrure de bore étant une charge minérale et de préférence choisie dans le groupe comprenant les aluminosilicates, les silicates d'aluminium, le silicate de magnésium (2MgO*SiO$_2$), l'aluminate de magnésium (MgO*Al$_2$O$_3$), la brucite (hydroxyde de magnésium, Mg(OH)$_2$), le quartz, la cristobalite et leurs mélanges.

15. Pièce selon la revendication 13 ou 14, la proportion totale d'agglomérats de nitrure de bore et de charges thermoconductrices différentes du nitrure de bore étant d'au moins 20 % en volume, de préférence d'au moins 30 % en volume, à chaque fois par rapport au volume total du composé polymère-nitrure de bore.

16. Pièce selon l'une quelconque des revendications 1 à 15, l'épaisseur de paroi de la pièce sur au moins une partie de la pièce étant d'au plus 2 mm.

17. Composé polymère-nitrure de bore pour la fabrication d'une pièce selon l'une quelconque des revendications 1 à 16, le composé polymère-nitrure de bore comprenant un matériau polymère pouvant être transformé de manière thermoplastique et une charge thermoconductrice, la charge comprenant des agglomérats de nitrure de bore et les agglomérats de nitrure de bore comprenant des particules primaires hexagonales en forme de plaquettes de nitrure de bore qui sont reliées les unes aux autres au moyen d'une phase inorganique de liant qui comprend au moins un nitrure et/ou oxynitrure.

18. Utilisation d'une pièce selon l'une quelconque des revendications 1 à 16 pour la dissipation thermique de composants ou de modules de construction à refroidir, de préférence de composants ou de modules de construction électroniques.

**Figur 1:**

Through plane

In plane

Anguss

Fließrichtung

**Figur 2a:**

Through plane

**Figur 2b:**

In plane

## Figur 3a:

## Figur 3b:

**Figur 4a:**

**Figur 4b:**

**Figur 5:**

**IN DER BESCHREIBUNG AUFGEFÜHRTE DOKUMENTE**

**In der Beschreibung aufgeführte Patentdokumente**

- US 20060127422 A1
- WO 03013845 A1
- US 6048511 A
- EP 0939066 A1
- US 20020006373 A1
- US 20040208812 A1
- WO 2005021428 A1
- US 5854155 A
- US 6096671 A
- DE 102010050900 A1